(19) **Europäisches Patentamt**

**European Patent Office**

**Office européen des brevets**

(11) **EP 0 953 261 B1**

(12) **EUROPEAN PATENT SPECIFICATION**

(45) Date of publication and mention
of the grant of the patent:
**21.06.2006 Bulletin 2006/25**

(21) Application number: **96907480.6**

(22) Date of filing: **14.03.1996**

(51) Int Cl.:
*H04Q 7/22* (2006.01)       *G08G 1/0968* (2006.01)
*G08G 1/127* (2006.01)      *G06F 13/38* (2006.01)

(86) International application number:
**PCT/EP1996/001110**

(87) International publication number:
**WO 1997/034431 (18.09.1997 Gazette 1997/40)**

(54) **TELEMATICS ENDSYSTEM FOR ROAD TRAFFIC APPLICATIONS**

TELEMATIK ENDGERÄT FÜR STRASSENVERKEHRSANWENDUNGEN

TERMINAL TELEMATIQUE POUR PROGRAMMES DE TRAFIC ROUTIER

(84) Designated Contracting States:
**AT BE CH DE DK ES FI FR GB GR IE IT LI LU MC NL PT SE**

(43) Date of publication of application:
**03.11.1999 Bulletin 1999/44**

(73) Proprietor: **T-Mobile Deutschland GmbH**
**53227 Bonn (DE)**

(72) Inventors:
• **Kremer, Werner, Dr. Ing.**
**53604 Bad Honnef (DE)**
• **Fuchs, Georg**
**51107 Kölm (DE)**
• **Günther, Bernd**
**53859 Niederkassel (DE)**
• **Köhler, Uwe**
**40789 Monheim (DE)**
• **Gill, Thorsten**
**40223 Düsseldorf (DE)**
• **Braun, Rudolph**
**33098 Paderborn (DE)**
• **Fahle, Heiz-Joseph**
**34431 Meerhof (DE)**
• **Pfeiffer, Gerd, Dr.**
**33100 Paderborn (DE)**
• **Klein, Arjen**
**33100 Paderborn (DE)**
• **Grendel, Gerd**
**33098 Paderborn (DE)**
• **Klose, Dieter**
**33098 Paderborn (DE)**

• **Bochmann, Harald, DR.-Ing.**
**30419 Hannover (DE)**

(74) Representative: **Riebling, Peter et al**
**Patentanwalt**
**Postfach 31 60**
**88113 Lindau (DE)**

(56) References cited:
**US-A- 5 388 147**

• **PACIFIC RIM TRANSTECH CONFERENCE. 1995 VEHICLE NAVIGATION AND INFORMATION SYSTEMS CONFERENCE PROCEEDINGS. 6TH INTERNATIONAL VNIS. (CAT. NO.95CH35776), 30 July 1995 - 2 August 1995, ISBN 0-7803-2587-7, 1995, NEW YORK, NY, USA, IEEE, USA, pages 442-449, XP002021589 HONG LO ET AL: "A structured approach for ITS architecture representation and evaluation"**
• **PROCEEDINGS OF THE VEHICULAR TECHNOLOGY CONFERENCE, STOCKHOLM, JUNE 8 - 10, 1994, vol. 1, 8 June 1994, INSTITUTE OF ELECTRICAL AND ELECTRONICS ENGINEERS, pages 405-409, XP000496705 WICHTEL E ET AL: "AVL SUBSYSTEM INTERFACES"**
• **PHILIPS JOURNAL OF RESEARCH, vol. 48, no. 4, 1 January 1994, pages 299-313, XP000495036 BIESTERBOS J W M ET AL: "SOCRATES: A DYNAMIC CAR NAVIGATION, DRIVER INFORMATION AND FLEET MANAGEMENT SYSTEM"**

**Description**

Telematics is going to be a growth market for mobile communication; predictions for the next decade speak of over ten million customers. Manufacturers will be able to offer terminals at a reasonable price provided there are economical means of development and production. Accordingly, mass production thereby creates the basis for high market penetration. The world-wide success of mobile communication like the GSM-Standard has proved that it is possible to penetrate the market quickly and to reach a great number of participants by coordinating specification commitees. With this joined document dealing with terminal specifications it has become possible to create the appropriate framework for technical preparations for the traffic telematics market including all partners (customer, service provider and equipment producer).

An essential feature of the specification is the system's open architecture, because a mass market for a multitude of traffic telematic services both in the commercial and the private sector can only be developed if open and standardized interface specifications are created.

The mobility of traffic users is becoming more and more important as an economic factor. Intelligent and flexible traffic guidance systems are therefore necessary in order to maintain a smooth traffic flow while the volume of traffic steadily increases. The aim is to introduce at the earliest possible point a traffic telematics system which is both flexible and open to incorporate future developments. This system should possess open standardized interfaces, thereby enabling the realization of a number of traffic management operations both in the commercial and the private sector. It can then support collective guidance and information services as well as personal ones.

The concept is based on mobile communication, e.g. the digital cellular mobile communication standart GSM and navigation systems, e.g. the satellite navigation system GPS, the latter being the dominant representative of the Global Navigation Satellite System (GNSS). The application of the concept is obviously not only restrictet to those particular communication and navigation systems, as any other kind of electromagnetic communication like even microwave or infrared can be used. As well any kind of navigation will fit in the concept of open standards like for example autonomous in-car navigation by use of sensors or any other kind of external and/or combined internal/external navigation systems like position determination by use of electromagnetic broadcasting means. In the following text GSM and GPS will be referred to as only one example of those various types of communication, especially mobile radio, and navigation means, especially satellilte navigation, possible in this concept.

GSM is already being used as an universal standard for language and data services in Europe and beyond. GPS is a standardized procedure that is available word-wide. The high coverage of the GSM networks means that the main investments in infrastructure have already been made, whereby the quick introduction of GSM based traffic telematics is guaranteed. It has to be stressed that the traffic telematics car terminals in particular can be used cross-border. The multi-functional design of these terminals forms the basis for a wide variety of offers and additional services for prospective customers.

In the paper Pacific Rim TransTech Conference, 1995, Vehicle Navigation and Information Systems Conference Proceedings. 6th International VNIS, 30 July 1995 - 2 August 1995, ISBN 0-7803-2587-7,1995, New York, NY, USA, pages 442 - 449; Hong Lo et al: "A structured approach for ITS architecture representation and evaluation", discloses a traffic telematics system which comprises a base system with several exchangeable and interchangeable subsystems, particularly a subsystem for communication, a subsystem for location and a subsystem for input/output which provide base functions.

The paper Proceedings of the Vehicular Technology Conference, Stockholm, June 8 - 10, 1994, vol. 1, 8 June 1994, Institute of Electrical and Electronics Engineers, pages 405-409, Wichtel E. et al: "AVL Subsystem Interfaces", is directed to a traffic telematics system and discloses a Standard interface towards the application as well as a central unit performing routing and system control functions.

The paper PHILIPS JOURNAL OF RESEARCH, Vol. 48, No. 4, January 1994, pages 299-313, XP495036, BIESTERBOS JWM et al.: "SOCRATES : A DYNAMIC CAR NAVIGATION, DRIVER INFORMATION AND FLEET MANAGEMENT SYSTEM" discloses a terminal for a traffic telematics system.

It is therefore an object of the present invention to provide a traffic telematics terminal with easily variable conception. According to one aspect of the present invention there is provided a traffic telematics terminal as proposed in claim 1. According to another aspect there is provided a method for operating a traffic telematics terminal as proposed in claim 7. The traffic telematics terminal contains one or more subsystems. Each of the subsystems can be designed to fulfil special tasks within the whole system such as communication, location, access control, input/output. One possibility of arranging the subsystems is to build up a base system which the one or more subsytems are assigned to. The whole system can be run in the way that base functions are assigned to the base system and those functions are used to run and/or control subfunctions of one or more subsystems. It is proposed to design standardized interfaces for the telematics system to facilitate communication and/or connection. One special example of a conception of such a base system, subsystems and interfaces will be shown below more expicitely.

Object of Specification

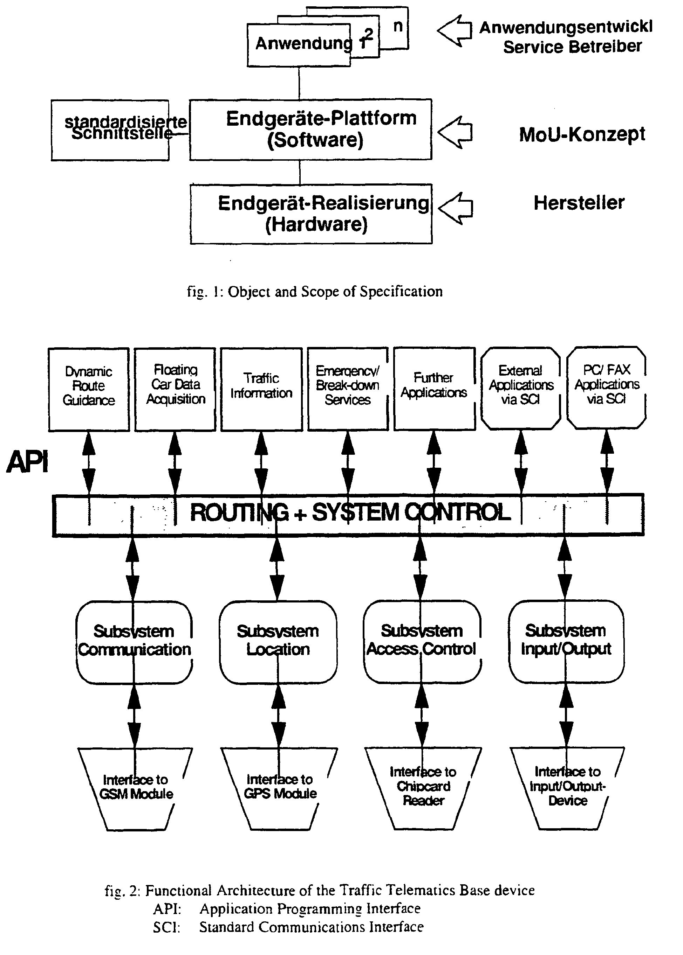

As shown in Fig. 1, this specification focuses especially on the functional description of the terminal platform as the connecting link between terminal production and applications. With this concept it will be possible to transfer applications to different terminals, which is the basis for the availability of terminals on a mass market. Furthermore, existing services can be implemented into terminals by different manufacturers, hence making individual product design possible.

The traffic telematics terminal is a complete system which can be integrated into the vehicle. The traffic telematics base terminal that this document specifies is the terminal without the parts belonging to the applications. The terminal platform includes subsystems, which are necessary for many traffic telematics applications, as well as the cross-section Routing + System Control and priority management. With respect to the architecture of the base terminal introduced in chaper 1.2 this specification establishes the base functions for the steering and using of subsystems like communication, location, chipcardreader, and input/output.

These base functions allow defined access to the subsystems while several applications are running at the same time, without one of these blocking the other. Additional external applications can also use these subsystems via a standardized interface, the Standard Communications Interface (SCI) and avoid a doubling of the GSM- or the GPS- module.

The aim is to establish a standard for application sequences by addressing and using the base functions. Possible applications of traffic telematics are described in [4], [5], [6] and [9].

Moreover, the specification of the base functions does not have to define the hardware of the multi-functional base terminal. Neither the CPU nor the operating system nor the bus structure are being established, which is why the base functions will be incorporated into a multitude of integrated or modular terminal realizations. Consequently, it is not necessary for companies developing applications and services to acquire a thorough technical knowledge about basic technologies and hardware construction.

The efficient transfer of applications to different terminal realizations is only possible on the basis of a standardization of the base functions.

Functional Architecture

An important part of this specification is the setting up of the interface between applications and base functions, preferrably chosen as an extra interface, the Application Programming Interface (API) (see fig. 2). It can nevertheless be useful in some cases to define only one common interface within the system. The base functions preferrably include the subsystems communication, location, access control, input/output as well as the Standard Communications Interface (SCI)). The connection between the applications and the subsystems is being established by the cross-section function Routing and System Control. While the Routing is confined to addressing tasks, the system control undertakes the monitoring of functions and the recording of failures and errors.

With the help of the communication subsystem connections to the GSM network can be established by adding a GSM module. It has to be pointed out again that GSM as well as GPS are only examples of the already above mentioned means of communication and navigation which can be used in this concept. Data can be exchanged with central service units located in the landline network. Other networks can in principle be connected to the communication subsystem as well, provided the function commands are being adjusted. The GPS receiver supplies data from the satellite-based navigation system GPS, which allows the position determination of the vehicle. In contrast to the GSM card reader currently in use an additional chipcard reading device can be impolemented to perform the additional function of processing a traffic telematics chipcard (see [8]), which can be a combination of GSM and traffic telematics chipcard. The chipcard's function is then primarily to support the traffic telematics applications [6]. The input/output unit supplies the user with information. He or she can moreover input information to control the base terminal. The SCI allows external periphery device access to as many functions of the base device as possible.

Certain subsystems can be designed to incorporate a priority management, whereby top priority user requests can be dealt with immediately, that is to say it is possible to disrupt other functions, such as the use of the display or a GSM connection.

The position determination of the vehicle can be supported with sensors (e.g. Dead Rekkoning). A more precise determination can be achieved by using differential information in the RTCM format.

For the operation of the GSM module the system's own input/output unit can be connected directly. Provided it is compliant with ETSI GSM 07.07, this unit can also be used as an input/output unit for traffic telematics applications.

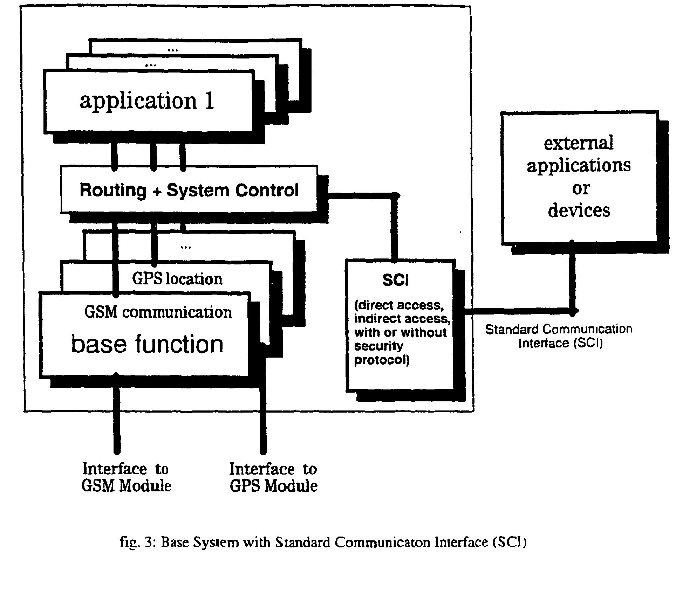

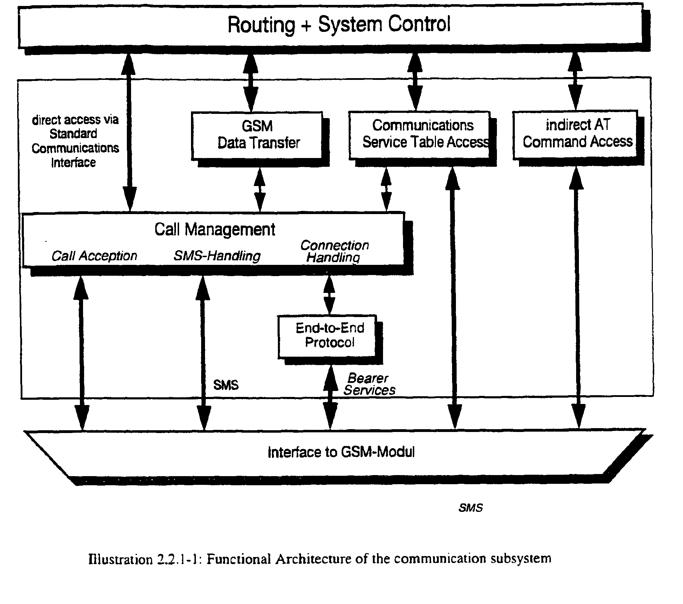

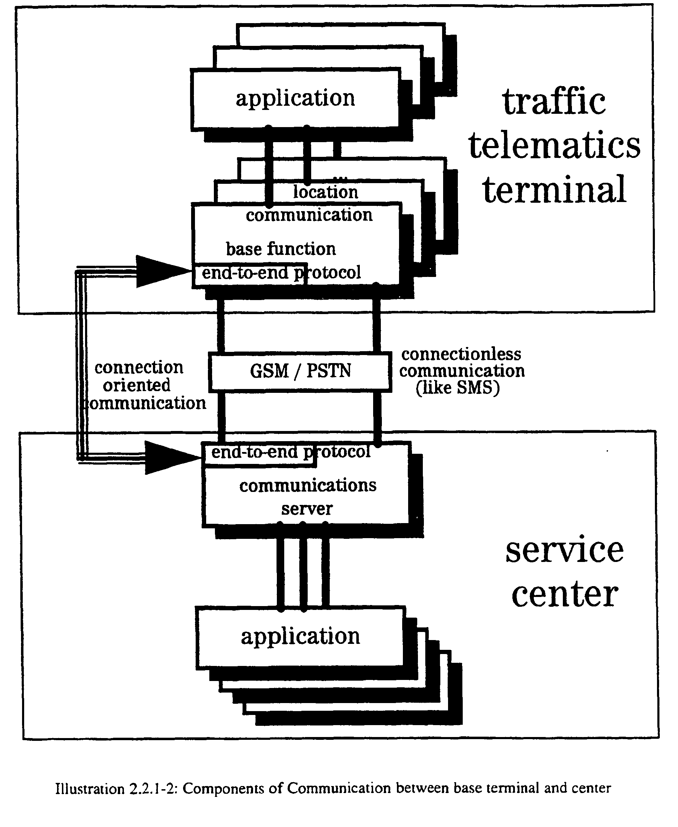

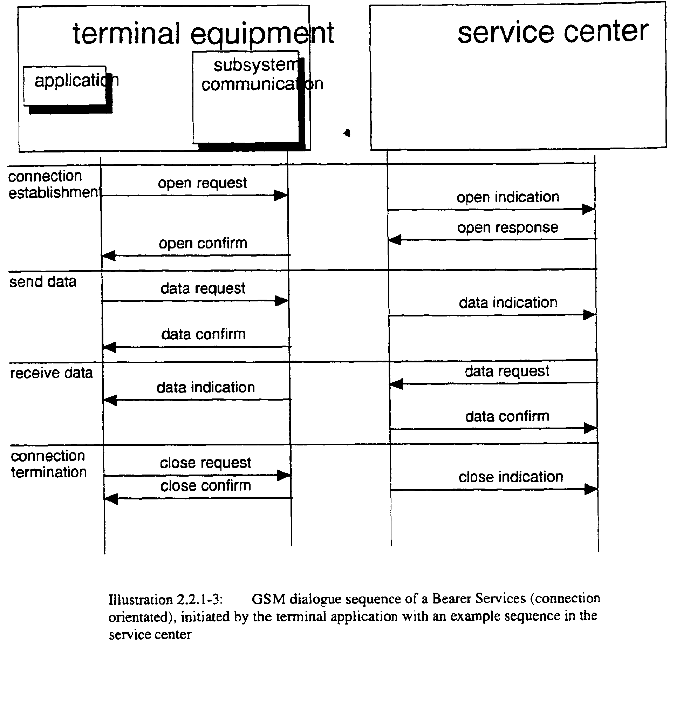

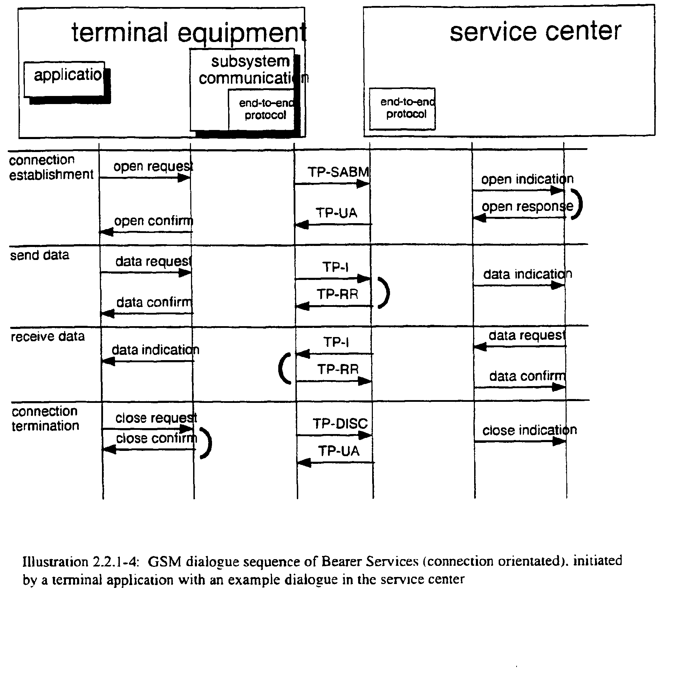

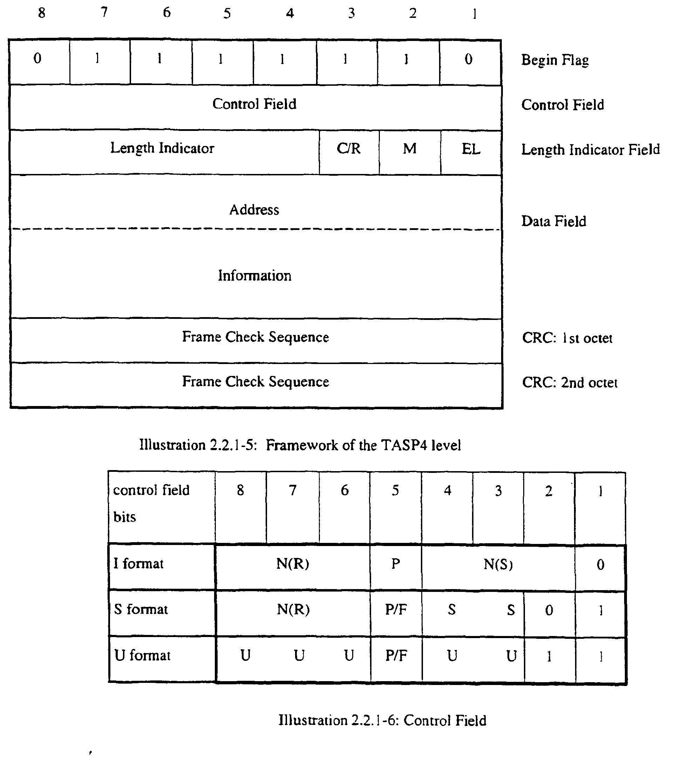

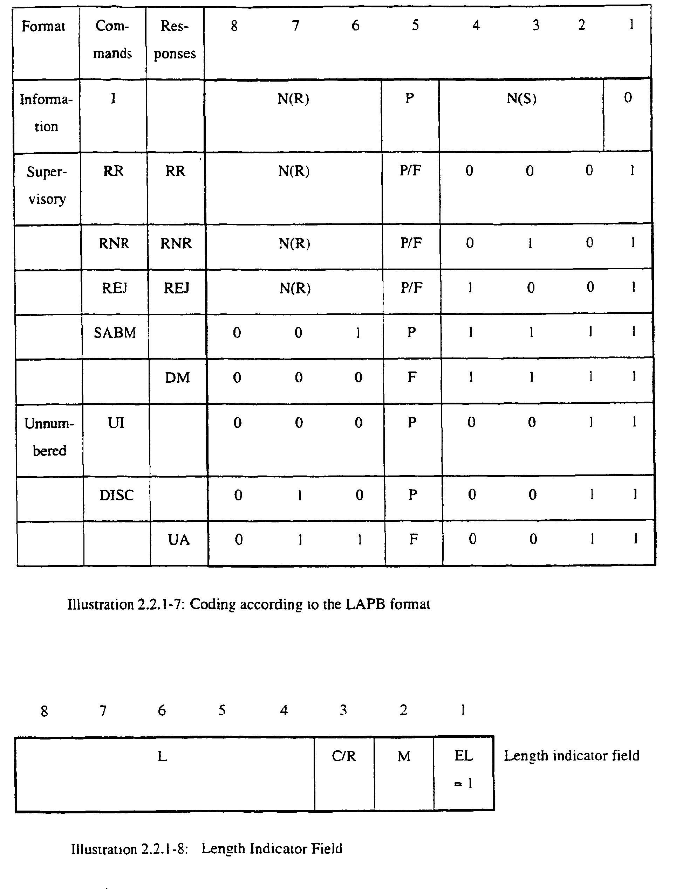

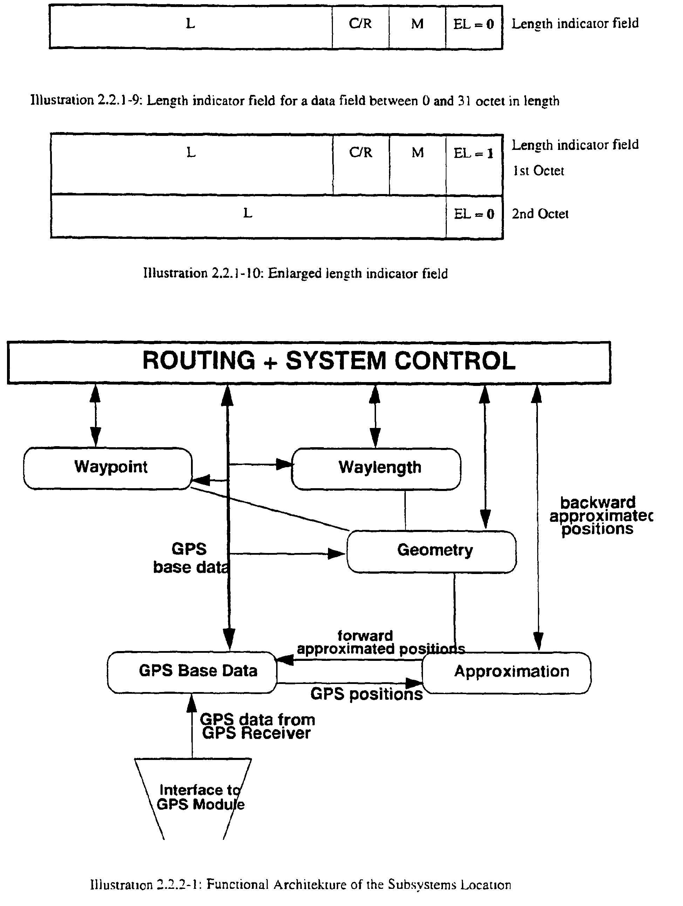

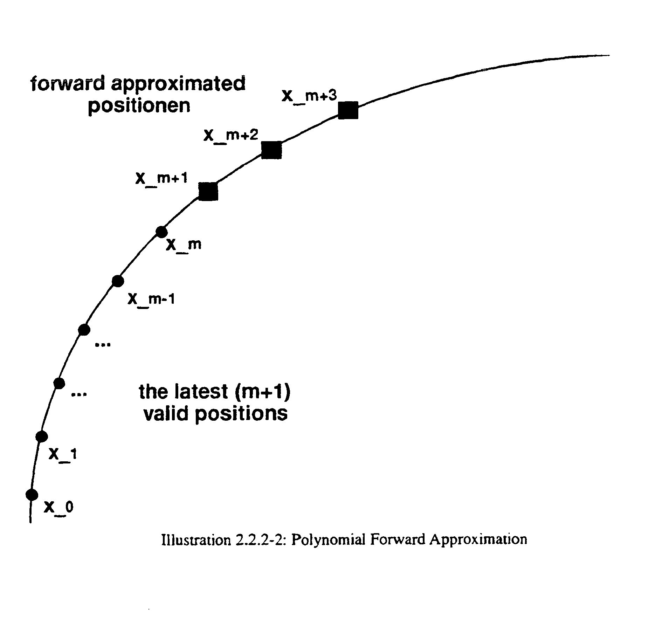

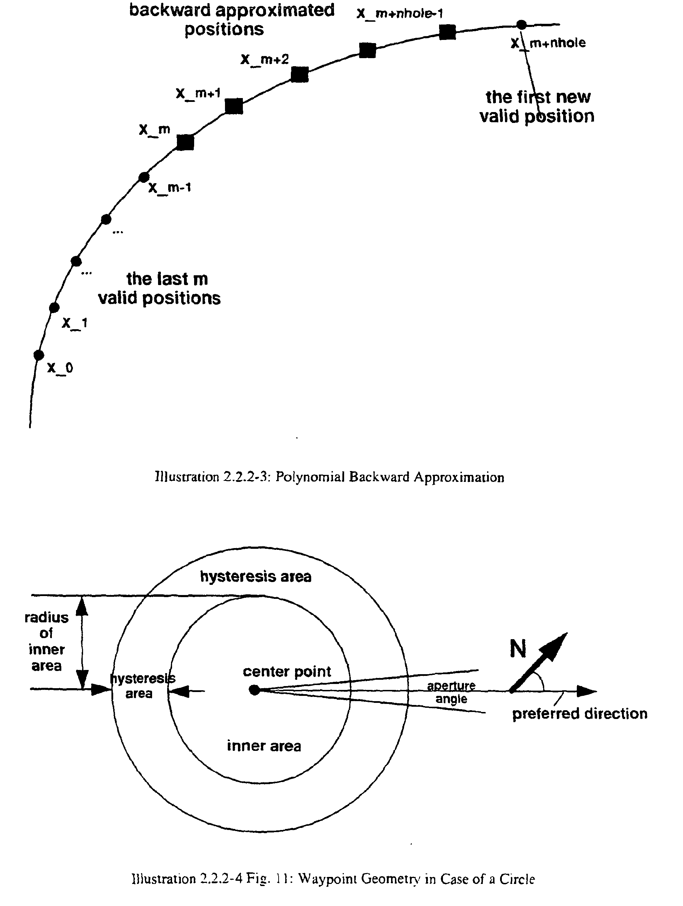

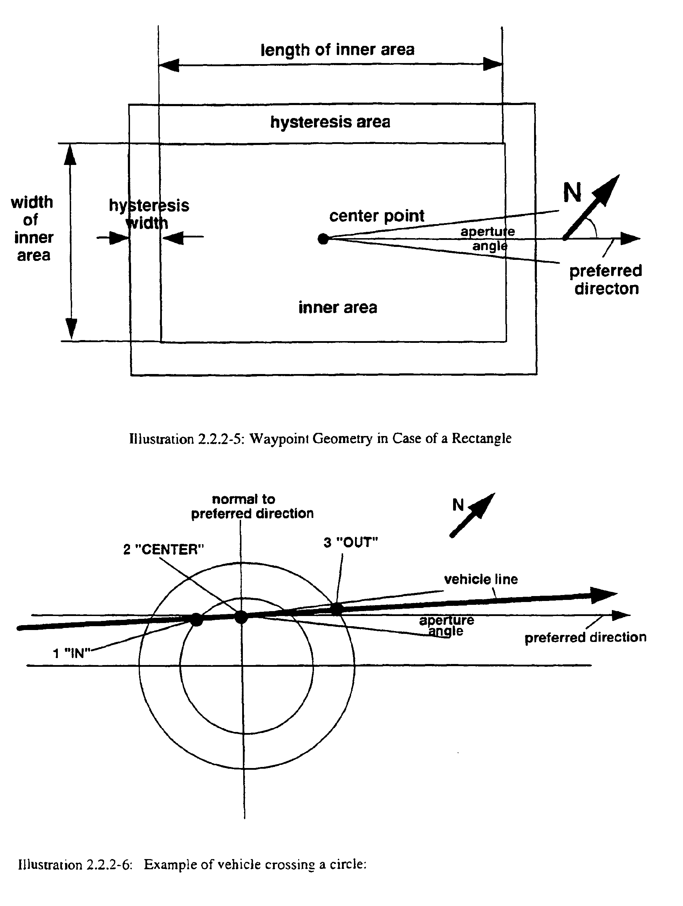

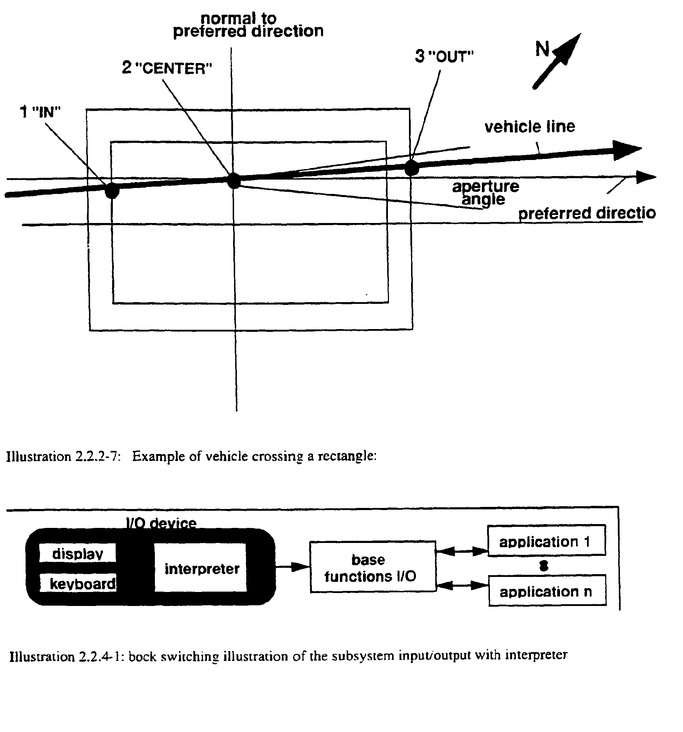

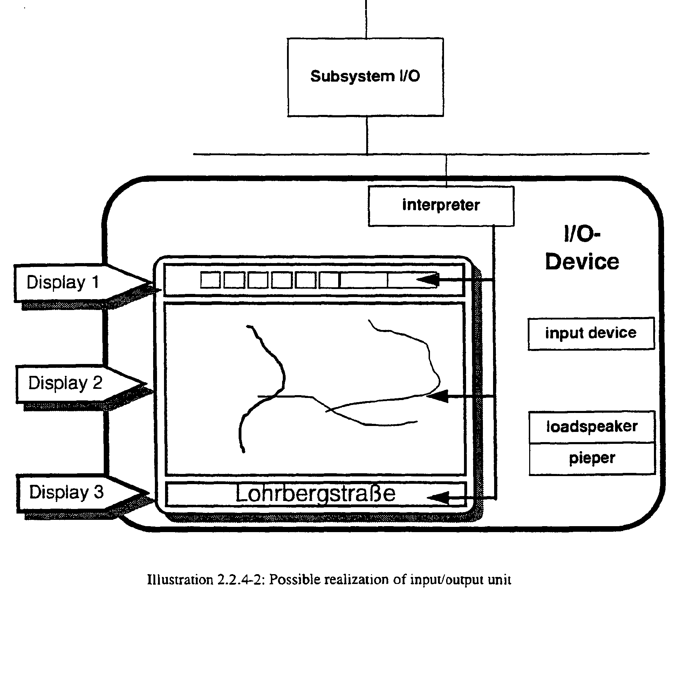

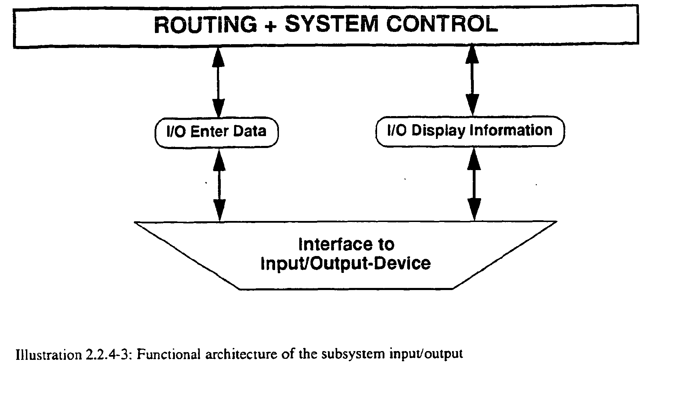

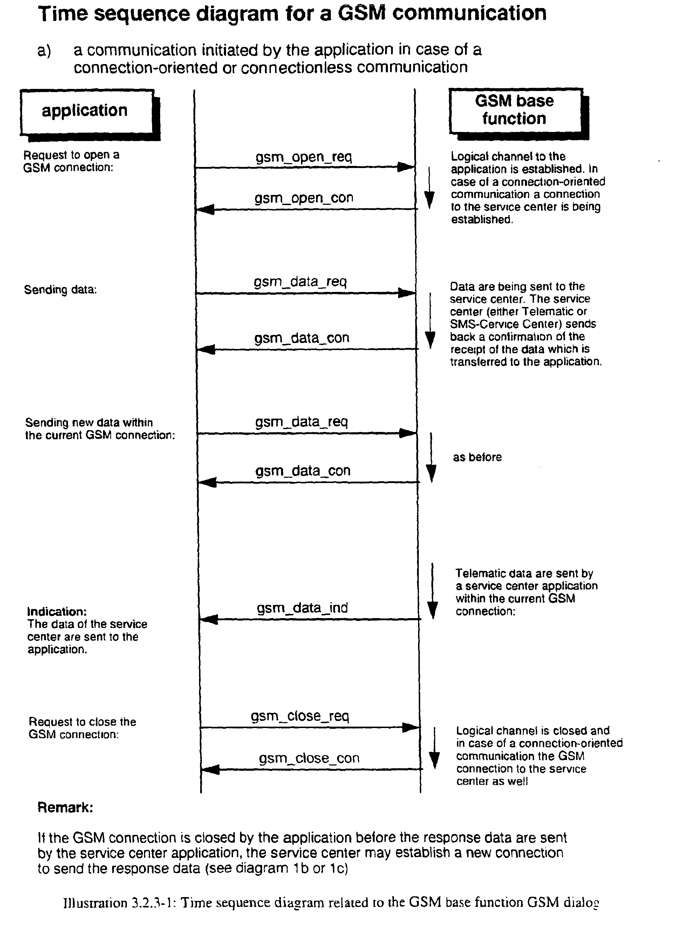

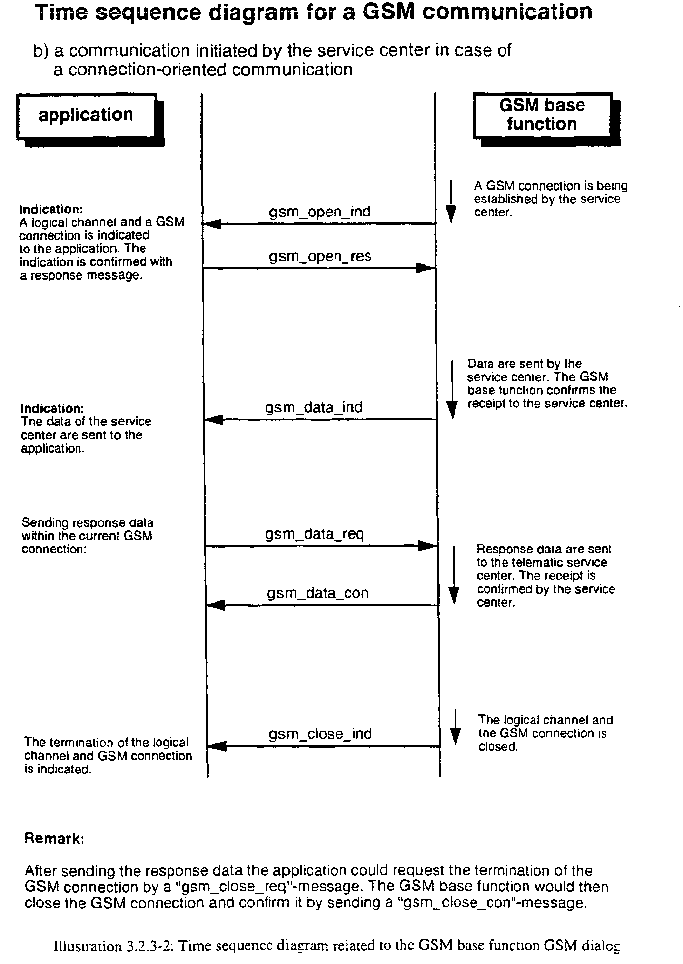

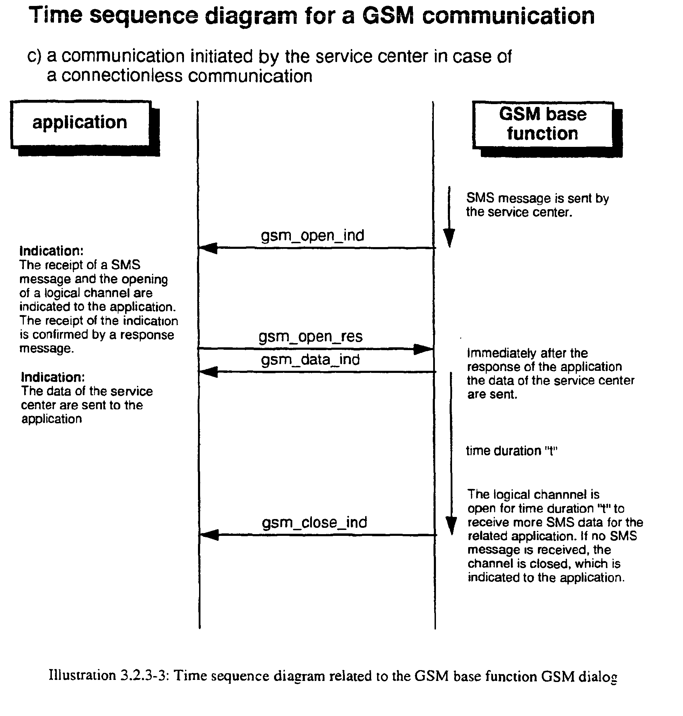

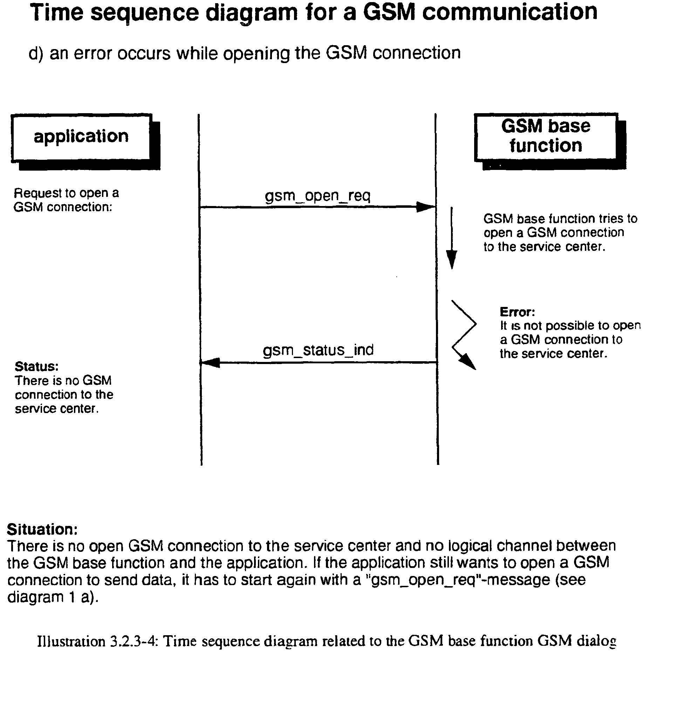

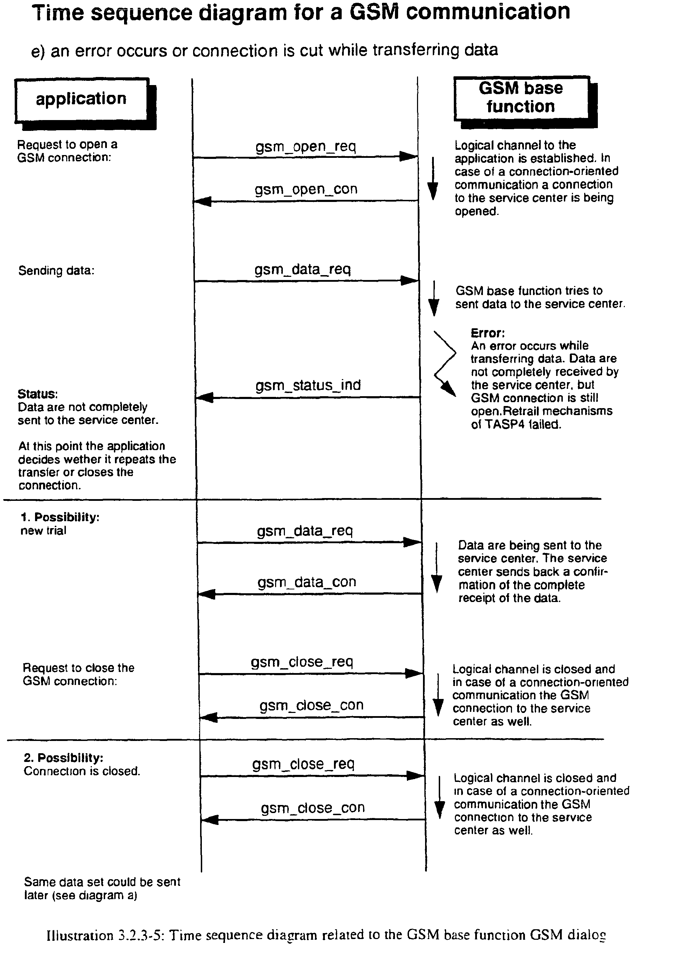

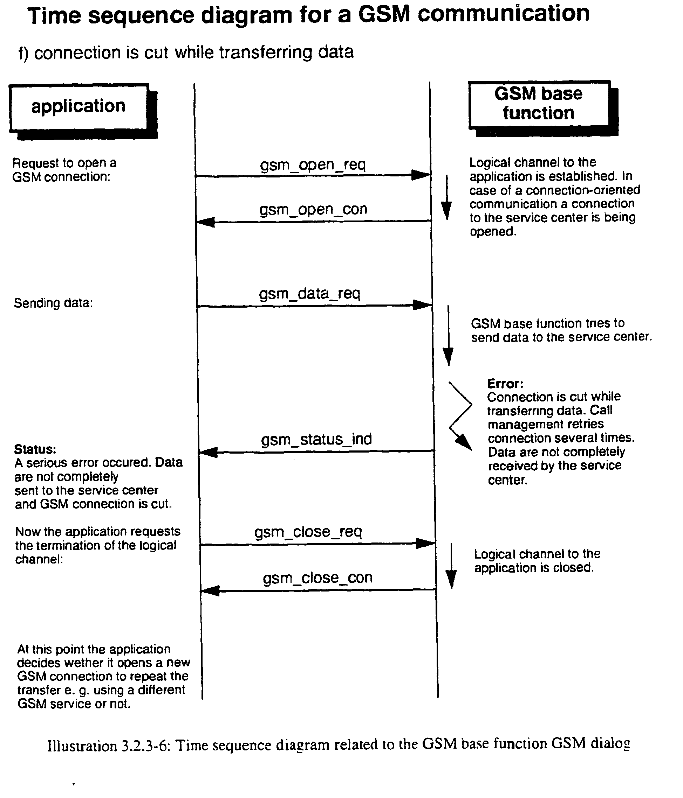

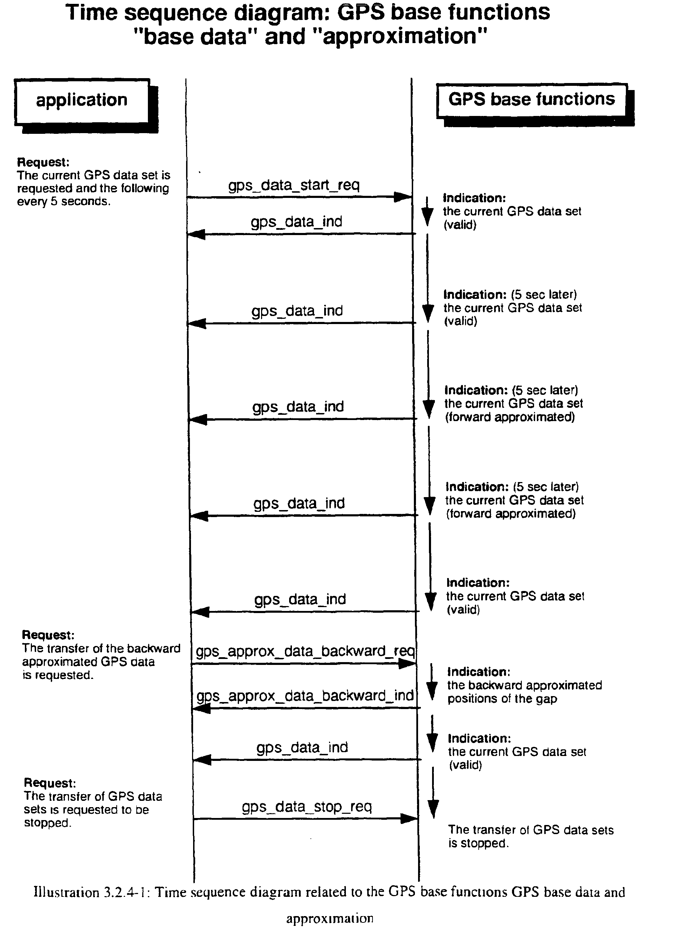

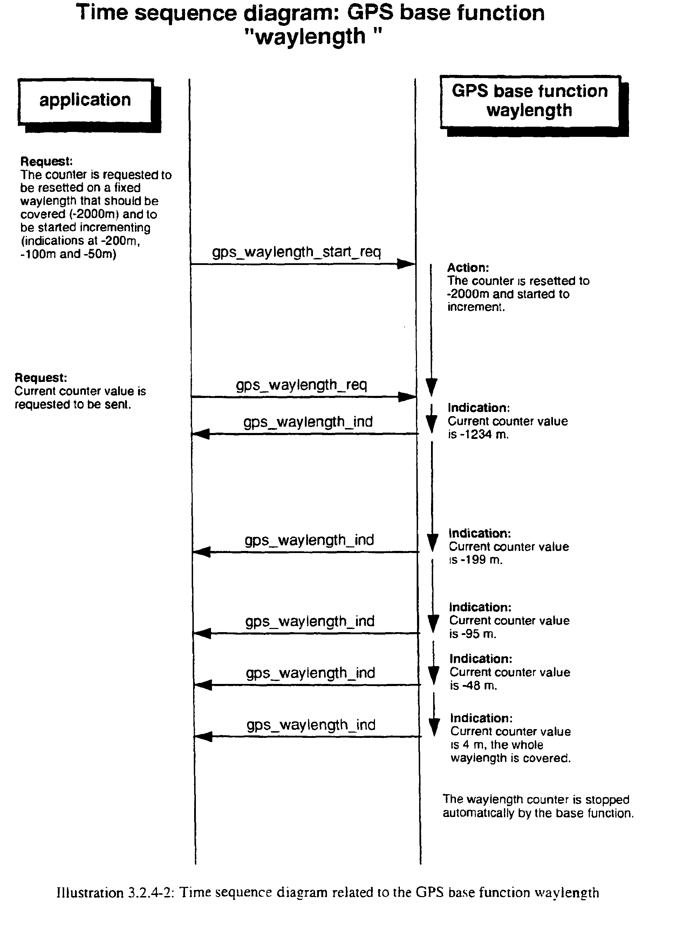

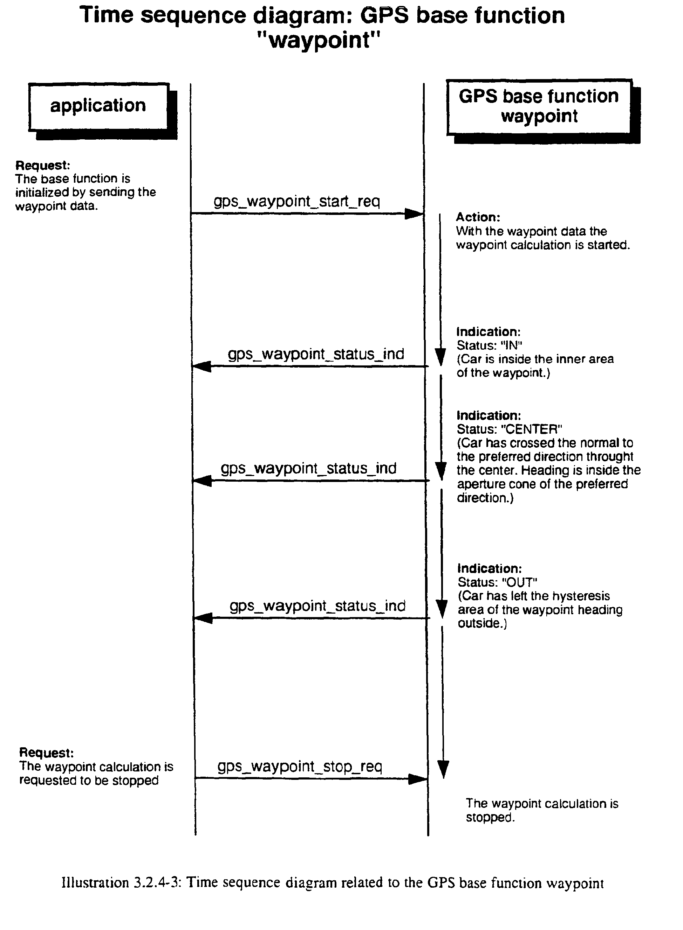

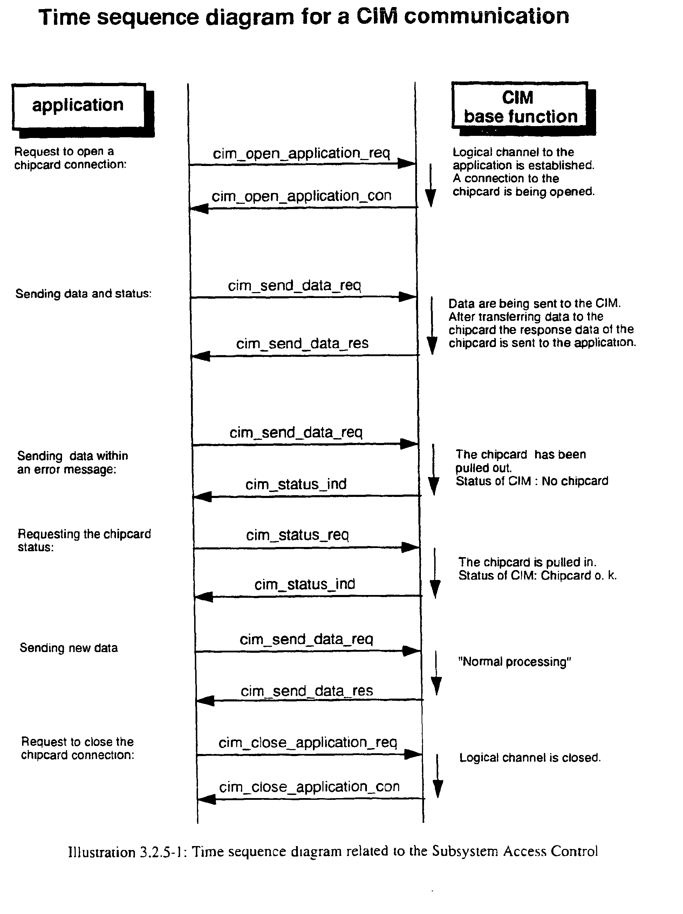

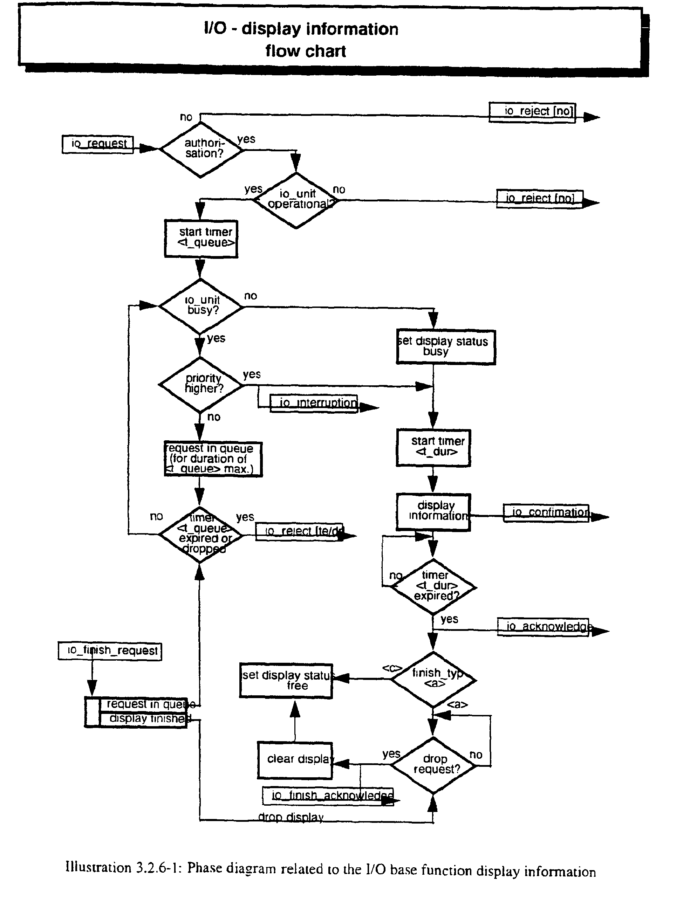

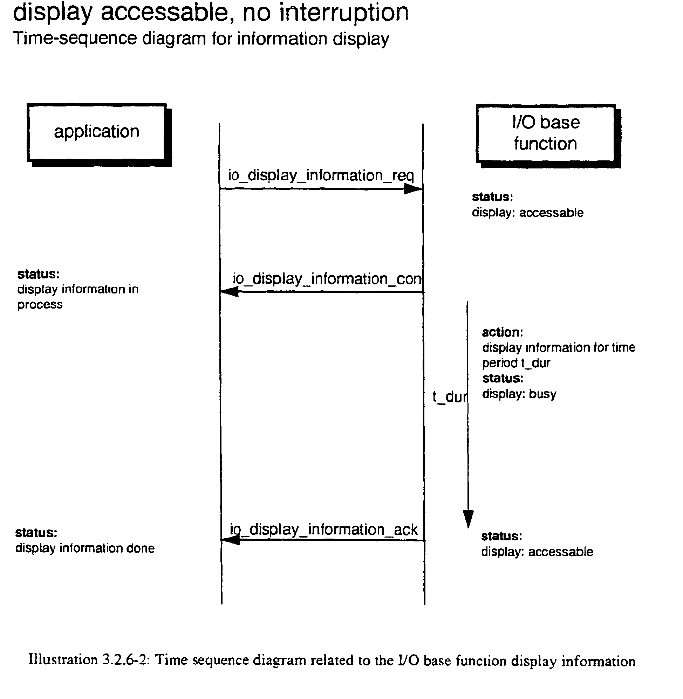

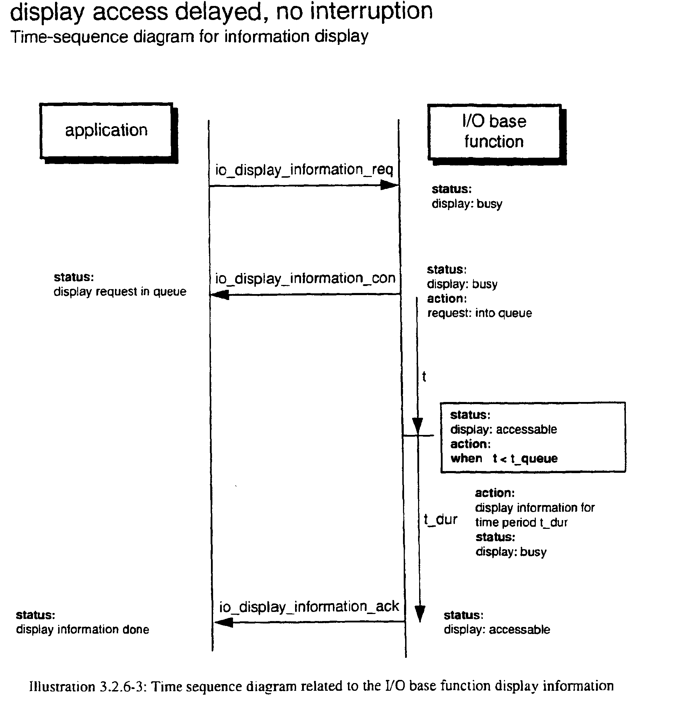

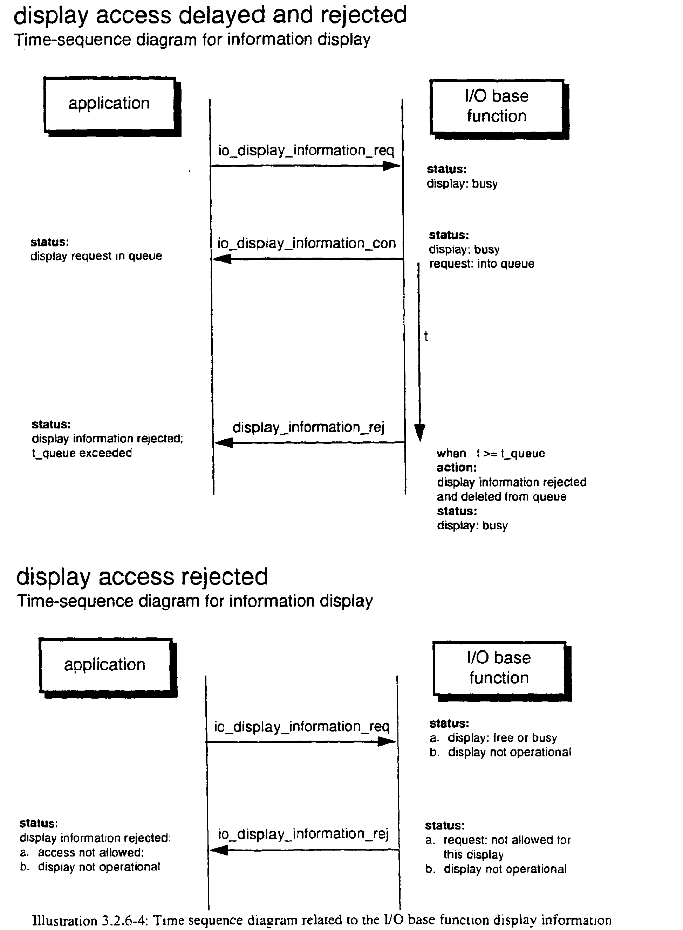

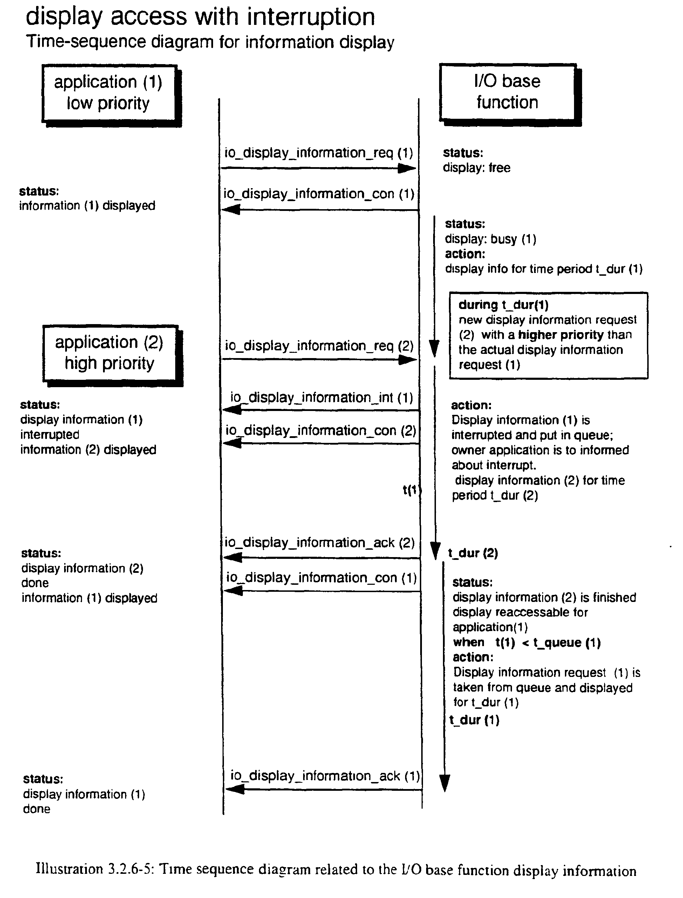

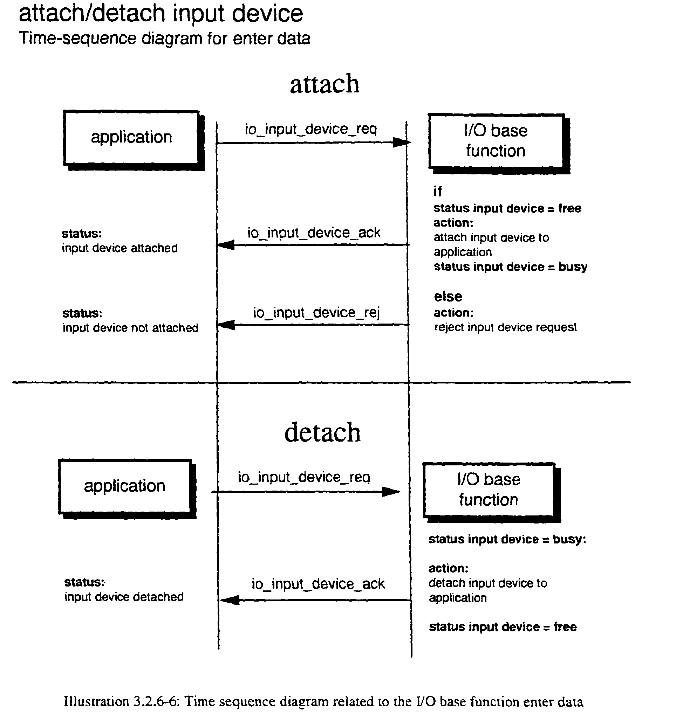

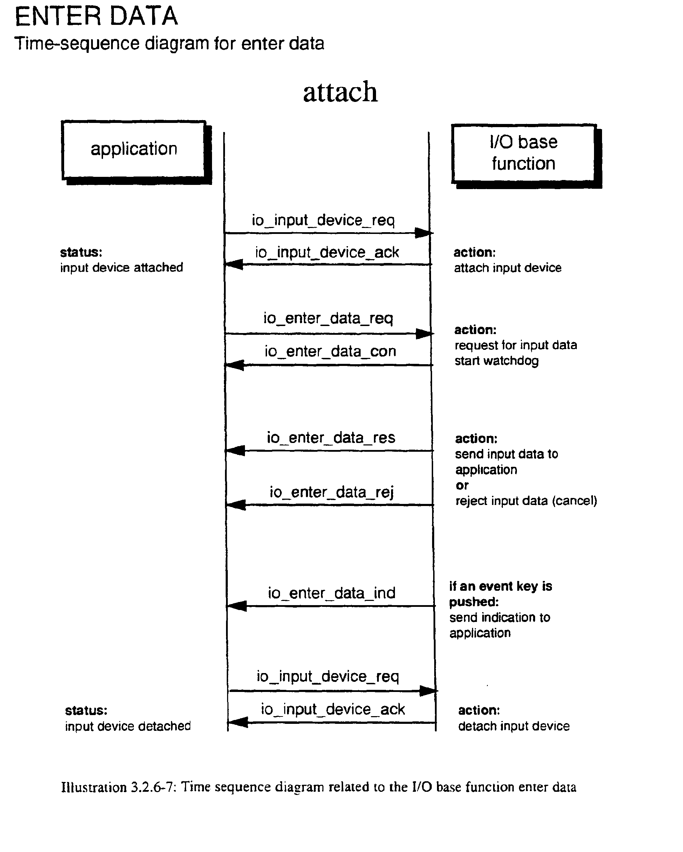

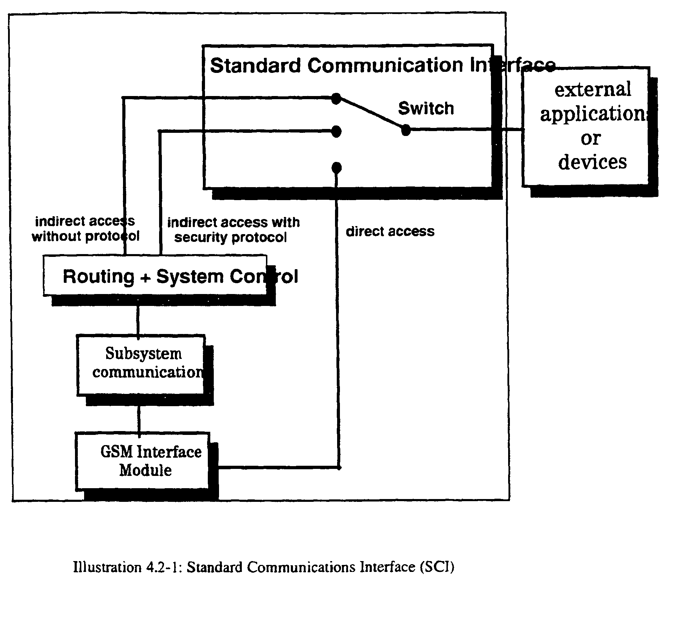

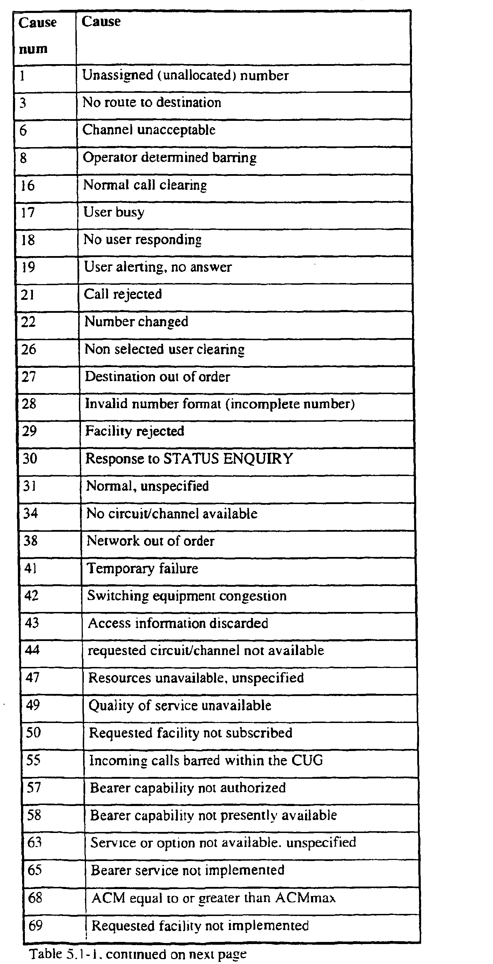

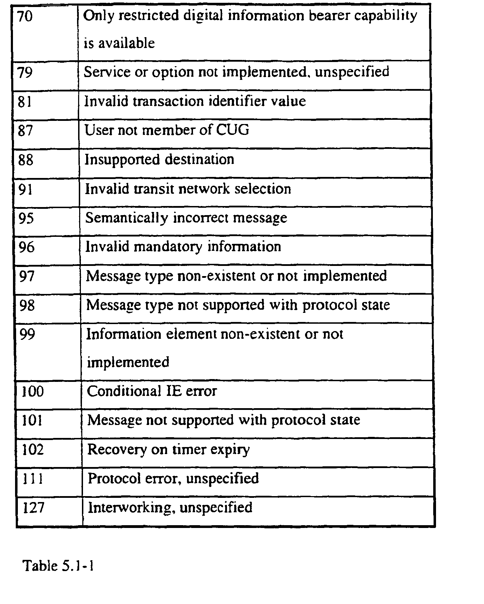

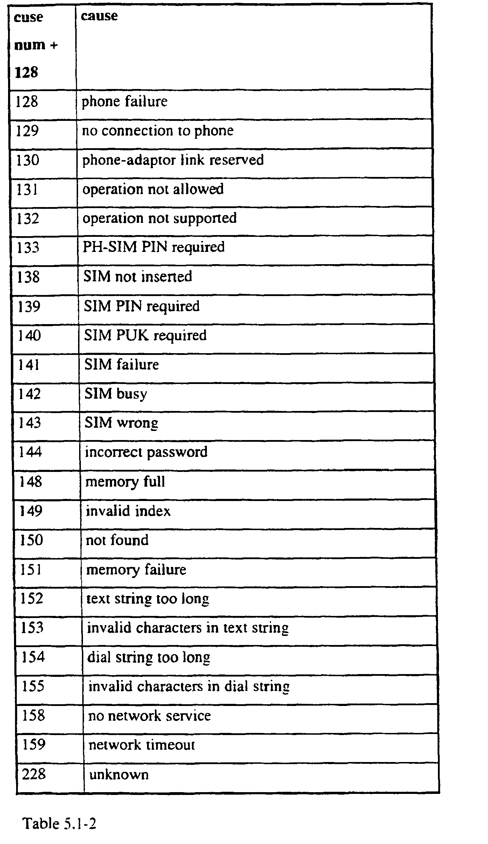

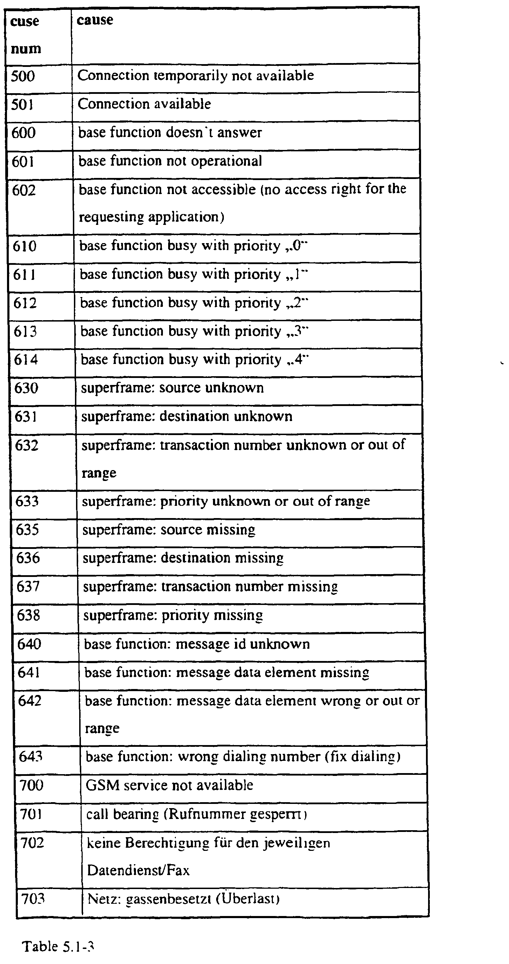

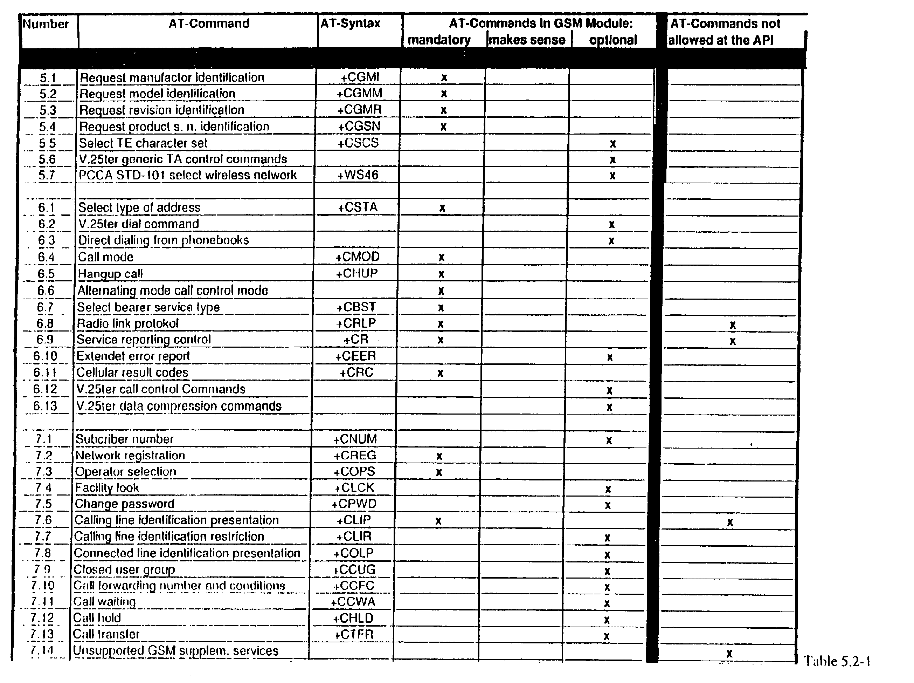

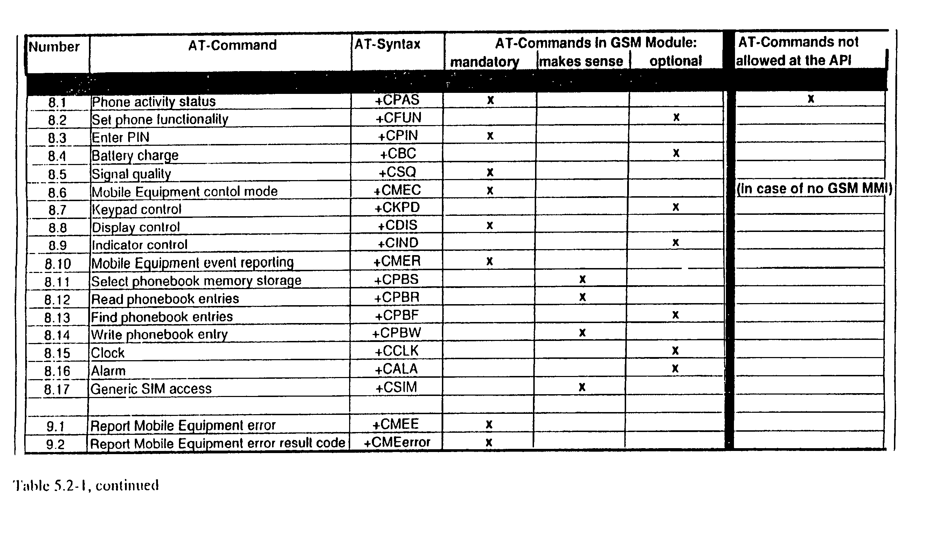

The API is connected with external devices via the Standard Communications Interface (SCI) (see fig. 3). Via the SCI additional external traffic telematics applications can use the subsystems as well. Furthermore, FAX and data services will principally be operating using this interface. Bus systems inside the vehicle can be connected via an adaption (Car Bus Adaption)

A language service is, in addition to the GSM data services, an optional part of the base device.

This specification does not contain any restrictions regarding the hardware architecture of the device, which is why the base functions can be implemented both in an integrated traffic telematics base device and in a device made up of different components. The specification defines the interface between a cross-section of components needed for traffic telematics and their functional requirements on the one hand and those traffic telematics applications that are based on defined functional sequences of their basic components on the other.

The following description gives one detailed example of the present invention claimed.

**2 Scope of Base Functions**

**2.1 Summary of the Base Functions and External Interfaces**

The common functions of the multi-functional base device are supplied as base functions. They have an interface to the service applications (API interface) and use different hardware components such as GSM, GPS, chipcard reader, input/output devices etc. The base functions can be grouped together under the following headings:

| | |
|---|---|
| **GSM Communication:** | The base function for GSM communication plus the GSM module constitute access to the GSM network. |
| **GPS Location:** | The base function for GPS location plus the GSM module which contains the algorithm for position determination and identification constitute the location subsystem. Other GNSS positioning systems can be implemented into this location subsystem besides the GPS position determination. Further location modules would be necessary for this. However, in the first instance the GPS module will be considered only. It is important to design the location subsystem in such a way that the service applications will not be affected if further location procedures are added in the future. The GPS location can be supplemented with other procedures like GSM triggering via Underlay Broadcast Cell. The location subsystem remains unchanged, if the satellite navigation is supported by external sensors and differential information. Differential information can either be fed directly into the location subsystem or they can be requested via the API (for external sources via the SCI) and then passed on the the location subsystem. |
| **Access Control:** | The subsystem "access control" contains the base functions for the chipcard handling |
| **Input/Output:** | This includes input/output functions for display and operating elements. |

Furthermore, general functions are being provided

| | |
|---|---|
| **Routing + System Control** | The Routing organizes the flow of information from applications to base functions, from base functions to applications, between applications and between base functions. The System Control performs tasks such as initialization (configuration), status control (error status), diagnosis, version administration and monitoring individual processes (watchdog). |
| **Priority Management** | The priority management regulates access to the base functions. |

**2.2 Functional Description**

**2.2.1 Base Functions of the Subsystem Communication**

Many traffic telematics applications have in common the necessity for mobile communication. The Global System for Mobile Communication (GSM) provides the basis for the subsystem commincation to be used Europe-wide. The subsystem commincation has been designed in such a way that alternative networks can be added, thereby leaving the system open for special mobile communication networks like Inmarsat. The functional architecture is transferable as long as the function commands are modified accordingly.

The subsystem commincation offers access to data services (they assist in exchanging information with the central service unit) and deals with the connection handling. The base functions are basically free to choose their access to the GSM module. However, we suggest the use of AT commands (as laid down in the GSM recommendations 07.05 [2] and 07.07 [3]). There also exists a Communications Service Table (CST), which informs applications about the availability of data services.

The base function "indirect AT command access" allows applications access to the GSM module indirectly by using certain AT commands. This access is restricted to requesting status information.

The base function "call management" contains a retrail mechanisms in case of a wrong connection. This relieves the application of the task of dealing with redial and connection errors itself.

In order to assist the use of the connection oriented Bearer Services with TASP4 (Telematic Application Security Protocol, layer 4) an additional end-to-end protocol has been defined for the save transmission from the base device to the center. The subsystem commincation contains the following base functions:

1. GSM data transfer
2. indirect AT Command Access
3. Communications Service Table
4. Call Management
5. end-to-end protocoll

Illustration 2.2.1-1 shows the functional architecture of the subsystem commincation

Illustration 2.2.1-1: Functional Architecture of the subsystem commincation

Certain data services for traffic telematics applications are recommended for use within the GSM network, these include Teleservice 21 (SMS-MT), Teleservice 22 (SMS-MO), Bearer Service 24 (2400 Bit/s) and Bearer Service 26 (9600 Bit/s), both transparent and non-transparent. Future services include Teleservice 23 (SMS Cell Broadcast) and GPRS (General Packet Radio Service) with its variant PDSS.

The available data services are dependant on country and network. The application selects the data service (e.g. SMS, BS24 or BS26) and is passed over as a parameter to the base function with the message.

An application can choose between different data services when communicating with its center. The terminal application has to be informed via the center, which data service is to be preferred.

Since there is no guarantee that the preferred data service is locally available, a Communications Service Table (CST) is kept by the subsystem commincation. The table's purpose is to record the success (or lack of it) in trying to contact a certain service; it is therefore able to inform an application whether the requested GSM service is available without the application having to contact it. In case there are any doubts the trial and error method is being applied.

The Communications Service Table also records which data services are supported by the base device. It can then inform the application which services are implemented and therefore preferable.

The applications decide for themselves, whether they want to follow the table's suggestion or whether they prefer an alternative service.

The error handling mechanism is designed to deal with problems concerning the GSM connection handling. The TASP4 end-to-end protocol is implemented into the subsystem commincation, which, if the Bearer Services (transparent and non-transparent) are used, guarantees a save data transfer between base device and service center (see illustration 2.2.1.-2).

Illustration 2.2.1-2: Components of Communication between base terminal and center

Besides using the GSM module *indirectly* with the aid of basic function commands , there will also be *direct* access to the module. Traffic telematics applications will always gain access indirectly by using the appropriate base function commands.

Applications for data transfer such as PC and FAX, already in common use today, take direct access; they can be connected to the base device without altering the software. Direct access is only possible via the standard communication interface, which is why the SCI has to be able to recognize a request for direct access. Otherwise there would be a conflict if, for example, a top priority traffic telematics application (such as an emergency call) would be blocked by a FAX transmission. These conflicts will be solved by the call management function.

**2.2.1.1 GSM Data Transfer**

**Addressing the Service Center**

Several service centers with different phone numbers will be provided. If a connection is to be established, the application passes the number on to the appropriate service center. It is the application's responsibility to update the number if necessary.

## Dialog Sequence

Both the service center and the terminal application can start a dialog. If, for example, there are messages to be send to a service center or information is to be requested from the sevice center, the terminal application starts a dialog. The dialog structure is more or less the same for all GSM data services, regardless of whether a Bearer Service, a Short Message Service, the future General Packet Radio Service or the Packet Data on Signalling Channels Service (PDS) is used. Illustration 2.2.1.-3 shows a dialog sequence for line oriented connection which has been initiated by an application in the terminal. While the dialog sequence in the base device is unchangeable, the service center sequence can be varied.

Illustration 2.2.1-3: GSM dialog sequence of a Bearer Services (connection oriented), initiated by the terminal application with an example sequence in the service center

The individual requests and messages are described in chapter 3 (API specification). The term "message" refers to both requests and messages. Strictly speaking, the commands described are "primitives", as defined by communication technology, as they regulate the communication sequence with the next level. However, since these are commands and sequences which concern the relation between applications and base functions only, in this document the term "messages" will be used throughout.

Illustration 2.2.1-3 shows that the communication sequence consists of three phases.

The first phase opens up a logical communication channel for the data transfer between the application and the subsystem commincation. The connection request contains further parameters besides the number of the service center. Information regarding the preferable GSM data service and the Application Service Identifier (asi), for example, are important parameters. There is a common European standard for every traffic telematics service. If line oriented connections are concerned, the setup of the physical connection via an aerial interface has to be confirmed by the center, before the base function can open a channel and allocate a channel number. Packet oriented services like SMS do not need a confirmation by the center. Since in the case of these services the SMS center supports a secure connection, the TASP4 end-to-end protocol (which will be described later on) does not need to be used. The request to open a communication channel is immediately followed by the confirmation by the base function and the allocation of a channel number.

The second phase allows a two-way exchange of data (transmission and reception). Confirmation of reception is handled differently by connection oriented services and packet oriented services. Because Bearer Services employ the end-to-end protocol, this protocol confirms the reception to the sender. As for the Short Message Service, the reception is confirmed by the SMS center without the message having been transferred to the traffic telematics center.

If a confirmation by the application becomes necessary because of the contents of the transferred data (e.g. payment security), the application has to incorporate this in its response message.

In the third phase the existing communication channel is closed. Both the center and the base device can clear the connection. As a rule the connection is cleared by the party that initiated the communication. There are exceptions to this rule, however, for example if an existing connection is disrupted (priority management), if existing connections are used by several traffic telematics applications at the same time, or if a connection is activated by the other party or the network (e.g. radio shadow). Moreover, if there is no data transfer during a defined period of time or if the connection exceeds the defined maximum length this will be recorded (Watchdog Function) and a disconnection will be initiated by the base function. If a request exists to close the channel in a packet orientated communication, only the logical channel between application and base function is being closed. The base function can therefore confirm the request immediately. The same goes for connection oriented communicaton: the confirmation of the closure of the logical channel between application and base function immediatly follows the connection cleardown. The end-to-end protocol informs the center about the cleardown and the center then confirms this.

A dialog can also be started by a call from the center once it has passed the Call Management function (see chapter 2.2.1.4). In this case the mirror image of illustration 2.2.1-3 applies; again the dialog sequence for the base device is regulated, the sequence for the center is an only an example. The base function, by using the Application Service Identifiers (asi), informs the application of an incoming call by sending the message "gsm_open_indication". The open command does not depend on any particular data service (Bearer Services or Short Message Service). In the second phase the data transfer remains unchanged; in the third phase the logical channel is closed. Is the end-to-end protocol in use, the base function sends the message "gsm_close_ind" only if the end-to-end connection is activated. In the case of the Short Message Service the call management initiates the "gsm_closr_ind" message. This happens either immediately after the transmission of the SMS packet or after a defined waiting period in case a follow-up message is expected.

Priority Conflicts

Conflicting communication requirements are regulated within the subsystem by the priority management function. The priority of each new communication request is compared with running communications. If a transmission request with a higher priority is registered, the existing physical connection will be disrupted and the application, whose communication has been disconnected, will be informed. However, the logical connection between application and base function (as well as the channel number) remain unaffected. Once the communication of higher priority has been completed (connection request, data transfer, connection cleardown) the physical connection will be re-established and again a message will be send to the application (channel number). The communication will then be repeated.

In case high priority data are to be send to the same center, the data transfer will be disrupted. The application whose communication was disrupted will be informed about this. Both the logical channel and the physical connection with the center remain open. The high priority data are then transferred; once this is completed the high priority channel is closed. At the same time the application, whose communication was disconnected, will be informed. The end-to-end protocol will be re-implemented and the disrupted communication will be continued.

The base function establishes retrail mechanisms which guarantee that a disrupted data transfer can be continued efficiently. It makes sense to keep the connection open, if the same service is going to be used. If, for example, a BS26 connection has been set up and the high priority application will be transmitting via BS24, the existing connection can be used as long as it is supported by the application. Otherwise a connection cleardown and a new setup will be necessary. The application concerned will be informed about the disconnection.

**Multiple Use of an Existing Connection**

An existing connection can by used by several applications at the same time, provided they all use the same service and address the same service center. Within an existing connection several messages can be both transmitted and received by one application or by several applications in succession.

If a message is too long to be transmitted, it can be split into packets. However, all the pakkets belonging to one message have to be send and the correct transmission has to be confirmed by the end-to-end protocol, before another message can be received or transmitted. There will be no facility for a complex transmission of several messages by the same or different applications (muliplex operation).

In order to end the communication the application sends a command to the base function to close the channel. The logical communication channel between application and base function will then be closed (as described under the heading "Dialog Sequence"). If the same connection is still in use by other applications, the physical connection will only be cleared once these applications have completed their dialog with the service center.

**Watchdog Function**

The watchdog function monitors existing GSM connections. This function has the facility to disrupt connections if it detects system errors. Two timers have been implemented to perform this. One timer determines the period of time after which a connection will be disrupted if the data flow stops. The other timer determines the maximum length of a connection. As soon as this length is exceeded the connection will be disrupted even if there are still data to be transmitted.

**2.2.1.2 Indirect AT Command Access**

The indirect AT Command Access allows applications to address the GSM module by using certain AT commands. Information regarding the status and initialization of the GSM module can be requested this way. To gain access to the GSM module it is recommended to use the extended AT commands, as described in the GSM Recommendations 07.05 [3] and 07.07 [2].

Most possible AT commands are available via indirect access, except those that are needed for connection setup and dialog communication, because these functions are covered by by special base functions.

A list of available AT commands have been included in appendix 2 of this document (see chapter 5.2).

**2.2.1.3 Communications Service Table Access**

The application decides which data system it wants to use. The subsystem communication nonetheless provides a Communications Service Table (CST) in order to document the availability of the services requested by the applications.

The applications have access to the contents of this table via a function command and they can partly change the contents as well, e.g. to incorporate the phone number of a traffic telematics center (Calling Line Identity (CLI)).

An application can enquire whether a certain communication service is implemented in the base terminal and whether the service is currently available. It is therefore important that the CST has the facility to include both actual and potential services.

We recommend to support the following communication services:

Bearer services BS24, BS26 (transparent und non transparent)
Teleservices TS11, TS21, TS22, TS23
plus Supplementary Services

CLIP/CLIR and Call Wait are intended as Supplementary Services

**Initialization:**

The table is kept in a volatile changeable memory and each time the device is switched on, the table is updated in accordance with the GMS module. If the base terminal software is implemented or downloaded or if the terminal is upgraded, the services, supported by the base terminal, are entered in the CST.

**Updating:**

Data services available in the network are only updated if the GSM module is in operation. Every time a data transfer takes place or is rejected the status of the requested or employed data service is updated. The application receives information on whether the transfer took place or whether the data service was not available. The application then decides whether it wants to employ an alternative.

Since the availability can change (e.g. because of network transfer or local failure) the table entries are valid for a limited period only.

**2.2.1.4 Call Management**

The Call Management performs two essential functions. Firstly, it checks incoming calls and determines whether they have been passed on by a traffic telematics center or whether access to an external PC or FAX application is to take place. Secondly, the call management deals with all kinds of communication errors.

**Examination of Incoming Calls**

An incoming call can be addressed either to traffic telematics applications or to other applications such as PC applications, FAX etc. If the GSM module supports the Calling Line Identity (CLI) and the center is connected to the network either directly or via ISDN, the service center will be informed of the number. Any further information are integrated into data packets (so-called "in-band-Information"). The appropriate CLI is put into the CST.

For any incoming call it has to be decided how the following communication sequence is to take place and to whom the call is addressed. What follows is a description of the procedure.

(1) First of all it has to be determined whether the incoming call is a Short Message or not
If it is not a SMS:
(2) The call management decides whether the Calling Line Identity is supplied. In case the CLI is supplied it has to check whether it can be assigned to a traffic telematics center. If it does, the call is accepted. (Continue with (4), although the examination of the traffic telematics identification is optional.) If it does not, the call is put through to the Standard Communications Interface (SCI).
(3) In case the CLI is not supplied the service is checked: If it is a FAX call, the call is put through to the SCI. Otherwise the call is accepted (continue with (4)).
(4) The call is accepted and it is checked whether a TT identification has been received (in the form of in-band-Information). If that is the case the received information will be passed on to the addressed traffic telematics application. If no TT identification exists, the information will be passed on the the SCI.

If it is a SMS:
In case of a received Short Message the procedure depends on which tele service is used:

(A) In the case of TS 21 (SMS MT) the call management checks whether it can deduce the TT center from the originator number. If it can, the Short Message will be passed on to the appropriate applications. Otherwise the Short Message will be passed on to the SCI.

(B) If it is not a TS21, the Short Message is treated as a TS23 (cell broadcast) and after evaluating the identifier it may be passed on to an application.

**Treatment of Communication Errors**

Access to the service center is not always possible. There are several explanations for this: the connection can be disturbed or disrupted or the center can be occupied.

For that reason it is necessary to implement further individual correction mechanisms beside the GSM specific error treatment mechanism, such as cyclic retrials when setting up a connection. The redials are carried out in accordance with the GSM standard. Deviations are possible depending on the priority of the application.

The CST keeps and manages information (redial meter with telephone number, time stamp and reason for refection) which the subsystem communication requires in order to keep to the restrictions for redials as laid down in the GSM recommendation 02.07. (Annex "Automatic calling repeat call attempt restrictions"). Excerpts of these restrictions are included in appendix 1.

After a successful data transfer the application receives a confirmation. If there are any errors that cannot be rectified by the base function, the application will be informed about the causes. The application decides whether or not to pass information on to the user about these errors.

Furthermore, the application can gain access to further error information via the network's Release Causes (e.g. Cause 63, i.e. the participant does not have a subscription for this service). The appropriate mechanisms for a call continuation and redialling device, on the other hand, are located in the base functions.

Appendix 1 provides a list of possible error messages (GSM 04.08. Table 10.86) which the base functions accept, condense and pass on to the applications.

Once the connection has been established, the procedure follows the end-to-end protocol described in the following chapter.

**2.2.1.5 TASP4 end-to-end protocol**

The Transport Application Security Protocol presents end-to-end security and its tasks correspond with those of the OSI protocol of level 4. It is called TASP4. Only one of the functions of the TASP4 protocol is required by traffic telematics applications and it performs fewer functions than a classic transport protocol such as TCP.

The TASP4 protocol is based on the LAPB protocol, wich can be found in the X.25-Specification [7] (Level 2). The LAPB protocol was modified according to the special requirements of level 4.

Illustration 2.2.1-4: GSM dialog sequence of Bearer Services (connection oriented), initiated by a terminal application with an example dialog in the service center

Illustration 2.2.1-4 presents a communication sequence that goes beyond the API interface (application <-> base function). It shows the dependencies involved with special emphasis on the TASP4 end-to-end protocol. The dialog sequence in the base terminal is strictly defined while the center sequence is to be understood as an example.

**Scope of Functions:**

- **Standardization:** TASP4 is a modified HDLC protocol in full duplex operation. It works in Balanced Mode.
- **Application:** Only applications that work with a connection oriented transmission (Bearer Services) can employ the transport protocol TASP4. It cannot be used with the Short Message Service.
- **Multiplex:** Multiplex (several users have access to the same TASP4 unit at the same time) is performed by a function located above the transport level. The TASP4 header does therefore not include any address information.
- **Connection Control:** The connection control includes those elements of the protocol which deal with a secure establishment and termination fo the end-to-end connection.
- **Acknowledged Information Transfer:** The positive acknowlegement mechanism with time check guarantees that the packets reach the receiver securely. Packets that are not acknowledged will be sent again.
- **Unacknowledged Information Transfer:** Unacknowledged Information Transfer via datagrams is employed by Broadcast and other simplified procedures.

- **Flow control**: This is secured by the usual means (i.e. window, RNR).
- **Error control:** CRC-16 is responsible for the protection of the data transfer.
- **Priority:** Since there is only one user, no facility for priority handling has been implemented at transport level. Priority handling is dealt with on the application level, for example by terminating one connection (DISC) in order to establish another of higher priority (SABM).
- **Line Oriented Transmission Links:** Transfer via line oriented transmission links is made possible by packet assembly (Begin-Flag + Length indicator).
- **Transparence:** Byte limits have to be adhered to; however, it is not recommended to cram bits, but to achieve transparence with the help of a length indicator.
- **Segmentation:** Long messages can be split up into several segments, transmitted separately and put together again by the receiver. The maximum length of one segment is dependant on the Bearer Service.
- **Message Order:** We assume that the order of the messages will not be changed during transmission. This applies to both line oriented transmission (BS24) and connection oriented transmission via X.25 [7].

The message sequence and the Service Primitives of the TASP4 protocol are described in appendix 3.

### 2.2.2 Base Functions in the Subsystem Location

One common feature of many traffic telematics applications is the necessity to locate the vehicle. The Global Positioning System (GPS) forms the technical basis for the subsystem location. However, the subsystem has been designed in a way that allows the use of other location procedures. This means that if other location systems will be developed in the future, they can be implemented into the system. The functional architecture of the system is transferable on the condition that modified function commands are added. All the base functions of the subsystem location are based on a continuous position determination by the GPS receiver.

In particular, the subsystem location contains the following base functions:

1. Base Function GPS Base Data
2. Base Function Geometry
3. Base Function Approximation
4. Base Function Waylength
5. Base Function Waypoint

The following illustration 2.2.2-1 shows the functional architecture of the subsystem location

Illustration 2.2.2-1: Functional Architekture of the Subsystems Location

The base functions described in this part form two groups: call and response. In case of the two functions GPS base data and geometry the result follows the application's request immediatly.The base function approximation runs in the background in case the GPS module does not provide GPS positions (e.g. because of signal failure or reflection) and the position has to be approximated. Other base functions can let operations run in the background when asked to do so. The results will be sent to the application that made the request at a later point.

The subsystem location does not process the priority information contained in the message's superframe (see chapter 3.2.1). Since the base functions GPS base data and geometry provide immediate results, an interruption would not make sense. Other base functions that run in the background do not use the GPS receiver exclusively, which means that a parallel processing does not cause any problems.

The localization can be supported by sensors (such as Dead Reckoning, reading of the speedometer, acceleration sensors). With Dead Reckoning the position can be determined even if there is a temporary failure of the GPS module. The availability of the location subsystem is thereby increased.

The precision of the position determination can be increased by using differential information. Differential information can be passed on in two ways: either directly to the GPS module (provided that is technically feasable) or via the API (SCI for external sources). If an application needs DGPS corrected position data, it can request differential information from the center via the subsystem communication. Correction data, coming from the center will be forwarded to the subsystem location with an appropriate message.

Since the system's processing power is limited, it is important to create an intelligent resource control system. However, this is not the subject of this specification.

**2.2.2.1 Base Function GPS Base Data**

The base function GPS base data is located right beside the interface to the GPS module. It supplies both TT applications and GPS base functions with GPS position data.

The base function GPS base data processes GPS data sets - which are supplied in different formats depending on the GPS module - and translates them into a standard data set.

On request, applications have the following data elements at their disposal:

- date and time (UTC)
- geographical latitude
- geographical longitude
- altitude (Measured Sea Level)
- Horizontal Dilution of Precision (HDOP)
- Estimated Position Error south-north direction (EPE(x))
- Estimated Position Error west-east direction (EPE(y))
- horizontal speed value
- heading
- number of satellites (those that can be used theoretically and those that are actually used)
- parameter necessary to note a change of constellation of the relevant satellites
- Type of Position (TOP)
- receiver specific data
- Pseudorange Data und Pseudorange Rate

There are always more data elements than an application actually needs. Each application chooses the elements it needs with the help of a bitmap and then puts in a request for these elements only. If several TT applications request different data elements, the whole set of data will be send to the application. A bitmap indicates which data the set contains.

Date and time of each measure point are determined directly by the GPS receiver's internal dial. Once every four years applications will have to pay attention to the leap second since at that point two consecutive data sets will have the same time stamp.

Geographical longitude and latitude (referring to WGS 84) of the measure point are key parameter for the position determination.

The DOP value is the ratio between the error of the receiver position and the error of the satellite position. It allows conclusions about the geometric constellation of satellites and therefore about the precision of the actual position. Of the different DOP values only the Horizontal Dilution of Precision (HDOP) will be provided, since only this value is relevant for position determination in the plain.

The Estimated Position Error is a statistical 1-sigma-value of a gaussian distribution and indicates the estimated horizontal position error, using the metrical system. It consists of two values, the position error in south-north direction (EPE(x)) and the position error in west-east direction (EPE(y)). If a receiver can only determine one EPE value, the two position errors are identical.

Speed is here defined as the horizontal speed value. The heading is the angle (in degrees) of the horizontal speed vector in northern direction (i.e. 0 degree reads "north"). The rotation goes clockwise. If the speed falls below a certain value (minimum speed), the speed is recorded as 0 m/s and the heading will appear as "invalid". The minimum speed is dependent on the type of GPS module and the existence of support sensors.

The parameters to indicate a change in satellite constellation has either the value 0 ("no change of constellation") or 1 ("change of constellation"). This parameter serves as an indicator for a change in position.

Pseudorange data contain information regarding the signal propagation time of individual satellites; with these data the differential GPS position can be calculated in retrospect.

The Type of Position (TOP)

describes how the postition is to be determined. The TOP is a bitmap and contains the following flags:

- invalid position (no current position determination necessary)
- three-dimensional autonomous position
- two-dimensional autonomous position
- three-dimensional differential position
- two-dimensional differential position
- two-dimensional position calculation with fixed height

- position generated by forward approximation
- position generated by backward approximation
- position calculated with sensor support

If the base function GPS base data is supplied with an invalid position from the GPS receiver (i.e. no current position determination is possible) the base function approximation calculates forward approximated positions and sends these data to the applications. The approximation is carried out on the basis of the last n valid positions (n ≥ 2) which have to be stored for this purpose. The minimum requirement is a linear approximation (i.e. n = 2).

As soon as valid positions are available again the base function approximation will carry out a backward approximation in order to fill the gap. These data will be passed on to the application on request.

Both forward and backward approximated positions are indicated in the TOP bitmap.

The two-dimensional position calculation can be carried out in two ways. Firstly, if there are no satellites available at any particular moment the GPS receiver will use the last valid height to determine the position. Secondly, an application can provide a height, which is then used by the GPS receiver as additional information to improve the precision of the position determination.

An application can set an altitude if it knows the exact altitude in relation to the longitude and latitude of its current position. The application sends the altitude to the base function GPS base data together with the radius of the circle surrounding its current position within which the defined altitude is still correct. The base function GPS base data checks whether the next position is still within that circle by analyzing the current speed and time step. Only if that is the case the application will pass on the altitude to the GPS receiver. This procedure is repeated with each new position. If the analysis reveals that the next position will be outside the circle, the established altitude will be deleted either by the base function or, using an appropriate message, by the application. Any conflicts in altitudes between different applications is to be solved within the base terminal. This can even lead to a situation where none of the altitudes can be used.

### 2.2.2.2 Base Function Geometry

The base function geometry contains mathematical basic functions which are put at the disposal of both other base functions and traffic telematics applications. The calculations are carried out in accordance with WGS 84.

The following mathematical functions have been implemented:

- calculation of radial distance between two positions

- calculation of longitudinal distance between two positions

- calculation of latitudinal distance between two positions

- calculation of direction angle of one position against another

The function call can take two forms:

- calculation of distance and angle of two positions which are forwarded during the call
- calculation of distance and angle of the current position in relation to another position which is determined during the call

In all these calculations it is recommended to use approximation formulas for small distances and angles which are less exact but save time in calculation.

### 2.2.2.3 Base Function Approximation

Position approximation is used in those situations where there are not enough measure points (e.g. in the case of satellite shadows or reflections). On the basis of approximated values speed and direction movement can be calculated for each aproximated position.

There are two different approximation procedures:

forward approximation in real time and
backward approximation.

The forward approximation in real time is carried out automatically and the approximated position is forwarded to the base function GPS base data. All TT applications that have requested GPS positions will be supplied with the forward approximated position without an extra request. Backward approximated positions, on the other hand, are supplied to applications on explicit request only.

As a minimum requirement the base function approximation has to be able to carry out a linear approximation. This can be done by using the polynomial procedure, described below, by assuming the degree of the polynom to be 1. The polynomial approximation is to be understood as a suggestion for an improved approximation procedure. However, other procedures can be implemented by the manufacturer.

If the base function GPS base data receives an invalid set of data, the base function approximation provides an estimated position.

First of all a forward approximation is carried through and the calculated positions are passed back to the base function GPS base data. The base function can only produce a limited number of forward approximated posititons. A maximum number has to be determined; once this maximum has been exceeded invalid data will be supplied.

The Estimated Position Error (EPE) will be calculated for each position (that goes for approximated positions as well). In the case of forward approximations the EPE value rises with each approximation.

Once the first valid position is supplied after a number of invalid positions a backward approximation will be carried out in order to fill the gap in vehicle positions. In case an application recognizes the first valid position by its TOP, it has to request the backward approximated positions from the base function approximation, if it requires these data.

Backward approximations will only be carried out, if the amount of time where no valid positions have been produced does not exceed a certain defined limit.

If the subsystem location is supported by sensors, which in case of failure of the GPS module can carry on supplying continuous positions for a certain amount of time, forward and backward approximations will not be used during that time. Approximation rouines will only be employed after the sensor position determination has been discontinued.

The following suggestion for an improved polynomial approximation procedure uses polynomial functions of the same degree for forward and backward approximation. The degree of the polynomial function can be used as a parameter and will have to be defined. For a polynomial approximation of the degree m, (m+1) positions before the gap have to be known. In order to keep the calculation as simple as possible, it is recommended to determine the degree of the polynom on a scale between 1 and 5.

### a) Forward Approximation in Real Time

After a signal failure a forward approximation of positions following the movement of the vehicle will be carried through (see illustration 2.2.2-2).

The forward approximaiton will be carried out using a polynomial function with the degree m. In order to solve the resulting equation the latest (m+1) valid positions have to be available.

In the following equations for the latitudinal coordinate x (x axis in north direction) are used as an example. An analogous procedure can be applied for the longitudinal coordinate y (y axis in east direction).

The latest (m+1) valid positions ("old positions") are:

$$x_0 = x(t_0) \qquad \text{position at point in time } t_0$$
$$x_1 = x(t_1) \qquad \text{position at point in time } t_1$$
$$\ldots$$
$$x_m = x(t_m) \qquad \text{position at point in time } t_m$$

The GPS receiver will be adjusted to a defined period of time and thereby regulates the gap between the individual points.

Illustration 2.2.2-2: Polynomial Forward Approximation

In case of a signal failure of the GPS receiver the first approximated position $x_{m-1}$ at a point in time $t_{m-1}$ can be calculated by using the polynomial formulation:

$$x = a_0 + a_1 t + a_2 t^2 + a_3 t^3 + ... + a_m t^m$$

The coefficients $a_0$, $a_1$, $a_2$,...,$a_m$ are calculated using the old positions:

$$\begin{pmatrix} x_0 \\ x_1 \\ ... \\ ... \\ x_m \end{pmatrix} = \underline{\underline{A}} \cdot \begin{pmatrix} a_0 \\ a_1 \\ ... \\ ... \\ a_m \end{pmatrix}$$

mit

$$\underline{\underline{A}} = \begin{pmatrix} 1 & t_0 & t_0^2 & ... & ... & t_0^m \\ 1 & t_1 & t_1^2 & ... & ... & t_1^m \\ ... & & & & & \\ ... & & & & & \\ 1 & t_m & t_m^2 & ... & ... & t_m^m \end{pmatrix}$$

$$\Rightarrow \begin{pmatrix} a_0 \\ a_1 \\ ... \\ ... \\ a_m \end{pmatrix} = (\underline{\underline{A}}^T \cdot \underline{\underline{A}})^{-1} \cdot \underline{\underline{A}}^T \cdot \begin{pmatrix} x_0 \\ x_1 \\ ... \\ ... \\ x_m \end{pmatrix}$$

The forward approximated positions $x_{m+1}$, $x_{m+2}$, $x_{m+3}$.... at different points in time $t_{m+1}$, $t_{m+2}$, $t_{m+3}$,... are determined by using the formulation:

$$x_i = a_0 + a_1 t_i + a_2 t_i^2 + a_3 t_i^3 + ... + a_m t_i^m \quad mit \quad i = m+1, m+2, m+3,...$$

**b) Backward Approximation**

A backward approximation will be carried through after a signal failure once the first valid position after the gap becomes available (see illustration 2.2.2-3.). The backward approximation is based on the same procedure as the forward approximation.

14

The backward approximation is carried out with the help of a polynomial function of the same degree. To solve the resulting equations both the latest m valid positions before the gap ("old positions") and the first valid position ("new postition") after the gap have to be available. The approximation procedure is the same with forward and backward approximation.

The following equations are established for the latitudinal coordinate x (x axis in north direction). The procedure is analoguous for the longitudinal coordinate y (y axis in east direction).

If the number of missing positions is *nhole,* the latest m valid positions before the gap ("old positions") and the first new valid position after the gap ("new position") are:

$$x_0 = x(t_0) \qquad \text{old position at point in time } t_n$$

$$x_1 = x(t_1) \qquad \text{old position at point in time } t_1$$

$$\ldots$$

$$x_{m-1} = x(t_{m-1}) \qquad \text{old position at point in time } t_{m-1}$$

$$x_{m+nhole} = x(t_{m+nhole}) \qquad \text{new position at point in time } t_{m+nhole}$$

The amount of time to elapse between these points (normally around one second) is determined and the GPS receiver is adjusted accordingly. The first valid position after the gap $x_{m+nhole}$ is situated exactly *(nhole+*1) time segments after the last position before the gap $x_{m-1}$

Illustration 2.2.2-3: Polynomial Backward Approximation

The first backward approximatied position of the gap $x_r$ can be calculated by using the polynomial formulation:

$$x = a_0 + a_1 t + a_2 t^2 + a_3 t^3 + \ldots + a_m t^m$$

The coefficients $a_0, a_1, a_2, \ldots, a_m$ are calculated using the valid positions:

$$\begin{pmatrix} x_0 \\ x_1 \\ \ldots \\ x_{m-1} \\ x_{m+nhole} \end{pmatrix} = \underline{\underline{A}} \cdot \begin{pmatrix} a_0 \\ a_1 \\ \ldots \\ a_{m-1} \\ a_m \end{pmatrix}$$

*mit*

$$\underline{\underline{A}} = \begin{pmatrix} 1 & t_0 & t_0^2 & \ldots & \ldots & t_0^m \\ 1 & t_1 & t_1^2 & \ldots & \ldots & t_1^m \\ \ldots & & & & & \\ 1 & t_{m-1} & t_{m-1}^2 & \ldots & \ldots & t_{m-1}^m \\ 1 & t_{m+nhole} & t_{m+nhole}^2 & \ldots & \ldots & t_{m+nhole}^m \end{pmatrix}$$

$$\Rightarrow \begin{pmatrix} a_0 \\ a_1 \\ ... \\ a_{m-1} \\ a_m \end{pmatrix} = (\underline{\underline{A}}^T \cdot \underline{\underline{A}})^{-1} \cdot \underline{\underline{A}}^T \cdot \begin{pmatrix} x_0 \\ x_1 \\ ... \\ x_{m-1} \\ x_{m+nhole} \end{pmatrix}$$

By completing the following formulation all backward approximated positions of the gap $x_m, x_{m+1}, x_{m+2}, ..., x_{m+nhole-1}$ at the points in time $t_m, t_{m+1}, t_{m+2}, ..., t_{m+nhole-1}$ can be determined:

$$x_i = a_0 + a_1 t_i + a_2 t_i^2 + a_3 t_i^3 + ... + a_m t_i^m \quad mit \quad i = m, m+1, ..., m+nhole-1$$

### 2.2.2.4 Base Function Waylength

The base function waylength contains functions which are similar to the milage indicator of the vehicle. It requests GPS data sets from the base function GPS base data and employs the base function geometry for the calculation of distances.

Distances between positions are calculated by using the longitudinal and latitudinal coordinates of the measure points. The waylength is the sum of the distances between individual positions (aerial connection). The base function includes both variations of the waylength: incrementation and decrementation.

incrementation means that the waylength meter is adjusted to zero before the start. With each new position the distance to the preceding position (aerial connection) is calculated and then added. If a certain mark has been determined by the application, the application will be informed once that mark has been passed. In addition to this, the application can request a meter reading at any time.

In the case of incrementation the applicaion can terminate the meter if it is not required any longer. Only then can the meter be started anew. If the meter has not been terminated, the base function will deactivate the meter as soon as it passes a certain maximum reading.

The decrementation is being realised as an incrementation with negative values. In this case the application determines the waylength to be covered as a negative value. With each new position the distance to the preceding position is added to this negative value. Once the meter passes the mark "0 meter", i.e. the vehicle has covered the defined waylength, a message will be send. An application can define certain marks as negative values, in which case it will be informed once that mark has been exceeded. In addition, the application can explicitly request a waylength meter reading at any time.

For example, an application requests a message when a waylength of 2000 m has been covered. Additional messages are to be sent when 200 m, 100 m and 50 m are left to be covered. For that purpose the application has to determine the overall waylength of -2000 m as well as meter marks at -200 m, -100 m and -50 m. The base function will then inform the application of a meter reading at -200 m, -100 m, -50 m, and 0 m ("waylength covered").

The waylength meter will be terminated automatically by the base function once the mark "0 meter" is passed. The meter can be terminated before that point, if the application does not require any further information. The application can terminate each meter individually or all meters at once.

In case of a failure of GPS data the current meter reading will be calculated with the help of the backward calculated positions during the time of failure. If during the signal failure one or more of the marks have been exceeded, the application will receive a message with the actual meter reading. If the whole waylength has been covered during the failure, the meter - when calculating the waylength using the positions during the failure - will continue to increment after exceeding the mark "0 meter" until the current meter reading (e.g. "+200m" for "whole waylength plus additional 200m covered"). The base function will inform the application of this meter reading and then terminate the meter.

Each application can initialize several waylength meters at the same time, to which it has to allocate logical IDs. The base function waylength will be able to recognize, which meter belongs to which application.

In addition to the waylength meters which can be initialized and terminated by an application, a global waylength meter will be established that increments in segments of one meter each. This will be initialized when the base terminal is put in operation with a value set at 0 meter and it will remain active during the entire time of operation. If the terminal is switched off and switched on again, the meter reading remains the same. Neither the base terminal nor the applications can stop or put back this waylength meter. The applications can explicitly request a current meter reading of the global waylength meter.

### 2.2.2.5 Base Function Waypoint

The base function waypoint calculates the distance between the vehicle and a certain waypoint that has been determined by an application. Each waypoint is an area with a finite extension (circle or rectangle). The size of the waypoint can be one meter or several hundreds. The application will be informed when the vehicle reaches or leaves this area and when it passes the CENTER line (normal to preferred direction through the center of the waypoint).

The base function waypoint uses the GPS position data provided by the base function GPS base data. The necessary distance calculations can be carried out by using the base function geometry.

The first variant of the waypoint, which the traffic telematics application determines, is defined by setting a center point and a radius. The second variant is a rectangle, which is defined by the application by setting the center point as well as length and width. The circle or rectangle will be framed by a hysteresis area to prevent insignificant changes in position (e.g. drift loops) from releasing a message. The hysteresis area will be determined by the application.

Moreover, the application defines a preferred direction and an aperture angle. Applications that do not want to determine a preferred direction can set the aperture angle at 360 degree. If the waypoint is defined as a rectangle, the rectangle's longitudinal axis will be put in alignment with the preferred direction (see illustration 2.2.2-4 and illustration 2.2.2-5).

Illustration 2.2.2-4: Waypoint Geometry in Case of a Circle

Illustration 2.2.2-5: Waypoint Geometry in Case of a Rectangle

For each actual position the base function calculates the distance to the center of the waypoint and compares this with the extension of the waypoint.

If the vehicle arrives at the inner area, the message "status IN" will be sent (see illustration 2.2.2-6 and illustration 2.2.2-7). In case a position momentarily changes to the hysteresis area (i.e. as a result of drift loops) and then back to the inner area, no message "status IN" will be sent.

If the vehicle crosses the CENTER line (normal to preferred direction through the center), the message "status CENTER" will be produced (see illustration 2.2.2-6 and illustration 2.2.2-7). In addition, the application will be informed whether or not the heading of the vehicle remains within the aperture cone of the preferred direction. The current heading will appear as well.

If a vehicle leaves the hysteresis area, the message "status OUT" will be released (see illustration 2.2.2-6 and illustration 2.2.2-7). In case the waypoint is deactivated by the application sending an appropriate message, the waypoint still remains activ, i.e. if the vehicle arrives at the waypoint again, the procedure described above will be repeated.

The waypoint observation will be carried out both in case of valid positions and approximated positions (forward and backward). The application will be informed - when arriving at (IN message), crossing (CENTER message) and leaving (OUT message) a waypoint - on which type of GPS positions (TOP value TOP (x), TOP (y)) the calculation is based. In particular, the application will find out whether the calculation is based on actually measured or approximated positions.

If the vehicle arrives at a waypoint and/or crosses the CENTER line and/or leaves the waypoint, the application will be informed of this later by means of an appropriate message.

All three messages ("IN", "CENTER" and "OUT") will also tell the application the time stamp of the GPS position that triggered the message as well as the distance of the position to the CENTER line. This puts the messages into a temporal and spacial context, which is of particular importance in the case of forward and backward approximated positions. If a situation occurs, where during the belated waypoint calculation with backward approximated positions the messages "IN" and "CENTER" or "IN", "CENTER" and "OUT" are reported simultaneously, further information will be provided, i.e. the TOP value, the linear approximated point in time, the heading and the distance of the GPS position that triggered the CENTER message to the CENTER line.

There will be no message if the vehicle crosses the hysteresis area only.

Illustration 2.2.2-6: Example of vehicle crossing a circle:

Point 1:    Vehicle arrives at inner area, message "status IN"
Point 2:    Vehicle crosses the normal to preferred direction, message "status center" and "heading within aperture cone of preferred direction"

Point 3:     Vehicle leaves hysteresis area, message "status OUT"

Illustration 2.2.2-7: Example of vehicle crossing a rectangle:

Point 1:     Vehicle arrives at inner area, message "status IN"
Point 2:     Vehicle crosses the normal to preferred direction, message "status center" and "heading within aperture cone of preferred direction"
Point 3:     Vehicle leaves hysteresis area, message "status OUT"

The IN message is produced when a waypoint is activated and the current GPS position indicates that the vehicle is located within the waypoint.
Each application can determine several waypoints (to which it has to allocate logical IDs) which can be processed simultaneously by the base function. The base function recognizes which waypoint belongs to which application. The application can deactivate each waypoint individually or all waypoints at once.
An application is able to set up waypoints which are activated automatically, even after the system is switched off and initialized again. This can be useful for a potential application "recording traffic data".

### 2.2.3 Base Functions of the Subsystem Access Control

The TT chipcard performs several important tasks to guarantee the smooth operation of the the traffic telematics system as a whole. These tasks include releasing new traffic telematics services, checking the authenticity of a participant, securing the communication path between base terminal and center and tolling via a local electronic purse.
The subsystem access control (Chipcard Interface Module (CIM)) can be addressed by the applications by means of the following base functions:

1. Opening of a chipcard application
2. Transparent command and data transfer
3. Closing of a chipcard application

The base functions do not include additional functions such as activating and deactivating the chipcard.
The base functions listed above allow a communication between the applications situated in the terminal and the Chipcard Interface Module (CIM), without the applications having to know the chipcard's operating system. It follows that on the one hand different applications can use their own, specially developed chipcard. On the other hand it is possible to employ a multi-functional IntraGSM chipcard that allows access to numerous traffic telematics applications.
The Chipcard Interface Module can in principle be employed by several applications at the same time.

### 2.2.3.1 Opening of a Chipcard Application

In order to open a chipcard application in the CIM this base function needs an application identifier (aid). If this chipcard application has already been opened or if no such application exists, an error message will be produced. This also happens if the chipcard has not been plugged in.

### 2.2.3.2 Closing of a Chipcard Application

With the help of this base function a chipcard application can be closed. Executing this function has the same effect as resetting the card, i.e. all access conditions in use (e.g. "external authentification is carried out") will be moved back. In addition, the application of the CIM is no longer managed.

### 2.2.3.3 Transparent Command and Data Transfer

By means of this base function chipcard commands (depending on the chipcard's operating system) and data are transferred transparently to the chipcard via the Chipcard Interface Module and requested data are read off the chipcard and are passed on to the application, i.e. the CIM works as a protocol browser only.
Unexpected occurances such as removing the chipcard during an application are indicated by status messages. Information on the status of the CIM can be requested at any time (even if no chipcard application is in use).

**2.2.4 Base Functions of the Subsystem Input/Output**

Input/output functions are required to operate the base terminal. These are necessary both in order to gain access to the traffic telematics applications and for the administration of the base terminal. It is recommended that the number of input/output units are kept to a minimum. Moreover, it has to be possible to implement additional input/output devices, depending on the requirements of the individual applications. Such external input/output devices can be connected via the SCI and can be employed by both internal and external applications.

Furthermore, it is desirable that already existing input/output units inside the vehicle can be employed as well. For example, it will be possible to use a radio supported by RDS or any other vehicle specific solutions as an input/output device. These devices will be controlled via the SCI, too, by means of API function commands. The available input/output devices have to comply with the requirements of the application regarding functionality, ergonomics and suitability for use, in order to guarantee a smooth running of the application.

Individual components of the base terminal may already possess a possibility for input and output, e.g. a GSM mobile phone may be implemented in the terminal. It is desirable to use these modules as an input/output unit. Obviously, because of the physical actuality of the device, the place where it was installed, and user ergonomics, there will be restrictions on the operation.

Technical data will have to be provided so that the different applications can gain access to the several input/output units. That is why input/output functions are combined in the base functions and are made available to the applications via the API. Internal and external traffic telematics applications can therefore employ both input/output units integrated in the terminal and external ones as well.

The user will have two functions at his or her disposal: on the one hand the output function, which allows the presentation of information on a display unit (screen, light, loudspeaker) and on the other hand the input function, which support the entry of data via an input unit (keyboard, arrow keys, control button). An interpreter intervenes in order to guarantee a unified address of the unit even if some of the input/output units are more convenient than others. The architecture of the subsystem input/output, consisting of input/output unit and interpreter, is shown in illustration 2.2.4-1.

Illustration 2.2.4-1: bock switching illustration of the subsystem input/output with interpreter

Illustration 2.2.4-2: Possible realization of input/output unit

As shown in illustration 2.2.4-2, the input/output unit can consist of different display elements, loudspeakers etc., all of which are accessible by using API commands.

One or more input/output units can be controlled by the base functions or by the applications either directly or via the SCI.

The functional architecture of the input/output subsystem is shown in illustration 2.2.4-2.

Illustration 2.2.4-3: Functional architecture of the subsystem input/output

There are two base functions incorporated in the subsystem input/output ("display information" and "receive input"). These can be used to gain access to the input/output device (see illustration 2.2.4-3).

**2.2.4.1 Base Function "Display Information"**

Each traffic telematics application has different requirements regarding the presentation of information. These includes the presentation of graphics, text and symbols, sometimes in connection with acoustic signals and information. Depending on the applications' requirements, it has to be possible to use output devices in the form of simple line displays, graphics displays and displays of external equipment (such as radio supported by RDS, meters etc.). A universal solution is therefore required to allow the presentation of information by means of different kinds of displays. For this purpose a set of different types of information will be defined. If an information is to be displayed, the interpreter will be informed of the type of information and the data that have to be presented. The interpreter then decides which format will be used to display the information.

Moreover, information can be represented in strings in order to allow future applications access to the display that cannot be considered at the time the interpreter is being developed. It has to be taken into account that as a minimum requirement a line display with eight lines (e.g. radio supported by RDS) has to be implemented. The string to be presented has to consist of a format of n*8 characters for the static display. A header will be placed before the string, which can be used by the application to inform the input/output unit of its formatting requirements. Again the interpreter of the display will decide on the format of presentation for the string. For the representation of longer strings the interpreter provides a "running text function"; this function has to be supported by the display ("soft scrolling").

If an application wants to present information on the display of the input/output unit, it will transfer this information to the subsystem input/output. Two timers will be added to this message: the first timer indicates for how long the information is supposed to appear on the display (t_dur); the second timer determines the maximum amount of time after which the display of information has to take place (t_queue).

The subsystem input/output confirms the reception of the message. If the requested display is available and if the information can be displayed for a certain time t_dur, the subsystem input/output will confirm the completion of the display request.

Since several applications (e.g. internal/external applications, peripheral equipment and user instruction in case a radio supported by RDS is used as an input device) have access to the same display, it has to be possible to give preference to more urgent messages. Variable priorities are therefore assigned to the different types of information, which can change according to the current display status.

An information of low priority cannot interrupt a display of a higher priority. In this case the low priority information waits in the queue. If the display becomes available during the maximum amount of time t_queue allowed for the display of the low priority information, the information will be displayed; otherwise the information will be rejected and an appropriate message will be sent to the application. The application then decides whether it wants to renew its request to display the information. In this case the application has to store the most recent information it wants to display.

An information of high priority can interrupt a current display with a lower priority and will be displayed immediatly. The low priority information again waits in the queue. Once the display of the high priority information is completed, the interrupted information will be restored, provided the maximum amount of time t_queue allowed for the display of the low priority information has not been surpassed. Otherwise the interrupted display will not be restored and the application will be informed of this. Again the application can renew its request to display the information if it decides to do so.

If a display is to be interrupted, it still has to make sure that the information appears for a certain minimum amount of time. The precise sequence of events is described in chapter 32.6. below.

### 2.2.4.2 Base Function "Receive Input"

The input function, too, can be used universally with the help of an interpreter, because differen variants of operating elements have been implemented. As in the case of the display medium a distinction has to be made between input devices that fulfill the minimum requirements and those that provide optimum support for complex applications. The minimum requirements for an interactive operation of the input/output unit, where at the very least numbers and letters can be entered, will have to be specified at a later point.

Input devices are necessary for two reasons. Firstly, applications need inputs by the user. In this case the application asks the user (via the display medium or acoustically) to enter information. Secondly, the user can take the initiative and make an input (e.g. choice of menu guide), which the subsystem input/output passes on to the appropriate application.

Has the input been requested by the application, the subsystem input/output can tell where to transfer the information from the sender's address. Has the user initiated the input, the information can only be sent to those applications that are known to the interpreter (by definition or because the application has been registered). Depending on the availability of input/output units the subsystem input/output provides a suitable user guide for inputs initiated by the user; it also controls user requests and follows user commands. Depending on how the devices are actually implemented, the user will be able to see all available applications on display before deciding on a menu.

If an application receives the message "menu" it will transfer all menu items of its main menu (if available) to the subsystem input/output. This procedure is necessary, because otherwise a selection of menu items cannot be presented conveniently on a larger display. Like the other input requests the menu items will be transferred as defined types of information. Moreover, it is possible to transfer one or more menu item as a sequence of ASCII characters. Has the user decided on one item, the number of the submenu will be sent to the chosen application as the input result. The application then transfers all menu items of the submenu (if available) to the subsystem input/output. This procedure will continue until the user has reached the lowest menu level, has decided on one menu item or has called off the menu guide.

If an application wants to ask the user to make an input, it has to occupy the input medium. If the medium is available and has not already been occupied by another application, it will be occupied by the subsystem input/output on behalf of the application making the request, i.e. it is not available any longer for input requests by other applications. The application then sends an input request to the subsystem input/output, which will be indicated to the user either optically or acoustically. The data input by the user is transferred to the application. Once the interaction between user and application has been completed, the input medium is released by the application.

A situation may occur where the input medium is already occupied either by an application requesting or a user initiating an input. All input requests have the same medium priority, i.e. an input request cannot be interrupted by another. If the input medium is occupied, the application receives a negative message. It is then up to the application to repeat the input request at a later point.

Input requests can be interrupted by output requests of a higher priority. If that happens it is the responsibility of the subsystem input/output to store the input request and the information that the user has entered up to that point for the duration of the disruption. If the priority of the output request changes and falls below that of the input request, the stored input request is presented again. Input and output requests are treated differently because it is important that the inputting procedure can be interrupted if high priority information have to be displayed (e.g. incoming traffic data) while in the case of input requests disruptions would only confuse the user.

Again it is important to make sure that the information is displayed for a certain minimum length of time, even in the case of interruptions. Moreover, each change of information on the display has to be ergonomically sensible and easily recognizable by the user.

The precise sequence of events is described in chapter 3.2.6 below.

### 2.2.5 General Functions Routing + System Control

### 2.2.5.1 Routing

Routing is a central function of the base terminal. It links the API interface with the base functions. It performs the tasks of the distribution of information in the following directions:

- from applications to base functions

- from base functions to applications

- between applications

- between base functions

The different applications have joint access to the base functions, which is why access to the base functions has to be coordinated.

### Routing from application services to base functions

All messages by the application services are passed on to the appropriate base functions. The address of the base function is contained in the header of the superframe which is passed on via the API interface (see chapter 3.2.1).

If an application tries to gain access to a faulty component of the terminal, it will receive an error message issued by the system control.

### Routing from base functions to application services

Information that has to be transferred from the base functions to the application services include:

- information generated by the base functions themselves

- incoming information from external centers (in the subsystem communication)

- data entered by the user or initiated by the application (in the subsystem input/output)

Routing is carried out by means of an internal allocation of addresses; its function is to evaluate and pass on source and destination addresses in the superframe of a message (see chapter 3.2.1).

If the routing function receives a message from a service center via a GSM module, it has to evaluate the Application Service Identifier (ASI) contained in the message (the ASI is the same for all the service centers and terminal applications) and determine the appropriate destination address in the terminal in order to pass the message on. In the case of a message being transferred from a terminal application to a service center, the procedure is the same, i.e. the message contained in the ASI has to be evaluated in order to pass the message on to the correct center.

### Routing between applications

If the header of the frame received via the API interface contains the address of an application identifier, the message is transferred to the application addressed. In this case the base function will not be addressed.

**Routing between base functions**

It is possible in principle to exchange messages between base functions. For example, status information regarding the GSM module (e.g. signal strength) can be transferred directly to the subsystem input/output.

**2.2.5.2 System Control**

To operate the base terminal functions are necessary that run independently from the traffic telematics applications. These functions are:

- initialization of system

- initialization and control of applications

- guidance and control of status (hardware and software)

- built-in test and diagnosis

- power management (worm start, cold start, power down, emergency shutdown)

- software versions management

- error management
  The majority of functions will be implemented by the manufacturer in accordance with the terminal structure. The base functions for this complex of functions have as yet to be described in detail.

**Error Management**

The error management covers all measures that are taken to recognize, record and correct errors and to inform the user. It includes status request and status control of hardware, base functions and applications. Furthermore, once errors are recognized measures will be taken, if possible, to correct them (e.g. reset and restart).
The watchdog supervises all applications that have been registered and, if necessary, resets them.

**Keeping an error protocol**

A base function is to be implemented in order to record errors which occur in the base terminal.
If an error is discovered the base function is informed. When addressing the base function parameters will be transferred, which will be filed into the error protocol.
Possible parameter are

- time stamp,
- error code,
- error classification,
- faulty component (hardware unit, software module) and
- measures introduced to correct errors.
  The error log book can be read by a service point. Data are transferred via the SCI (Standard Communication Interface).
  The mechanisms and parameter of the error protocol are yet to be determined.

**2.2.6 Priority Management**

Priority management becomes necessary whenever more than one application requires access to the same resource. Besides the system's internal resources such as memory and computing time the applications also need access to the base functions. The management of internal resources is undertaken by the operating system and will receive no further consideration in this specification.
The concept for this system is based on the premise that applications should have independent access to the base functions and that several applications should be able to use these functions at the same time. Certain requirements have to be fulfilled in order to create such a system (e.g. multitasking systems and applications).

The priority management guarantees that in the case of high priority base function calls existing allocations of resources within the system can be adjusted to meet the demands of the current situation.

Base functions that regulate the access to resources are subjected to the priority management. Resources to be considered are

- the subsystem communication,
- the subsystem access control,
- the subsystem input/output,
- the Standard Communications Interface (SCI).

The subsystem location is not subjected to the priority management.

The priority management can be implemented either individually for each resource or centrally for all base function calls together, depending on factors such as software design and realization, operating system. However, this cannot and should not be specified at this point.

Regulations will have to be set up to make sure that only certain high priority applications are allowed to run. Furthermore, applications which are connected via the SCI have to follow these rules as well.

### 3 Application Programming Interface (API)

### 3.1 Overview

The Application Programming Interface (API)[1] is an open interface, accessable and useful for every provider which conforms to the API specification. The API allows the implementation of today's and future applications. Applications can be manufacturer specific integrated as a part of the IntraGSM base device to create a cost-efficient device. Nevertheless, the base device has to be equipped with a powerful interface conforming to API specifications tc serve applications made by other suppliers. The API supports the following communication interactions:

1. from the subsystems of the base device to the application modules
2. from the application modules to the subsystems of the base device
3. from the service centers to the application modules (via subsystem communication)
4. from the application modules to the service centers (via subsystem communication)
5. between application modules of the same manufacturer as well as between application modules of different manufacturers (i. e. the waypoint algorithm is used jointly by the application modules dynamic route guidance and floating car data acquisition).

[1]The API should not be changed by mistake with the GSM API.

Besides the software interface a universial cost-efficient hardware interface, the Standard Communications Interface (SCI), is specified. The SCI expands the facilities (for processing and functions of the base device configuration by adding further services.

The base functions of the different subsystems are initialised by API calls that are defined in the following sections as "messages". These calls have a special frame structure which is called API Super Frame Structure.

### 3.2 API Frame Structure

The super frames are used for data exchange between the applications and the base functions and among each other. The super frames contain the messages to be transferred via the API. All super frames consist of a header and a message. All frames have the same header structure generated either by an application or by a base function. Each message has a general structure with a set of parameters depending on the messagetype.

### 3.2.1 Super Frame structure

General structure:

**<SRC>, <DEST>, <TRANS_NO>, <PRIO>, <TIME>, <message>**

Description:

<table>
<tr><td><SRC>:</td><td>the identifier of the **source** of the super frame. It indicates the application or the base function initiating the transfer of the super frame.</td></tr>
<tr><td><DEST>:</td><td>the identifier of the **destination** of the super frame. It indicates the application or the base function that is to receive the super frame.</td></tr>
<tr><td><TRANS_NO>:</td><td>the **transaction number** is a serial number. It is used within responses for unique reference to a command previously received. Furthermore, it is useful when several applications use one GSM connection line (multiple access).</td></tr>
<tr><td><PRIO>:</td><td>the **priority indicator** in a super frame. It has to be evaluated by the priority management to solve conflicts in case of concurrent access to the same base function. The priority indicator is not evalued in messages from base functions towards the applications. Further on it is not evalued in messages related to the Subsystem Location.</td></tr>
<tr><td><TIME>:</td><td>a **time stamp,** that is used e.g. for time dependent change of priority level or watchdog function.</td></tr>
<tr><td><message>:</td><td>the **message** shall be transferred via API and processed at the addressed application or base function. The message is structured individually for each module and described in separate sections.</td></tr>
</table>

The values for the super frames are defined in Annex 4.

### 3.2.2 General structure of the messages

The messages within the super frames have an individual structure.

Generally, for each message exists
**a name,**
(e.g. "cim_data_transfer_req")
**a message_id,**
a list of parameters (optional)

Each message name has a characteristic prefix:

gsm_ for **GSM** related messages
gps_ for **GPS** related messages
cim_ for **Chipcard Interface** Module related messages
io_ for **Input/Output** related messages

Each message name has a characteristic postfix:

_req for **requests**
_res for **responses** (i.e. answers to a request)
_con for **confirmations** (e.g. as intermediate response)
_ack for **acknowledgement** (when a request has been executed)
_ind for **indications** (i.e.spontaneous event indication)
_rej for **rejects** (e.g. by the priority management)

General structure of the message:

**<msg_id>, [<par_1>, [< par_2>, ...[<par_n>]]]**

Description:

<msg_id>: the unique identifier of the message. It is proposed to be a byte value.
<par_x>: the parameter(s) of the message, as many as needed

### 3.2.3 Messages related to the Subsystem Communication

The following sections describe the messages used to request the GSM related base functions, the responses and the unsolicited indications generated by the base functions or received by the application center.

It is recommended to use GSM devices following the GSM 07.07 [2] and the GSM 07.05 [3] standards.

A set of commands using the at-command set described with GSM-Recommendation 07.05 and 07.07 may be allowed at the API, but are not described here, e.g. the command +CPIN, that is sending a password to the GSM module, because those commands are not referred in this specification.

The GSM activities take care of the entries in the Communications Service Table that is provided by the subsystem communication. The Service Table shows, which data services are currently available and which of them are implemented in the communication device.

All messages include the prefix gsm_.... to indicate that the message parameters are fitted for the use of GSM communication. Messages for other communication devices such as inmarsat or mobitex need *to be defined* They can use exactly the same structure but may require different message parameters.

The message transfer between applications and GSM base functions is handled by following messages:

related to GSM base function gsm dialog

- gsm_open_request
- gsm_open_confirmation
- gsm_open_indication
- gsm_open_response
- gsm_data_request
- gsm_data_confirmation
- gsm_data_indication
- gsm_status_indication
- gsm_close_request
- gsm_close_confirmation
- gsm_close_indication

related to GSM base function gsm indirect AT command access

- gsm_AT_command_request
- gsm_AT_command_response

related to GSM base function gsm communication service table access

- gsm_write_service_table_request
- gsm_read_service_table_request
- gsm_ read_service_table_response

Some examples of message transfers between an application and a GSM base function are described in time sequence diagrams on the following pages.

Illustration 3.2.3-1: Time sequence diagram related to the GSM base function GSM dialog

Illustration 3.2.3-2: Time sequence diagram related to the GSM base function GSM dialog

Illustration 3.2.3-3: Time sequence diagram related to the GSM base function GSM dialog

Illustration 3.2.3-4: Time sequence diagram related to the GSM base function GSM dialog

Illustration 3.2.3-5: Time sequence diagram related to the GSM base function GSM dialog

Illustration 3.2.3-6: Time sequence diagram related to the GSM base function GSM dialog

### 3.2.3.1 Message "gsm_open_request"

| | |
|---|---|
| Message name: | "gsm_open_req" |
| Source: | application |
| Destination: | base function gsm dialog |
| Reply: | "gsm_open_confirmation" |
| Description: | This message is used by the application to initiate a communication with theservice center. In any case, wether a Bearer Service, a Short Message Service or Gerneral Packet Radio Service is used, this message is used before sending data. |

If the attempt to setup a connection is unsuccessful, the base function has to evaluate and/or forward the error causes (e. g. network error causes described in GSM TS 04.08, Table 10.86) and shall react in accordance with GSM TS 02.07.

With the receipt of this message by the base function a logical channel for communication between the application and the base function is established. A confirmation message containing the logical channel number or the possible error cause has to be sent to the requesting application. If the application wants to communicate using SMS the "gsm_open_con"-message is generated immediately after receiving the "gsm_open_req"-message. If a BS2X should be used for communication the connection to the requested service center has to be established before the "gsm_open_con"-message is sent to the requesting application.

If an error occures a "gsm_status_ind"-message is sent to the requesting application.

The message contains the *message identifier* <msg_id>, the *application service identifier* <asi>, the *communication service* <service>, the *dial number* <dial_ string>, in case of Bearer Services the parameters <speed>, <name> and <ce>. The data elements <speed>, <name> and <ce> and their possible values correspond to chapter 6.7 of GSM 07.07. In case of SMS the message contains the *SMS center address* <SMS_center_address>.

| | |
|---|---|
| Syntax: | <msg_id>, <asi>, <service>, <dial_string>, <speed>, <name>, <ce>, <SMS_center_adress> |
| Defined values: | <msg_id> *to be defined* |

<asi>: application service identifier values must be defined for all possible traffic telematics applications. As a minimum values must be defined for:

- **-**dynamic route guidance
- **-**floating car data acquisition
- **-**fleet management
- **-**traffic information
- **-**emergency break down services
- **-**vehicle theft protection
- **-**automatic tolling

<service>: service to be used for communication
recommended values are:

0 - Bearer Service (requires values for <dial_string>, <speed>, <name>, <ce>)
1 - SMS (requires values for <dial_string>, <SMS_center_address>)

<dial_string>: dial number of the requested service center

<speed>: selection of data rate and information transfer capabilities

recommended *values* (as defined in chapter 6.7 of

GSM 07.07) are:

4 - 2400 bps (V.22bis)

7 - 9600 bps (V.32)

68- 2400 bps (V.110)

71- 9600 bps (V.110)

<name>: selection of Bearer Service

recommended values (as defined in chapter 6.7 of

GSM 07.07)are:

0 - asynchronous modem

<ce>: selection of connection element

values (as defined in chapter 6.7 of GSM 07.07) possible values are:

0 - transparent

1 - non-transparent


<SMS_center_address>: dial number of the requested SMS center

### 3.2.3.2 Message "gsm_open_confirmation"

| | |
|---|---|
| Message name: | "gsm_open_con" |
| Source: | base function gsm dialog |
| Destination: | requesting application |
| Description: | This message is used to confirm that a logical channel is opened for the requesting application to send data to the service center (with a "gsm_data_req"-message). The "gsm_open_con"-message contains a <channel_no>. This <channel_no> is used by following messages to adress the logical communication channel. |
| | In case of unresolvable problems e. g. connection not established after the defined numbers of retrails the base function indicates the reason of failure with a "gsm_status_ind"-message. Consequently if no logical channel is opened, no "gsm_open_con"-message is be sent to the application. |
| Syntax: | <msg_id>, <channel_no> |
| Defined values: | <msg_id>: *to be defined* |
| | <channel_no>: identifier of the logical communication channel for the requested communication |

### 3.2.3.3 Message "gsm_open_indication"

| | |
|---|---|
| Message name: | "gsm_open_ind" |
| Source: | base function gsm dialog |
| Destination: | application |
| Description: | This message is used by the base function to indicate to the destination application that a service center wants to send data. |
| | If the service center originates a connection-oriented communication, the base function receives an identifier for the destination application. The base function opens a logical communication channel to this application and sends the channel number. The application has to confirm the message with the response message "gsm_open_res", which is transferred by the base function to the requesting service center. |
| | If a service center call using SMS is received by the traffic telematics terminal, a logical communication channel to the destination application is established by the base function as well. Again the application has to confirm with the "gsm_open_res"-message before the data are indicated by the base function. |
| Syntax: | <msg_id>, <channel_no> |

Defined values:   <msg_id>: *to be defined*

<channel_no>: identifier of the logical communication channel for the requested communication

### 3.2.3.4 Message "gsm_open_response"

Message name:                 "gsm_open_res"
Source:                               application
Destination:                       base function gsm dialog
Description:                        This message is used to confirm to the base function that the application is ready to receive a message from a service center.
Syntax:                               <msg_id>, <channel_no>
Defined values: <msg_id>:   *to be defined*
<channel_no>: identifier of the logical communication channel for the requested communication

### 3.2.3.5 Message "gsm_data_request"

Message name:     "gsm_data_req"
Source:                 application
Destination:         base function gsm dialog
Reply:                   "gsm_data_con"
Description:          With this message data to be transmitted to the service center is sent to the base function.

In case of successful transmission a "gsm_data_confimation"-message is sent to the application.

In case data can not be transferred correctly by running through the retrail mechanisms a "gsm_status_ind"-message is sent to the application.
Syntax:                 <msg_id>, <channet_no>. <data_length>, <data>
Defined values:    <msg_id> *to be defined*

<channel_no>: identifier of the logical communication channel for the requested communication

<data_length>: length of the <data> in byte

<data>: data to be sent to the service center

### 3.2.3.6 Message "gsm_data_confirmation"

Message name:     "gsm_data_con"
Source:                 base function gsm dialog
Destination:         requesting application
Description:          This message is used to confirm to the requesting application that data has been sent to the service center.

If data are transmitted using SMS a "gsm_data_con"-message is sent to the application when the transmitted message is acknowledged by the SMS service center. If data are transmitted using a connection oriented communication a confirmation of the delivery to the service center is given by the end-to-end protocol.
Syntax:                 <msg_id>, <channel_no>
Defined values:    <msg_id>: *to be defined*

<channel_no>: identifier of the logical communication channel for the requested communication

### 3.2.3.7 Message "gsm_data_indication"

Message name:     "gsm_data_ind"
Source:                 base function gsm dialog

Destination: application
Description: With this message an application is informed about a message received from a service center. The service center has originated a connection to send data to an application.

The base function receives this data of the service center and identifies the destination application. If there is already a logical channel opened to this application the data are transferred by using this channel. If there is no open channel, a channel has to be established by the base function. Using this new channel the received data are transferred to the application.

When within an existing communication a service center sends data to the terminal equipment, the base function receives this data and identifies the destination application the data has to be sent to.

If within an existing communication the destination application already has an open communication channel this channel number is part of the "gsm_data_ind"-message. If the destination application doesn't have an open communication channel a new logical communication channel is generated by the base function.

When a service center originates a connection-oriented communication the base function confirms the connection automatically and generates a logical communication channel to the destination application. After the service center has sent the data, the base function sends a "gsm_data_ind"-message to the destination application.

When a service center originates a connectionless communication the base function receives the data, generates a new logical communication channel and sends a "gsm_data_ind"-message to the destination application. A "gsm_get_data_con"-message is sent from the application to the base function for confirmation. The base function does not sent a confirmation message to the service center. Only the application has to decide if the service center needs a confirmation and has to initiate a new communication if needed.

The message contains the *message identifier* <msg_id>, the *data type* <data_type>, the *length of the following data* <data_length>, the *data itself* <data> and the *channel* number <channel_no>

Syntax: <msg_id>, <channel_no>, <data_length>, <data>
Defined values: <msg_id> *to be defined*
<channel_no>: identifier of the logical communication channel for the requested communication
<data_length>: length of the <data> in byte
<data>: data to be sent to destination application

### 3.2.3.8 Message "gsm_status_indication"

Message name: "gsm_status_ind"
Source: base function gsm dialog
Destination: application
Description: This message is used to inform the application about an error (values acc. to GSM TS 04.08 Table 10.86 and GSM TS 07.07 section 9.2) or an unexpected action occured or about a status change of the equipment.

When receiving the "gsm_ status_ ind"-message the application has to decide about the further actions.

The message contains the *message identifier* <msg_id>, the *status information* <status> and the *channel number* <channel_no> (if available)

Syntax: <msg_id>, <channel_no>, <status>
Defined values: <msg_id> *to be defined*
<channel_no>: identifier of the logical communication channel for the requested communication
<status>: status information concerning an error, an unexpected action or equipment status. possible values are defined in annex 1:
### - status information

### 3.2.3.9 Message "gsm_close_request"

Message name: "gsm_close_req"
Source: application

Destination: base function gsm dialog
Reply: "gsm_close_con"
"gsm_status_ind"
Description: This message is used by the application to close the logical communication channel between the application and the base function. A connected communication line is disconnected immediately if no other communication path (logical channel) is opened.
Syntax: <msg_id>, <channel_no>
Defined values: <msg_id> *to be defined*
<channel_no>: identifier of the logical communication channel for the requested communication

### 3.2.3.10 Message "gsm_close_confirmation"

Message name: "gsm_close_con"
Source: base function gsm dialog
Destination: application
Description: This message is used to confirm to the requesting application that the logical communication channel between the application and the base function has been closed. The communication with the service center has been terminated in case of no other communication path (logical channel) was opened.
Syntax: <msg_id>, <channel_no>
Defined values: <msg_id> *to be defined*
<channel_no>: identifier of the logical communication channel for the requested communication

### 3.2.3.11 Message "gsm_close_indication"

Message name: "gsm_close_ind"
Source: base function gsm dialog
Destination: application
Description: This message is used by the base function to indicate to an application that the communication identified by the logical channel number to the service center is terminated.
If a service center wants to disconnect a connection-oriented communication a close request is sent to the traffic telematics terminal. When the end-to-end protocoll of the base function receives this request, a confirmation is sent immediately to the service center. To indicate the disconnect a "gsm_close_ind"-message is sent to the related application. The logical channel is closed.
When within a connectionless communication no data are received for a time duration "t", also a "gsm_close_ind"-message is sent to the related application to close the logical communication channel.
Syntax: <msg_id>, <channel_no>
Defined values: <msg_id> *to be defined*
<channel_no>: identifier of the logical communication channel for the requested communication

### 3.2.3.12 Message "gsm_AT_command_request"

Message name: "gsm_AT command_req"
Source: application
Destination: base function gsm indirect AT-command access
Reply: "gsm_AT_command_res"
Description: This message is used by the application to send an AT command to a GSM base function, transparently. AT commands shall be in accordance with GSM-recommendation 07.05 and 07.07. To send a gsm_at_command_req no logical channel is requested. The command can be used parallel to opened channels.
Not all AT commands are allowed by this command. E. g. the ATD command can only be generated by the base function itself after a gsm_open_request (see annex 2[2])

EP 0 953 261 B1

| | |
|---|---|
| Syntax: | <msg_id>, <cmd_len>, <AT_command> |
| Defined values: | <msg_icb *to be defined* |
| | <cmd_len> length of the command that follows |
| | <AT_command> AT command to be sent to the base function. The set of possible commands is recommended in annex 2. |

[2] Note: Only for the here defined indirect access to the gsm module using the superframe structure some of the AT commands are not allowed. In case of direct access, e. g. by external PC or faxes any AT command can directly address the gsm device without using the gsm AT command messages and the superframe Structure.

### 3.2.3.13 Message "gsm AT_command_response"

| | |
|---|---|
| Message name: | "gsm_AT_command_res" |
| Source: | base function gsm indirect AT-command access |
| Destination: | concerned application |
| Description: | This message is used by the GSM base functions to send the response of an AT command received by the GSM module to the addressed application transparently. |
| Syntax: | <msg_id>, <data_length>, <data> |
| Defined values: | <msg_id> *to be defined* |
| | <data_length>: length of <data> in byte |
| | <data>: data to be sent by the base function |

### 3.2.3.14 Message "gsm_write_service_table_request"

| | |
|---|---|
| Message name: | "gsm_write_service_table_req" |
| Source: | application |
| Destination: | base function gsm communication service table access" |
| Description: | This message is used to writeichange the contents of the communications service table, which is under control of the base function. To send this message no logical channel is required. The command can be used in parallel to opened channels. |
| Syntax: | <msg_id>, <object>, <service>, <status>, <data> |
| Defined values: | <msg_id> *to be defined* |
| | <object> selector for <service> |
| | recommended values are: |

1 - network
2 - GSM-module
3 - subscriber
4 - call repeat counter
5 - calling line identity of service center application

<service/dial_string> selector for service or dial_string information
recommendation for requested values are:
in case of <object> value is 1,2 or 3 the availability can be set for:

-BS24
-BS26
-TS11
-TS21
-TS22
-TS23

-GPRS/PDS
-CLIP
-CLIR
-COLP
-COLR
-Call Wait

in case of <object> value is 4, the value of <service> is the dial_string for which the call repeat counter is to be set to a specific value

-dial_string for "call repeat counter"

in case of <object> value is 5, the value of <service> is the application_id for which the calling line identity is to be set.

-application-id for calling line identity

<data>: data to be written to the communication service table.
recommended values are:

-in case of <object> value is 1,2 or 3, following values are recommended

    0 - unknown
    1 - available
    2 - not available

-in case of <object> value is 4, following values are recommended
# - value of call repeat counter
in case of <object> value is 5, following values are recommended
"calling_line_identity" for service center application

### 3.2.3.15 Message "gsm_read_service_table_request"

| | |
|---|---|
| Message name: | "gsm_read_service_table_req" |
| Source: | application |
| Destination: | base function gsm communication service table access" |
| Reply: | "gsm _read_service _table_res" |
| Description: | This message is used to read data out of the communication service table, which is under control of the base function. The result is sent to the requesting application using the message gsm_read_ service_table_ind. To send this message no logical channel is required. The command can be used in parallel to opened channels. |
| Syntax: | <msg_id>, <object>, <service/dial_string> |
| Defined values: | <msg_id> *to be defined* |
| | <object> selector for <service> recommended values are: |

1 - network
2 - GSM-module
3 - subscriber
4 - call repeat counter
5 - calling line identity of service center application

<service/dial_string> requested service or dial_string information recommendation for requested values are:
in case of <object> value is 1,2 or 3 service informations can be requested for:

-BS24
-BS26
-TS11
-TS21
-TS22
-TS23
-GPRS/PDS
-CLIP
-CLIR
-COLP
-COLR
-Call Wait

in case of <object> value is 4 the call repeat counter values for a specific dial_string can be requested

-dial_string for "call repeat information"

in case of <object> value is 5 the calling line identity of a specific service center for a traffic telematics application can be requested

-application-id for request of calling line identity

### 3.2.3.16 Message "gsm-read_service_table_response"

| | |
|---|---|
| Message name: | "gsm_read_service table_res" |
| Source: | base function gsm communication service table access |
| Destination: | application |
| Description: | This message is used to send the result of a "gsm_read_service_table_req" to the requesting application. |
| | The message contains the *message identifier* <msg_id> and the *status of the requested service* <status>. If the call repeat counter of a dial_string is requested, the message also contains the *actual counter value* <counter>, the *time of the last attempt* <time> and the *release cause* <reason>. If the calling line identity of a specific service center for a traffic telematics application is requested, the message also contains *a calling line identity* <CLI>. |
| Syntax: | <msg_id>, <status>, <counter>, <time>, <reason>, <CLI> |
| Defined values: | <msg_id> *to be defined* |
| | <status>: status of the requested service possible values are: |

0 - unknown
1 - available
2 - not available

<counter>: actual value of the repeat counter
<time>: time of last attempt
possible values are:
time [hh:mm:ss]
<reason>: release cause
possible values are:
# - release causes in accordance with GSM recommendations 04.08, 07.05 and 07.07
<CLI>: calling line identity of the service center for the requested traffic telematics service.

### 3.2.4 Messages related to the Subsystem Location

In this chapter the messages related to the different GPS base functions are decribed. The message transfer between applications and GPS base functions is handled with the following messages:

related to GPS base function GPS base data:

- gps_data_start_request
- gps_data_indication
- gps_data_stop_request
- gps_send_dgps_correct_indication
- gps_data_set_height_request
- gps_data_del_height_request

related to GPS base function geometry:

- gps_geometry_request
- gps_geometry_indication

related to GPS base function approximation:

- gps_approx_data_backward_request
- gps_approx_data_backward_indication

related to GPS base function waylenght:

- gps_waylength_start_request
- gps_waylength_request
- gps_waylenght_indication
- gps_waylength_stop_request
- gps_waylength_global_request
- gps_waylenght_global_indication

related to GPS base function waypoint:

- gps_waypoint_start_request
- gps_waypoint_status_indication
- gps_waypoint_stop_request

Some examples of message transfers between an application and a GPS base function are decribed in time sequence diagrams on the following pages.

Illustration 3.2.4-1: Time sequence diagram related to the GPS base functions GPS base data and approximation

Illustration 3.2.4-2: Time sequence diagram related to the GPS base function waylength

Illustration 3.2.4-3: Time sequence diagram related to the GPS base function waypoint

### 3.2.4.1 Message "gps_data_start_request"

| | |
|---|---|
| Message name: | "gps_data_start_req" |
| Message name: | Message name: application (or other base function) |
| Destination: | base function gps base data |
| Description: | This message is used to request the GPS data sets. |
| | If the parameter <par> has the value 0, only the current GPS data set is requested. If <par> has the value 1, the current GPS data set is requested to be sent and the following every <time_diff> seconds. With the bitmap <mask> the application specifies the specific data elements of the whole GPS data set which are needed. |
| Syntax: | <msg_id>, <par>, <time_diff>, <mask> |
| Defined values: | <msg_id>: *to be defined* |
| | <par>: 0 only the current GPS data set is requested 1 the current GPS data set is requested and |

the following every <time_diff> seconds

<time_diff> time duration between two requested GPS data sets

<mask> bitmap that indicates the specific data elements which are requested by the application. The whole GPS base data set contains the elements:

date,

time (UTC),

geographic longitude,

geographic latitude,

height (Measured Sea Level),

Horizontal Dilution of Precision (HDOP),

Estimated Position Error in direction south-north (EPE(x)),

Estimated Position Error in direction west-east (EPE(y)),

absolute horizontal velocity,

heading (0 degrees=north, clockwise), number of theoretically visible satellites, number of satellites that are regarded for the position calculation,

indicator for a change of satellite constellation (0=no change of constellation,

1=change of constellation),

Type Of Position (TOP),

specific data of receiver,

pseudorange data,

pseudorange rate

### 3.2.4.2 Message "gps_data_indication"

| | |
|---|---|
| Message name: | "gps_data_ind" |
| Source: | base function gps base data |
| Destination: | application (or other base function) |
| Description: | This message is used to send the specific data elements <data_set> of the current GPS data set which are requested by the application(s). |
| | The positions of the current GPS data set could either be valid positions measured by the GPS receiver or forward approximated positions of the base function approximation. The specific data elements that are sent are chosen by the requesting application (see message "gps_data_start_req") and indicated by the bitmap <mask>. |
| | If more than one application request data elements of the GPS data set, all requested data elements are sent to all applications by this one message. The specific data elements that are sent are indicated with the bitmap <mask>. Each application needs to select those data elements that it has requested. |
| | If the parameter <par> of the message "gps_data_start_req" has the value 1, also the data elements of the following GPS data sets, specified by the bitmap <mask>, are sent every <time_diff> seconds. |
| Syntax: | <msg_id>, <mask>, <data_set> |
| Defined values: | <msg_id>: *to be defined* |
| | <mask> bitmap that indicates the specific data elements of the whole GPS data set that are sent. |
| | <data_set>: specific data elements of the whole GPS data set indicated by the bitmap <mask> |

### 3.2.4.3 Message "gps_data_stop_request"

| | |
|---|---|
| Message name: | "gps_data_stop req" |
| Source | : application (or other base function) |
| | Destination: base function gps base data |
| | Description: This message is used to stop the transfer of the GPS data sets. If there are other applications still requesting GPS data sets, they are served until they send this message, too. |
| | Syntax: <msg_id> |
| | Defined values: <msg_id>: *to be defined* |

### 3.2.4.4 Message "gps_send_dgps_correct_indication"

| | |
|---|---|
| Message name: | "gps_send_dgps_correct_ind" |
| Source: | base function gsm dialog or application |
| Destination: | base function gps base data |
| Description: | If an application can provide for correction data (DGPS) this message is used to send the differential data for DGPS positions (in format RTCM) to the base function gps base data. |
| Syntax: | <msg_id>. <dgps_data> |
| Defined values: | <msg_id> *to be defined* |
| | <dgps_data>: differential data for DGPS positions (in format RTCM) |

### 3.2.4.5 Message "gps_data_set_height_request"

| | |
|---|---|
| Message name: | "gps_data_set_height_req" |
| Source: | application (or other base function) |
| Destination: | base function gps base data |
| Description: | If an application knows the exact height of the current GPS position, it is able to provide the exact height with this message. In addition the application sends the radius of the circle around the current position in which the fixed height is still exact. |
| | The base function GPS base data checks by evaluating the current velocity and the time step if the following position is still inside the circle. If so it fixes this height at the GPS receiver that is now able to generate a more accurate GPS position with this additional information. |
| | With every new GPS data set this check is repeated. If the next position is outside the circle the base function deletes the fixed height at the GPS receiver. Also the application can delete the fixed height with the message "gps_data_deLheight_req". |
| | The fixed height is indicated to all applications that request GPS data sets with the Type Of Position (TOP). |
| Syntax: | <msg_id>, <height>, <radius> |
| Defined values: | |
| | <msg_id>: *to be defined* |
| | <height>: fixed height |
| | <radius>: radius of the circle around the current position in which the fixed height is exact. |

### 3.2.4.6 Message "gps_data_del_height_request"

| | |
|---|---|
| Message name: | "gps_data_del_height_req" |
| Source: | application (or other base function) |
| Destination: | base function gps base data. |
| Description: | With this message the application that has fixed the height of the GPS position deletes the fixed height. |
| Syntax: | <msg_id>, <height> |
| Defined values: | <msg_id>: *to be defined* |
| | <height>: fixed height that has to be deleted |

### 3.2.4.7 Message "gps_geometry_request"

| | |
|---|---|
| Message name: | "gps_geometry_req" |
| Source: | application (or other base function) |
| Destination: | base function geometry |
| Description: | This message is used to request the distance or angle between two positions. |
| | With the bitmap <calc> the calculation of the radial distance, the longitudinal distance, the latitudinal |

distance and/or the angle between the two positions can be requested.

If the parameter <pos> has the value 2, the two positions are given by the application. If the paramter <pos> has the value 1, one position is given by the application and the other one is the current position.

Syntax:             <msg_id>, <calc>, <pos>, <position>

Defined values:

<msg_id>: *to be defined*

<calc>: bitmap that indicates the reqested calculations. The following calculations are possible:

radial distance,
longitudinal distance,
latitudinal distance,
clockwise angle between the two positions
related to north

<pos>: 2 two positions are given by the application:
<position>:
long1 Longitude of position 1
lat1 Latitude of position 1
long2 Longitude of position 2
lat2 Latitude of position 2
<pos>: 1 one position is given by the application,
the other one is the current position:
<position>: long1 Longitude of position 1
lat1 Latitude of position 1

### 3.2.4.8 Message "gps_geometry_indication"

Message name:    "gps_geometry_ind"
Source:            base function geometry
Destination:      application (or other base function)
Description:      This message is used to send the result(s) of the distance and/or angle calculation(s) between two positions, which was requested by the message "gps_geometry_req".
Syntax:             <msg_id>, <calc>, <result_data>
Defined values:   <msg_id>: *to be defined*
                       <calc>: bitmap that indicates the result(s) of the calculation(s)
                       <result_data>: result(s) of the distance and/or angle calculation(s) (see message "gps_geometry_req")

### 3.2.4.9 Message "gps_approx_data_backward_request"

Message name:    "gps_approx_data_backward_req"
Source:            application (or other base function)
Destination:      base function approximation
Description:      After receiving forward approximated or invalid positions and then the first new valid position, an application can request the backward approximated positions of the gap with this message.
                       With the bitmap <mask> the application specifies the specific data elements of the whole GPS data set which are needed.
Syntax:             <msg_id>, <time_diff>, <mask>
Defined values:

<msg_id>: *to be defined*
<time_dif> time duration between two requested GPS data sets
<mask> bitmap that indicates the specific data elements which are requested by the application.

The whole GPS base data set contains the elements:

date,
time (UTC),
geographic longitude,
geographic latitude,
height (Measured Sea Level),
Horizontal Dilution of Precision (HDOP),
Estimated Position Error in direction south-north (EPE(x)),
Estimated Position Error in direction west-east (EPE(y)),
absolute horizontal velocity,
heading (0 degrees=north, clockwise),
Type Of Position (TOP),
specific data of receiver

### 3.2.4.10 Message "gps_approx_data_backward_indication"

| | |
|---|---|
| Message name: | "gps_approx_data_backward_ind" |
| Source: | base function approximation |
| Destination: | application (or other base function) |
| Description: | With this message the base function GPS base data sends a number of N_pos backward approximated positions of the latest gap to the application. |
| | The specific data elements that are sent are chosen by the requesting application (see message "gps_approx_data_backward_req") and indicated by the bitmap <mask>. |
| Syntax: | <msg_id>, <mask>, <time_diff>, <N_pos>, |
| | <data_set_1 ;data_set_2; ... ;data_set_N_pos> |
| Defined values: | <msg_id>: *to be defined* |
| | <mask> bitmap that indicates the specific data elements of the backward approximated GPS data sets. The bitmap is valid for each of the data sets. |
| | <time_diff> time duration between two requested GPS data sets |
| | <N_pos>: number of backward approximated positions that are sent |
| | <data_set_1;data_set_2;... :data_set_N_pos>: the backward approximated data sets that are sent. Each data set contains the specific data elements that are indicated by the bitmap <mask>. |

### 3.2.4.11 Message "gps_waylength_start_request"

| | |
|---|---|
| Message name: | "gps_waylength_start_req" |
| Source: | application (or other base function) |
| Destination: | base function waylength |
| Description: | This message is used to reset the waylength counter on the value "0 meters" for incrementation or on a fixed waylength (as a negative value) that should be covered for decrementation (realized as incrementation of negative values). |
| | The application chooses counter marks <val_1, val_2,...,val_n> so that an indication is sent if a mark is exeeded. |
| | I.e. the fixed waylength that should be covered is 2000 m, and indications should be sent if there are 200 m, 100 m and 50 m of the whole waylength left to cover. Then the application sets <start_val>= <-2000m> and <val_1, val_2, val_3, val_4> = |
| | < -200m, -100 m, -50m, 0m> in this message to get an indication at these points. |
| | The application sets a counter ID. The base function retains which waylength counter belongs to which application. |
| | The waylength calculation must be stopped by the application with the message "gps_waylength_stop_req". Only after this stop the waylength counter can be resetted. |
| | The waylength counter is stopped automatically by the base function if it crosses the counter value "O meters". It is stopped at a fixed maximum value, too. |

Syntax: <msg_id>, <counter_id>, <start_val>, <n>, <val_1, val_2,...,val_n>
Defined values:

<msg_id>: *to be defined*
<counter_id> counter ID set by the application
<start_val> start value of the waylength counter. It is 0 meters for incrementation or a fixed waylength as a negative value for decrementation.
<n>: number of counter marks
<val_1, val_2,...,val_n>: counter marks

### 3.2.4.12 Message "gps_waylength_request"

Message name: "gps_waylength_req"
Source: application (or other base function)
Destination: base function waylength
Description: This message is used to request the current counter value of the counter with the counter ID <counter_id>.
Syntax: <msg_id>, <counter_id>
Defined values: <msg_id>: *to be defined*
<counter_id> counter ID

### 3.2.4.13 Message "gps_waylength_indication"

Message name: "gps_waylength_ind"
Source: base function waylength
Destination: application (or other base function)
Description: This message is used to send the current counter value of the counter with the counter ID <counter_id>. The message is sent after the request "gps_waylength_req" or if the current counter value has crossed one of the marks <val_1, val_2, ..., val_n> of the message "gps_waylength_start_req".
Syntax: <msg_id>, <counter_id>, <counter_value>
Defined values:

<msg_id>: *to be defined*
<counter_id> counter ID
<counter_vatue>: the current counter value

### 3.2.4.14 Message "gps_waylength_stop_request"

Message name: "gps_waylength_stop_req"
Source: application (or other base function)
Destination: base function waylength
Description: This message is used to stop the waylength counter. If the parameter <par> has the value 1, only the waylength counter with the counter ID <counter_id> is stopped. If the parameter <par> has the value 0, all waylength counters set by the application are stopped.
Syntax: <msg_id>, <par>, (if <par>=1: <counter_id>)
Defined values: <msg_id>: *to be defined*
<par>

0 all waylength counters set by the application are stopped
1 the waylength counter with the ID <counter_id> is stopped
<counter_id>: counter ID

### 3.2.4.15 Message "gps_waylength_global_request"

Message name: "gps_waylength_global_req"
Source: application (or other base function)
Destination: base function waylength
Description: This message is used to request the current counter value of the global waylength counter.
Syntax: <msg_id>
Defined values: <msg_id>: *to be defined*

### 3.2.4.16 Message "gps_waylength_global_indication"

Message name: "gps_waylength_global_ind"
Source: base function waylength
Destination: application (or other base function)
Description: This message is used to send the current counter value of the global waylength counter.
Syntax: <msg_id>, <global_counter_value>
Defined values:

<msg_id>: *to be defined*
<global_counter_value>: the current counter value of the global waylength counter

### 3.2.4.17 Message "gps_waypoint_start_request"

Message name: "gps_waypoint_start_req"
Source: application (or other base function)
Destination: base function waypoint
Description: This message is used to initialize the base function "gps_waypoint" by sending the waypoint data.
If the parameter <geom> has the value 1, the data of a circle are sent (longitude and latitude of the circle center, radius, hysteresis, preferred direction (0 degrees=north, clockwise) and aperture angle of preferred direction).
If <geom> has the value 2, the data of a rectangle are sent (longitude and latitude of the rectangle center, length and width of the rectangle, hysteresis, preferred direction (0 degrees=north, clockwise) and aperture angle of preferred direction).
The application sets a waypoint ID. The base function retains which waypoint(s) belongs to which application.
The waypoint calculation is stopped by the application with the message "gps_waypoint_stop_req". With the parameter <status> the application can make the waypoint stay active even if the system is turned off and is newly initialized.
Syntax: <msg_id>, <wayp_id>, <geom>, <waypoint_data>, <status>
Defined values:

<msg_id>: *to be defined*
<wayp_id> waypoint ID set by the application
<geom>: geometry of the waypoint:
<geom>=1: circle
<geom>=2: rectangle
<waypoint_data>: waypoint data:
<geom>=1: "circle": longitude and latitude of circle center, radius, hysteresis, preferred direction (clockwise, 0 degrees=north), aperture angle of preferred direction
<geom>=2: "rectangle": longitude and latitude of rectangle center, length and width of rectangle, hysteresis, preferred direction (0 degrees=north, clockwise) and aperture angle of preferred direction.
<status>:

0 waypoint calculation is active only during current operation

1 waypoint calculation stays active even if the system is turned off and newly initialized

### 3.2.4.18 Message "gps_waypoint_status_indication"

| | |
|---|---|
| Message name: | "gps_waypoint_status_ind" |
| Source: | base function waypoint |
| Destination: | application (or other base function) |
| Description: | First this message is used to indicate the arrival of the inner area of the waypoint (<status>=1). Second it indicates if the car crosses the CENTER line (normal line to the preferred direction throught the waypoint center) (<status>=2). With this status it is indicated wether the heading of the car is along the preferred direction (that is inside the aperture cone of preferred direction) (<par_heading>=1), or not along the preferred direction direction (that is outside the aperture cone of preferred direction) (<par_heading>=0). Also the current heading <heading> is sent. Third the departure of the hysteresis area heading outside the waypoint is indicated (<status>=3). Fourth in case of backward approximated positions it is indicated that the car has arrived at the inner area of the waypoint and has crossed the CENTER line (<status>=4). With this status it is indicated wether the heading of the car has been inside the aperture cone of the the preferred direction (<par_heading>=1), or outside the aperture cone of the preferred direction (<par_heading>=0). Also the heading <heading> at that time is sent. Fifth in case of backward approximated positions it is indicated that the car has arrived at the inner area of the waypoint, has crossed the CENTER line and has left the hysteresis area heading outside the waypoint (<status>=5). With this status it is indicated wether the heading of the car has been inside the aperture cone of the the preferred direction (<par_heading>=1), or outside the aperture cone of the preferred direction (<par_heading>=0). Also the heading <heading> at that time is sent. The Type Of Position (<top(x), top(y)>) of the related GPS position, the time (<time>) of this position and the distance (<dist>) of this position to the CENTER line (normal to the preferred direction throught the waypoint center) is sent with the message. In case of status 4 and 5, the TOP (<top(x), top(y)>), the time (<time>), the CENTER line distance (<dist>), the parameter <par_heading> and the heading (<heading>) of the GPS position, on which the CENTER-message is based, is sent. |
| Syntax: | <msg_id>, <wayp_id>, <status>, <top(x), top(y)>, <time>, <dist>, (if <status>=2, 4, 5: <par_heading>, <heading>) |
| Defined values: | <msg_id>: *to be defined* |
| | <wayp_id>: waypoint ID |
| | <status>: |

1 "IN": arrival at the inner area of the waypoint

2 "CENTER": crossing the CENTER line (normal line to the preferred direction throught the waypoint center)

3 "OUT": departure of the hysteresis area heading outside the waypoint

4 in case of backward approximated positions: car has arrived at the inner area of the waypoint and has crossed the CENTER line

5 in case of backward approximated positions: car has arrived at the inner area of the waypoint, has crossed the CENTER line and has left the hysteresis area heading outside the waypoint

<top(x), top(y)>: Type Of Position of the related GPS position, top(x) TOP in direction south-north top(y) TOP in direction west-east
<dist>: distance of the related GPS position to the CENTER line (normal line to the preferred direction throught the waypoint center
<time>: time of the related GPS position**if <status>=2,4,5:**
<par_heading>:

1 heading of the car is/has been along the preferred direction (that is inside the aperture cone of the preferred direction)

0 heading of the car is/has been not along the preferred direction (that is outside the aperture cone of the preferred direction)

<heading> heading at the related GPS position

### 3.2.4.19 Message "gps_waypoint_stop_request"

| | |
|---|---|
| Message name: | "gps_waypoint_stop_req" |
| Source: | application (or other base function) |
| Destination: | base function waypoint |
| Description: | This message is used to stop the waypoint calculation. If the parameter <par> has the value 1, only the waypoint calculation according to the waypoint with the waypoint ID <wayp_id> is stopped. If the parameter <par> has the value 0, the waypoint calculation of all waypoints set by the application is stopped. |
| Syntax: | <msg_id>, <par>, (if <par>=1: <wayp_id>) |
| Defined values: | <msg_id>: *to be defined* |
| | <par> |

0 all waypoints set by the application are de activated
1 the waypoint with the waypoint ID <wayp_id> is deactivated.

**if <par>=1:**
<wayp_id>: waypoint ID

### 3.2.5 Messages related to the Subsystem Access Control

In this chapter the messages related to the different base functions of the Chipcard Interface Module (CIM) are decribed. The message transfer between applications and CIMbase functions is handled with the following messages:

related to the CIM base function CIM open application:

- cim_open_application_request
- cim_open_application_confirmation

related to the CIM base function CIM command data transfer:

- cim_send_data_request
- cim_send_data_response
- cim_status_request
- cim_status_indication

related to the CIM base function CIM close application:

- cim_close_application_request
- cim_close_application_conformation

An example of message transfers between an application and a CIM base function are decribed in a time sequence diagram on the following page.

Illustration 3.2.5-1: Time sequence diagram related to the Subsystem Access Control

### 3.2.5.1 Message "cim_open_application_request"

| | |
|---|---|
| Message name: | "cim_open_application_req" |
| Source: | application |
| Destination: | base function CIM open application |
| Reply: | "cim_open_application_con" (open confirmation either positive or negative) |
| Description: | This message is used by the application to initiate a communication with a chipcard application. If the attempt to setup a connection is unsuccessful, the base function has to evaluate and/or forward the error causes (e.g. unknown application, no chipcard available). |
| | With the receipt of this message a logical channel for communication between the application and the base function is established. A confirmation message containing the logical channel number or the possible error cause has to be sent to the requesting application. |
| | The message contains the message identifier <msg_id> and the application identifier <aid>. |
| Syntax: | <msg_id>, <aid> |
| Defined values: | |
| | <msg_id> *to be defined* |
| | <aid>: *to be defined* |

### 3.2.5.2 Message "cim_open_application_confirmation"

| | |
|---|---|
| Message name: | "cim_open_application_con" |
| Source: | base function CIM open application |
| Destination: | requesting application |
| Description: | This message is used to confirm that a logical channel is opened for the requesting application to send commands or data to the chipcard (with "cim_send_data_req"-.messages). The "cim_open_application_con"-message contains a <channel_no>. This <channel_no> is used by following messages to adress the logical communication channel. |
| Syntax: | <msg_id>, <status>, <channel_no> or <cause> |
| Defined values: | |
| | <msg_id>: *to be defined* |
| | <status>: ACK *(to be defined),* the next parameter shall be interpreted as the channel_no |
| | NAK *(to be defined),* the next parameter shall be interpreted as the cause value. |
| | <cause>: *to be defined* |
| | <channel_no>: identifier of the logical communication channel for the requested communication |

### 3.2.5.3 Message "cim_send_data_request"

| | |
|---|---|
| Message name: | "cim_send_data_req" |
| Source: | application |
| Destination: | base function CIM command data transfer |
| Reply: | "cim_send_data_res" (answer of the chipcard) "cim_status_ind" (an error has occured) |
| Description: | With this message commands or data to be transmitted to the chipcard is sent to the base function. The messsage is acknowledged either by the answer of the chipcard (positive acknowledge) or by status message (negative acknowledge). |
| | The "cim_send_data_req"-message contains the message identifier <msg_id>, the channel number <channel_no>, the data length <data_length> and the data <data>. |
| Syntax: | <msg_id>. <channel_no>, <data_length>, <data> |
| Defined values: | |
| | <msg_id> *to be defined* |
| | <channel_no>: identifier of the logical communication channel for the requested communication |

<data_length>: length of the <data> in byte
<data>: command/data to be sent to the chipcard

### 3.2.5.4 Message "cim_send_data_response"

| | |
|---|---|
| Message name: | "cim_send_data_res" |
| Source: | base function CIM command data transfer |
| Destination: | application |
| Description: | With this message the response data of the chipcard is sent to the requesting application. The "cim_send_data_res"-message contains the message identifier <msg_id>, the channel number <channel_no>, the data length <data_length> and the data <data>. |
| Syntax: | <msg_id>, <channel_no>, <data_length>, <data> |
| Defined values: | <msg_id> *to be defined* |
| | <channel_no>: identifier of the logical communication channel for the requested communication |
| | <data_length>: length of the <data> in byte |
| | <data>: command/data to be sent to the chipcard |

### 3.2.5.5 Message "cim_status_request"

| | |
|---|---|
| Message name: | "cim_status_req" |
| Source: | application |
| Destination: | base function CIM command data transfer |
| Reply: | "cim_status_ind" |
| Description: | This message is used to request status of the CIM. |

The message contains only the message identifier <msg_id>.

| | |
|---|---|
| Syntax: | <msg_id> |
| Defined values: | <msg_id> *to be defined* |

### 3.2.5.6 Message "cim_status_indication"

| | |
|---|---|
| Message name: | "cim_status_ind" |
| Source: | base function CIM command data transfer |
| Destination: | application |
| Description: | This message is used to inform the application about an error or an unexpected action occured or about a status change of the equipment. When receiving the "cim_status_ind"-message the application has to decide about the further actions, if an error occures. The message contains the message identifier <msg_id> and the status information <status>. |
| Syntax: | <msg_id>, <status> |
| Defined values: | <msg_id> *to be defined* |
| | <status>: status information concerning an error, an unexpected action or equipment status. |

### 3.2.5.7 Message "cim_close_application_request"

| | |
|---|---|
| Message name: | "cim_close_application_req" |
| Source: | application |
| Destination: | base function CIM close application |
| Description: | This message is used by the application to close the logical communication channel between the |

application and the base function.

The message contains the message identifier <msg_ict> and the channel number <channel-no>.

Syntax:         <msg_id>, <channel_no>

Defined values:     <msg_id> *to be defined*

                <channel_no>: identifier of the logical communication channel for the requested communication

### 3.2.5.8 Message "cim_close_application_confirmation"

Message name:     "cim_close_application_con"

Source:         base function cim CIM close application

Destination:     application

Description:     This message is used to confirm to the requesting application that the logical communication channel between the application and the base function has been closed. The communication with the chipcard has been terminated.

                The message contains the message identifier <msg_id> and the channel number <channel_no>

Syntax:         <msg_id>, <channel_no>

Defined values:     <msg_id> *to be defined*

                <channel_no>: identifier of the logical communication channel for the requested communication

### 3.2.6 Messages related to the Subsystem Input/Output

In this chapter the messages related to the different Input/Output (I/O) base functions are decribed. The message transfer between applications and I/O base functions is handled with the following messages:

related to I/O base function io display information:

-   io_display_information_request
-   io_display _information_confirmation
-   io_display _information_acknowledgement
-   io_display_information_interruption
-   io_display_information_rejection
-   io_display_information_finish_request
-   io_display_information_finish_acknowledge
-   io_display_type_request
-   io_display_type_result

related to I/O base function io enter data:

-   io_input_device_request
-   io_input_device_acknowledge
-   io_input_device_reject
-   io_enter_data_request
-   io_enter_data_confirmation
-   io_enter_data_result
-   io_enter_data_acknowledge
-   io_enter_data_reject
-   io_input_device_type_request
-   io_input_device_type_result

Some examples of message transfers related to the Input/Outpout-Device base functions are decribed in a flow chart, that illustrates the general interworking, and time sequence diagrams on the following pages.

Illustration 3.2.6-1: Phase diagram related to the I/O base function display information

Illustration 3.2.6-2: Time sequence diagram related to the I/O base function display information

Illustration 3.2.6-3: Time sequence diagram related to the I/O base function display information

Illustration 3.2.6-4: Time sequence diagram related to the I/O base function display information

Illustration 3.2.6-5: Time sequence diagram related to the I/O base function display information

Illustration 3.2.6-6: Time sequence diagram related to the I/O base function enter data

Illustration 3.2.6-7: Time sequence diagram related to the I/O base function enter data

**3.2.6.1 Message "io-display_inf ormation_request"**

| Message name: | "io_display_information_req |
|---|---|
| Source: | application or any other base function |
| Destination: | base function io display information |
| Reply: | "io_display_information_con" (request confirmation) |
| | "io_display_information_ack" (request acknowledgement) |
| | "io_display_information_int" (request interruption) |
| | "io_display_information_rej" (request rejection) |
| Description: | This message ist used by applications and base functions to display data on the Input/Output-Device. The request contains information to be displayed as well as the controlling information of the display job. |
| | If an application sends a display information request to a display unit which is at requesting time not operational or to which the application doesen't have an access right, the base function rejects the request. |
| | If the display is not busy with another job the display information request is accepted and an "io_display_information_confirmation"-message is send to the originator of the request. When the information is displayed over a time period of <t_dur> an "io_display_information_acknowledgement"-message is send. |
| | If an io_display_information_request of another application with a higher request priority accures during the time period <t_dur> the actually displayed information is interrupted and an io_display_information_interruption message is send to the originator of the related application. |
| | If the io_display_information_request has a lower or equal request priority than the currently displayed information, the request is put in a queue. If the duration time in the queue is longer than a predefined value, the io_display_information_request is rejected. |
| Syntax: | <msg_id>, <io_id>, <info_typ>, <t_dur>. <t_queue>, <session_id>, <finish_typ>, <info_length>, <info>, <adj>, <format>, <font>, <size> |
| Defined values: | <msg_id> *to be defined* |
| | <io_id> identifier of the Input/Output-Device where the information is to be displayed |
| | <info_typ> type of information possible values are: |

b - bitmap
c - character
p - predefined message/symbol

<t_dur> minimum duration in seconds the information has to be displayed
<t_queue> maximum time in queue until display reject
<session_id> id of a display/input session with a number of informations to be displayed together and input data to be entered by the user. This display/input actions belong together and shall not be disturbed by a display request of an equal priority.
<finish_typ> type to finish the display of an information possible values are

c - continued display of information; when the display duration <t_dur> is exceeded the display status is set to "accessible" but the display holds the old information until a new information is to be displayed
a - to be finished only by command io_display_information_finish_request of the originating application or base function

<info_length> length of the information in byte
<info> information to be displayed
<adj> adjustment information
possible values are:
s - standard
v - centered vertically
h - centered horizontally
x - special formatting of information
if <adj> = "x" then following additional parameters are included in the parameter structure:

| | |
|---|---|
| <format> | formating information |
| | possible values are: |
| | b - bold |
| | i - italic |
| | u - underlined |
| <font> | character font |
| <size> | character size |
| | possible values in pt |

### 3.2.6.2 Message "io_display_information_reject"

| | |
|---|---|
| Message name: | "io_display_information_rej" |
| Source: | base function io display information |
| Destination: | requesting application or base function |
| Reply: | none |
| Description: | An io_display_information_reject message is send for two reasons: |

-access to base function not possible
-t_queue exceeded

If an application or a base function sends a display information request to a display unit <io_id> which is at requesting time not operational or to which the application has no access right, the base function sends the io_display_information_reject message to the requesting application or base function.
If the io_display_information_request has a lower or equal request priority than a currently displayed information, the request is put in a queue. If the waiting time in the queue is longer than the value <t_queue> the request is rejected.

| | |
|---|---|
| Syntax: & Defined values | <msg_id>, <rej_stat> |
| | <msg_id> *to be defined* |
| | <rej_stat> reason for reject |
| | possible values are: |
| | na - access not allowed |
| | no - display unit not operational |
| | te - time exceeded (t_queue) |

### 3.2.6.3 Message "io_display_information-confirmation"

| | |
|---|---|
| Message name: | "io_display_information_con" |

Source: base function io display information
Destination: requesting application or base function
Reply: none
Description: In case of the display operational and the requesting application or base function has a access right the io_display_information_request is accepted and an io_display_information_confirmation message is send to the originator of the request.
Syntax: <msg_id>, <con_status>
Defined values

<msg_id> *to be defined*
<con_status> status of confirmation
possible values are:
d - information displayed
q - information request in queue

### 3.2.6.4 Message "io_display_information_interruption"

Message name: "io_display_information_int"
Source: base function io display information
Destination: requesting application or base function
Reply: none
Description: If an io_display_information_request of another application with a higher request priority accures during the time period <t_dur> the actually displayed information is interrupted and an io_display_information_interruption message is send to the originator of the interrupted application display.
Syntax: <msg_id>, <int_reason>
Defined values

<msg_id> *to be defined*
<int_reason> reason of the interruption
possible values are:
nr - new request of an application or base function with higher request-priority
qr - priority of an io_display_information_request in the queue is higher than the priority of the actually displayed information.

### 3.2.6.5 Message "io _display_information _acknowledge"

Message name: "io_display_information_ack"
Source: base function io display information
Destination: requesting application or base function
Reply: none
Description: When the information is displayed over a time period of <t_dur> this message is send to the originator of the request. With this message the display job for the requested information to be displayed is finished.
If <finish_typ> = "c" (parameter of io_display_information_request) the status of the display is set to "accessible". With any new io_display_information_request the actual display content is deleted.
In case of <finish_typ> ="a" (parameter of io_display_information_request) the status of the display stays "busy" until the originator of the displayed message breaks displaying information with an io_display_information_finish_request.
Syntax: <msg_id>
Defined values <msg_id> *to be defined*

### 3.2.6.6 Message "io_display_information _finish _request"

Message name: "io_display_information_finish_req"

| Source: | requesting application or base function |
|---|---|
| Destination: | base function io display information |
| Reply: | "io_display_information_finish_ack" |
| Description: | With this message the following actions are initiated: |

When the io_display_information_request is already finished the displayed information is cleared on the Input/Output-Device.

If the io_display_information_request is still in the queue waiting for display access it is now dropped from the queue (application initiated).

If the io_display_information_request to be finished is part of a number of interdependent io_display_information_requests (parameter <session_id> in io_display_information_request), with the parameter <del_session> it is defined what action takes place with the other io_display_information_request of this session.

| Syntax: | <msg_id>, <io_id>, <del_session> |
|---|---|
| Defined values | <msg_id> *to be defined* |
| | <io_id> identifier of the Input/Output-Device the information is to be displayed |
| | <del_session> action for other requests with equal session id possible values are: |
| | n - no finish of the other |

io_display_information_requests of the same session; only identified io_display_information_request is dropped from the queue or cleared from the display.

y - all io_display_information_requests of the same session and originator are dropped from the queue or cleared from the display.

### 3.2.6.7 Message "io_display_information_finish_acknowledge"

| Message name: | "io_display_information_finish_ack" |
|---|---|
| Source: | base function io display information |
| Destination: | requesting application or base function |
| Reply: | none |
| Description: | When the actions requested with io_display_information_finish_req are performed, the io_display_information_finish_ack message is send to the originator of the request. |
| Syntax: | <msg_id> |
| Defined values | <msg_id> *to be defined* |

### 3.2.6.8 Message "io_disptay_type_request"

| Message name: | "io_display_type_req" |
|---|---|
| Source: | requesting application or base function |
| Destination: | base function io display information |
| Reply: | "io_display_type_res" |
| Description: | With this message the application or base function requests the use of the Input/Output-Device identified with <io_id>. With the response message io_display_type_res the application is informed about her access right to the mentioned Input/Output-Device. |
| Syntax: | <msg_id>, <io_id> |
| Defined values | <msg_id> *to be defined* |
| | <io_id> identifier of the Input/Output-Device the information is to be displayed |

### 3.2.6.9 Message "io_display_type_result"

| Message name: | "io_display_type_res" |
|---|---|
| Source: | base function io display information |
| Destination: | requesting application or base function |
| Reply: | none |

Description: With this message the base function informs the requesting application or base function about her access right to the related Input/Output-Device.

Syntax: <msg_id>, <access_stat>

Defined values <msg_id> *to be defined*

<access_stat> access status for the Input/Output-Device

possible values are:

n - no access

y - access allowed; requesting application only

c - access allowed; common used Input/Output-Device (all applications)

m - access allowed; used by multiple applications

### 3.2.6.10 Message "io_input_device_request"

Message name: "io_input_device_req"

Source: requesting application or base function

Destination: base function io enter data

Reply: "io_input_device_ack"

"io_input_device_rej"

Description: When an application or a base function want to request for input data, first it has to be checked whether the input device is accessible or in use for an other application. An io_input_device_req is send to the input device.

If the input device is accessible the input device is attached to and an "io_input_device_ack'" message is sent to the requesting application.

The input device is blocked for requests of other applications. Its status is set to "busy".

If the input device is "busy" an "io_input_device_rej" is sent ot the requesting application. The reason for rejection is although be sent as status parameter. The status can be "busy" or "access_not_allowed".

An application detaches from an input device also with an io_input_device_req-message (<attach>=no).

Syntax: <msg_id>, <in_dev_id>, <attach>

Defined values <msg_id> *to be defined*

<in_dev_id> identifier of the input device selected from which data should be entered

<attach> distingish between attach to and detach from the input device

possible values are:

yes - attach to input device

no - detach from input device

### 3.2.6.11 Message "io_input_device_acknowledge"

Message name: "io_input_device_ack"

Source: base function io enter data

Destination: requesting application or base

Reply: none

Description: This message is the response of an io_input_device_request. In case that the input device is accessible and the requesting application has the right to access to the input device the input device is attached to the requesting application. The status of the input device is set to "busy" and the io_input_device_ack-message is sent to the requesting application.

Syntax: <msg_id>

Defined values <msg_id> *to be defined*

### 3.2.6.12 Message "io_input_device_reject"

| | |
|---|---|
| Message name: | "io_input_device_rej" |
| Source: | base function io enter data |
| Destination: | requesting application or base function |
| Reply: | none |
| Description: | This message is the response of an io_input device_request. In case that the input device is "busy" or the requesting application does not have the right to access to the input device the request is rejected. An io_input_device_rej-message is sent to the requesting application or base function. The message contains a parameter "status" with an indication of the reason of rejection. |
| Syntax: | <msg_id>, <status> |
| Defined values | |

<msg_id> *to be defined*
<status> reason of rejection
possible values are:
busy - device is currently attached to an other application
na - access to the selected input device is not allowed
no- input device is currently not available

### 3.2.6.13 Message "io_enter_data_request"

| | |
|---|---|
| Message name: | "io_enter_data_req" |
| Source: | requesting application or base function |
| Destination: | base function io enter data |
| Reply: | "io_enter_data_con" |
| | "io_enter_data_res" |
| | "io_enter_data_rej" |
| Description: | When an application or a base function needs input data from the user it has to perform the following actions: |

a. check whether the input device is accessible an attach (io_input_device_req)
b. display an "enter data message" on the Input/Output-Device (io_display_information_req)
c. generate an "enter data request" to the Input/Output-Device (io_enter_data_req)

The first action to be performed is to attach to an input device. Then as second action the user has to be told that an application needs input data. This is be done perhaps with an acustic signal (pieper or voice request) and with a display information that describes the expected user action.

When "enter data message" is displayed (io_display_data_con) the application requests the input data. An io_enter_data_req is sent to the selected input device. The input device responds with an io_enter_data_con-message.

With the acceptance of the io_enter_data_req (io_data_req_con) a watchdog is activated in the interpreter/input device. This is for controlling the user enters inputs data within a maximum duration time. The timer parameter for the watchdog is part of the io_enter_data_req (<timer>). If the user pushes a data or event-key the watchdog is always restarted with the content of <timer>. If the user does not push any key within the time period <timer> the watchdog rejects the data request with an io_enter_data_rej-message.

With the parameter <type> of the io_enter_data_req it is distinquished whether the application expects for response a single charcter or a character string. In case of the application expects a character string all character inputs are to be collected in the interpreter/input device until the user pushes an event-key. When the user pushes the event-key "enter" the collected data are send to the requesting application with the message io_enter_data_res. When the user pushes the event-key "cancel" the collected data are deleted and an io_enter_data_rej-message is sent to the application.

In case of the application expects a single character the input device sends each entered character with a respective io_enter_data_res-message to the application. The application now can check the character and decide about sending a new "input-data" message (i. e. the new possible character to enter a town name for third possition dependent on the first two characters the user had entered). This is repeated until the event-key "enter" is pushed.

If another event-key like "menue" is entered the interpreter/input device sends an io_enter_data_ ind-message to the requesting application. The application decides about the following actions. If there is currently no "enter data request" the event-keys are controled by a special-application which interprets the user action and initiates for application actions.

In general all user entered characters are to be displayed on a correspondent display <io_id>. Dependent on the Input/Output-Device it is possible that the "enter data message" together with the entered data are displayed on the Input/Output-Device or that the "io_enter_data"-message is deleted with the first entered character. For special purposes i. e. enter of pin this feature muß be inhibited <displ_ch>. In this case a special character like "*" is to be displayed on the Input/Output-Device.

When an user has entered the requested data he terminates his input action with the event-key "enter". When the data entered are sent to the requesting application the "enter data request" is finished by sending an io_enter_data_ack-message.

Syntax:      <msg_id>, <in_dev_id>, <io_id>, <type>, <timer>, <displ_char>, <session_id>, <finish_typ>. <adj>, <format>, <font>, <size>

Defined values    <msg_id> *to be defined*

<in_dev_id> identifier of the input device selected from which data should be entered

<io_id> identifier of the Input/Output-Device the information is to be displayed

<type> identifier for the kind of expected input data possible values are:

c - single character expected

s - string expected

<timer> timer constant for watchdog (in seconds)

<displ_char> determines whether the entered character is displayed on the Input/Output-Device possible values are:

yes - entered character is displayed on Input/Output-Device (default)

no- entered character is not to be displayed on Input/Output-Device; in exchange character "*" is to be displayed

<session_id> id of a display/input session with a number of informations to be displayed together and input data to be entered by the user. This display/input actions belong together and shall not be disturbed by a display request of an equal priority.

<finish_typ> type to finish the display of an information possible values are

a - to be finished only by command io_display_information_finish_request of the application or base function the io_display_information_request is owned by.

<adj> adjustment entered data

possible values are:

s - standard

v - centered vertically

h - centered horizontally

x - special formatting of informationif <adj> = "x" then following additional parameters are included in the parameter structure:

<format> formating information

possible values are:

b - bold

i - italic

u - underlined

<font> character font

character size

possible values in pt

### 3.2.6.14 Message "io_enter_data_confirmation"

| Message name: | "io_enter_data_con" |
| --- | --- |
| Source: | base function io enter data |
| Destination: | requesting application or base function |

Reply: none
Description: When an application requests for input data an io_enter_data_req-message is sent to the selected input device. In case of confirmation the input device responds to the application with an io_enter_data_con-message. The input device is now ready to get input data from the user. Also the watchdog function for controlling the duration between the single input action is activated.
Syntax: <msg_id>
Defined values <msg_id> *to be defined*

### 3.2.6.15 Message "io_enter_data_acknowledge"

Message name: "io_enter_data_ack"
Source: base function io enter data
Destination: requesting application or base function
Reply: none
Description: When an user has entered the requested data he terminates his input action with the event-key "enter". When the data entered are sent to the requesting application the "enter data request" is finished by sending an io_enter_data_ack-message.
Syntax: <msg_id>
Defined values <msg_id> *to be defined*

### 3.2.6.16 Message "io_enter_data_result"

Message name: "io_enter_data_res"
Source: base function io enter data
Destination: requesting application or base function
Reply: none
Description: With the parameter <type> of the io_enter_data_req it is distinquished whether the application expects for response a single character or a character string. In case of the application expects a character string all character inputs are to be collected in the interpreter/input device until the user pushes an event-key. When the user pushes the event-key "enter" the collected data are send to the requesting application with the message io_enter_data_res.
In case of the application expects a single character the input device sends each entered character with a respective io_enter_data_res-message to the application. The application now can check the character and decide about sending a new "input-data" message (i. e. the new possible character to enter a town name for third possition dependent on the first two characters the user had entered). This is repeated until the event-key "enter" is pushed.
Syntax: <msg_id>, <data_length>, <data>
Defined values <msg_id> *to be defined*
<data_iength> length of the entered input data
<data> user input data

### 3.2.6.17 Message "io_enter_data_reject"

Message name: "io_enter_data_rej"
Source: base function io enter data
Destination: requesting application or base function
Reply: none
Description: To get user input data an io_enter_data_request is sent to the input device. An io_enter_data_rej-message is sent from the base function to the requesting application in following described cases.
If an application wants to access to an input device and this device is not operational or the application does not have the right to access to that input device (currently or permanently) an io_enter_data_rej-message is sent. The reason for rejection is contained in that message <con_status>. If an error occures during the time input actions take place although an io_enter_data_rej-message is sent.
If the time between two input actions (i. e. the push of an data-key) exceeds a limit a watchdog functionality interrupts the io_enter_data_request and sends an io_enter_data_rej-message.
If an user interrupts entering data by pushing the event-key <cancel> an io_enter_data_rej-message is sent to the requesting application.

Syntax:          <msg_id>. <rej_status>

Defined values    <msg_id> *to be defined*

<rej_status> reason for rejection the io_enter_data_request possible values are:

c - cancel (event-key) user initiated

t - timeout (duration time exceeded)

na - no access allowed

no- not operational

### 3.2.6.18 Message "io_enter_data_indication"

| | |
|---|---|
| Message name: | "io_enter_data_ind" |
| Source: | base function io enter data |
| Destination: | requesting application or base function |
| Reply: | none |
| Description: | If the user pushes an event-key like "menue" the interpreter/input device sends an io_enter_data_ ind-message to the requesting application. The application decides about the following actions. If there is currently no "enter data request" to be worked out the event-keys are controlled by a special-application which interprets the user action and initiates for application actions. |
| Syntax: | <msg_id>, <key_code>, <req_status> |
| Defined values | <msg_id> *to be defined* |
| | <key_code> identifier for the key the user had entered |
| | possible values are: |
| | menue - key for entering a menue |
| | up- cursor |
| | down - cursor |
| | help - help key |
| | <req_status> access-status of input device |
| | possible values are: |
| | |
| | a - accessible |
| | b - busy |

### 3.2.6.19 Message "io_input_device_type_request"

| | |
|---|---|
| Message name: | "io_input_device_type_req" |
| Source: | requesting application or base function |
| Destination: | base function io enter data |
| Reply: | "io_input_device_type_res" |
| Description: | With this message the application or base function requests the use of the input device identified with <in_dev_id>. With the response message io_input_device_type_res the application is informed about her access right to the mentioned input device. |
| Syntax: | ansg_id>, <in_dev_id> |
| Defined values | <msg_id> *to be defined* |
| | <in_dev_id> identifier of the input device selected from which data should be entered |

### 3.2.6.20 Message "'io_input_device_type_result"

| Message name: | "io_input_device_type_res" |
| Source: | base function io enter data |
| Destination: | requesting application or base function |
| Reply: | none |
| Description: | With this message the base function informs the requesting application or base function about her access right to the mentioned input device. |
| Syntax: | <msg_id>, <access_stat> |
| Defined values | <msg_id> *to be defined* |
| | <access_stat> access status for the input device |
| | possible values are: |
| | n - no access |
| | y - access allowed; requesting application only |
| | c - access allowed; common used input device (all applications) |
| | m - access allowed; used by multiple applications |

## 4 Standard Communications Interface

The basic device is designed to allow integration of Traffic Telematics applications and appropriate Input/Output-Devices, but also to provide a Standard Communications Interface (SCI) for connecting external devices. This is useful for extending the basic device with applications currently available or for adding new applications or devices as they become available in the future.

An external device may be a further Traffic Telematics application, another Input/Output-Device, a facsimile terminal, a PC or an adaptable car bus system, e.g. the CAN bus.

Some PC based applications can use the direct communication path provided by the GSM module. Other PC based applications may be connected to allow access to the internal units of the basic device: for example to start and monitor diagnostic functions or to read the error log (by service staff only).

It is the aim to offer a manufacturer-independent access to the basic device. For this reason, the Standard Communications Interface is a universal serial bus, which allows connection of several external devices. It is proposed to use an RS485 bus for this purpose.

The basic device includes the Standard Communications Interface module (SCI module). This is used to connect the external bus to the API.

### 4.1 The SCI module and the communication paths

All external devices have a single common access to the API via the SCI module, which represents all external devices at the API. For this reason the SCI module manages the connections between the external devices and the integrated applications or base functions.

In principle, there are two different kinds of access from an external device: Access *via the API* and *direct access.*

*Access via API* is used for the normal communications between the external devices and the applications or base functions within the basic device.

*Direct access* is used for transparent GSM data connection between one external device and an external user, e.g. for PC or facsimile applications. Direct access is provided only via the SCI.

### 4.2 Tasks of the SCI module

It is the task of the SCI module to provide either the pure API connection profile or the direct access profile, depending on the requirements of the applications (see Picture 4.2-1). For this purpose there is a switch to control the connection path. The switch position in the picture is for normal connection to the API. Another switch position is used to enable a protocol to ensure data integrity providing protection against transmission disturbances on the external bus. Switching to the third position results in a "direct access" via the communication module and the API to the GSM radio path.

Illustration 4.2-1: Standard Communications Interface (SCI)

The SCI module has the task of managing the switches as requested by the applications.

Another task of the SCI module is to take part in the priority management. If a command is sent from an external device to a base function and is rejected by the concerning priority management, it is the task of the SCI module to accept the reject message and to react accordingly. In the other direction, if more than one application or base function attempts access concurrently e.g. to an external Input/Output-Device, it is the job of the SCI module to resolve the conflict.

**5 Annex**

**5.1 Annex 1: Extract of the GSM TS 02.07:**

Annex A (normative): **Automatic calling repeat call attempt restrictions.**
Call set up attempts referred to in this annex are assumed to be initiated from peripheral equipment or automatically from the MT itself.
A repeat call attempt may be made when a call attempt is unsuccessful for the reasons listed below (as defined in GSM 04.08).
These reasons are classified in three major categories:

1. "Busy destination":

   Cause number 17 User busy

2. "Unobtainable destination - temporary":

Cause number
        1 Unassigned (unallocated) number
        3 No route to destination
        22 Number changed
        28 Invalid number format (uncomplete number)
        38 Network out of order.
        18 No user responding
        19 User alerting, no answer
        27 Destination out of order
        34 No circuit/channel available
        41 Temporary failure
        42 Switching Equipment congestion
        44 Requested circuit/channel not available
        47 Resources unavailable, unspecified

3. "Unobtainable destination - permanent/long term":

    Cause number

NOTE: Optionally, it is allowed to implement cause number 27 in Category 3, instead of Category 2, as this is desirable already in Phase 1.

The table below describes a repeat call restriction pattern to any B number. This pattern defines a maximum number (n) of call repeat attempts; when this number n is reached, the associated B number shall be blacklisted by the MT until a manual re-set at the MT is performed in respect of that B number. When a repeat attempt to anyone B number fails, or is blacklisted, this does not prevent calls being made to other B numbers.
For the categories 1 and 2 above, n shall be 10: for category 3, n shall be 1.

| Call attempt tempts Initial call attempt | Minimum duration between call at- |
|---|---|
| 1 st repeat attempt | 5 sec |
| 2nd repeat attempt | 1 min |
| 3rd repeat attempt | 1 min |
| 4th repeat attempt | 1 min |
| 5th repeat attempt | 3 min |
| nth repeat attempt | 3 min |

The number of B numbers that can be held in the blacklist is at the manufacturers discretion but there shall be at least 8. However, when the blacklist is full the MT shall prohibit further automatic call attempts to any one number until the blacklist is manually cleared at the MT in respect of one or more B numbers.

When automatic calling apparatus is connected to an MT1 or MT2, or where an MTO is capable of auto-calling, then the MT shall process the call requests in accordance with the sequence of repeat attempts defined above, i.e. requests for repeat attempts with less than the minimum allowed duration between them shall be rejected by the MT.

A successful call attempt to a number which has been subject to the call restrictions shown above (i.e. an unsuccessful call set up attempt has previously occured) shall reset the "counter" for that number.

The "counter" for an unsuccessfullly attempted B number shall be maintained in 24 hours or until the MT is switched off.

The automatic calling repeat call attempt restrictions apply to speech and data services.

NOTE: The restrictions only apply to unsuccessful Call Control activity, not to Radio Resource Management or to Mobility Management, so multiple attempts at radio channel access are not limited by this mechanism.

**Release Causes defined in GSM TS 04.08 see table 5.1-1**

All other values in the range 0 to 31 shall be treated as cause 31.
All other values in the range 32 to 47 shall be treated as cause 47.
All other values in the range 48 to 63 shall be treated as cause 63.
All other values in the range 64 to 79 shall be treated as cause 79.
All other values in the range 80 to 95 shall be treated as cause 95.
All other values in the range 96 to 111 shall be treated as cause 111.
All other values in the range 112 to 127 shall be treated as cause 127.

**Release Causes defined in GSM Recommendation 07.07 see table 5.1-2**

other values between 128 and 255 are reserved

**Additional recommended causes see table 5.1-3**

**5.2 Annex 2: indirect/Direct Access to the AT Command Set**

The AT commands which are listed in table 5.2-1 are extracted of the GSM 07.07, "AT command set for GSM Mobile Equipment (ME)" [2]. They are used in the Subsystem Communication.

**5.3 Annex 3: Message Sequence and Service Primitives of the TASP4-Protocol**

The message sequence and the Service Primitives of the TASP4-Protokolls, presented in chapter 2.2.1-5, are described below.

**Message Sequence see illustration 2.2.1-5**

Illustration 2.2.1-5: Framework of the TASP4 level

**Begin Flag**

The Begin-Flag marks the beginning of the frame. It consists of the bit sequence 01111110. There will be no End-Flag. The end of the message will be indicated by means of a length indicator.

The Begin Flag is not normally part of level 4; however, it makes possible the line oriented transfer on routes without a leve 2 protocol (transparent data channel).

**LAPB address field not necessary**

Since only one user is to have access to the transport protocol, no address field is necessary. The task of the address field in the LAPB protocol, to distinguish between command and response, will be fulfilled by the C/R-Bit in the Length Indicator Field. The multiplexing of several connections can be undertaken by the application that manages an address field within the data field (from the point of view of the TASP4 level).

**Control Field**

The Control Field consists of an octet. There are three diffierent formats (I-, S- and U- format) (see illustration 2.2.1-6).

Illustration 2.2.1-6: Control Field

N(S)   Transmitter send sequence number
N(R)   Transmitter receive sequence number
I      Information frame
S      Supervisory frames
U      Unnumbered frames
P/F    Poll bit when issued as a command. Final bit when issued as a response

The exact bit coding is shown in illustration 2.2.1.-7; it corresponds to the LAPB format:

Illustration 2.2.1-7: Coding according to the LAPB format

I      Information
RR     Receive Ready
RNR    Receive Not Ready
REJ    Reject
SABM   Set Asynchronous Balanced Mode
DM     Disconnect Mode
UI     Unnumbered Information
DISC   Disconnect
UA     Unnumbered Acknowledge
N(S)   Transmitter send sequence number
N(R)   Transmitter receive sequence number
P/F    Poll bit when issued as a command, when issued as a response
P      Poll bit
F      Final bit

The protocol for the use of the control field parameter is described in the CCITT-Recommendation X.25 [7] or Q.921.

Definition of Parameters:     window size = 3
                              number of repetitions before an error message will be sent to a superior level = 6 repetition
                              timer *= to be defined,* depending on Bearer Service

**Length Indicator Field**

The Length Indicator Field consists of the length indicator, the C/R-Bit, the M-Bit and the EL-Bit (see illustration 2.2.1-8).

Illustration 2.2.1-8:     Length Indicator Field
                          L Length indicator
                          C/R Command/Response-Bit
                          M More Data Bit
                          EL Length indicator field extension bit

**L Length Indicator**

In UI and I frames the length indicator defines the length of the data field in octet. If the length indicator is 5 bit (see illustration 2.2.1-8), the length of the data field is between 0 and 31 octet. If the data field is larger than 31 octet, the length indicator field will be enlarged (see EL bit).
In the case of messages that contain no information field, the length indicator is 0.

**C/R Command/Response-Bit**

The C/R-Bit is set at 0 if a command is sent; it is set at 1 if a response is sent.

**M More Data-Bit**

The function of the more data bit is the segmentation of messages.
The M-Bit set at 1 indicates that this is a part (a segment) of a long ceherent message.
If, on the other hand, the M-Bit is set at 0 and the M-Bit of the preceding message was 0 as well, the information field contains the complete message.
If the M-Bit is set at 0 and the M-Bit of the preceding message is 1, the information field contains the last part (segment) of a longer message.
The M-Bit is relevant only as far as 1-frames are concerned. In the case of all other frames the M-Bit is set at 0.

**EL Length indicator field extension bit**

The function of the EL-Bit is to extent the length indicator. If it is set at 0, this indicates the last octet of the length indicator. If it is set at 1, a further octet follows that belongs to the length indicator field.
If a data field is between 0 and 31 octet in length, the following coding of the length field (illustration 2.2.1-9) is sufficient. The EL-Bit is here set at 0.

Illustration 2.2.1-9: Length indicator field for a data field between 0 and 31 octet in length

If the data field is larger than 31 octet, the length indicator field can be enlarged with the help of the EL-Bit (see illustration 2.2.1-10). The length of the data field can then be between 16 and 4095 octets.

Illustration 2.2.1-10: Enlarged length indicator field

**Information field**

The information field contains the data of the application level. It can be as long as 4095 octet.

**Frame Check Sequence field**

The Frame Check Sequence field is two octet in length.
The generator polynom is $x^{16} + x^{12} + x^5 + 1$.

**Service Primitives**

The Service Primitives between the superior level and the transport level are:

    T-Connect - Request
    T-Connect - Indication
    T-Connect - Response
    T-Connect - Confirm
    T-Data - Request
    T-Data - Indication
    T-Unitdata - Request
    T-Unitdata - Indication
    T-Disconnect - Request
    T-Disconnect - Indication
    T-Disconnect - Confirm
    T-Error - Indication

The Service Primitives between the transport level and the inferior level (Network Layer) are:

    N-Data - Request
    N-Data - Indication

**5.4 Annex 4: Defined values for super frame structure**

The following values are defined for the super frame structure. A detailed specification of these values is for further study.

<SRC> and <DEST>[3]:

| | |
|---|---|
| 0x0000 ... 0x0FFF | **base functions:** |
| | gsm_..... |
| | gsm_..... |
| | gps_...... |
| | gps_...... |
| | gps_...... |
| | cim_...... |
| | cim_...... |
| | cim_...... |
| | io_..... |
| | io_..... |
| | io_...... |
| 0x1000 ... 0x10FF | applications for **dynamic route guidance** |
| 0x1100 ... 0x11 FF | applications for **floating car data acquisition** |
| 0x1200 ... 0x12FF | applications for **fleet management** |
| 0x1300 ... 0x13FF | applications for **traffic information** |
| 0x1400 ... 0x14FF | applications for **emergency break down services** |
| 0x1500 ... 0x15FF | applications for **vehicle theft protection** |

[3]Note: Some addresses must be reserved for further chipcard readers

| | |
|---|---|
| 0x1600 ... 0x16FF | applications for **automatic tolling** |
| 0x1700 ... 0xFFFF | reserved |

<TRANS_NO>: modulo 256
<PRIO>: 1 highest priority level
2
....
n lowest priority level

*("n" depends on the definition in the appropriate chapter above)*

| <TIME>: | mm_dd_hh_mm_ss: | mm: | month: | 0...12 |
|---|---|---|---|---|
| | | dd: | day | 0...31 |
| | | hh: | hours: | 0...23 |
| | | mm: | minutes | 0...59 |
| | | ss: | seconds | 0...59 |

The value range for the applications might be used as values for the asi, too.

**6 Reference Documents**

*[1] ORGA Kartensysteme GmbH: "IntraGSM - Basisfunktionen des Chipkarten-Interface-Moduls", Version 1.00, 20.9.1995*

[2] European Telecommunications Standards Institute: "European digital cellular telecommunications system (Phase 2); AT command set for GSM Mobile Equipment (ME), (GSM 07.07)", Draft, November 1995

[3] European Telecommunications Standards Institute: "European digital cellular telecommunications system (Phase 2); Use of Data Terminal Equipment - Data Circuit terminating Equipment (DTE - DCE) interface for Short Message Service (SMS) and Cell Broadcast Service (CBS), (GSM 07.05)", Draft, Dezember 1995

[4] DeTeMobil. "Intelligente Verkehrstelematik - die Zukunft mit IntraGSM", DeTeMobil-Broschüre 1995, Bonn

[5] Dr. W. Kremer, R. Mertens: "Verkehrstelematik in GSM", in "Telematik im Straßenverkehr", Springer Verlag 1995

[6] Dr. W. Kremer: "GSM based Road Pricing in the framework of Traffic and Transport Telematics", ibc Chipcard1994 conference, London

[7] The International Telegraph and Telephone Cosultative Committee: (CCITT): "X.25, Interface between Data Terminal Equipment (DTE) and Data Circuit-Terminating Equipment (DCE) for terminals operating in the Packet Mode and connected to Public Data Networks by dedicated circuit" from "Data Communication Networks: Services and Facilities, Interfaces", Volume VIII, Geneva 1989

[8] ORGA Kartensysteme GmbH: "Multifunktionale Chipkarte für Verkehrstelematik (IntraGSM - Chipkarte)", Version 1.00 vom 19.9.1995

[9] F. Zijderhand: "SOCRATES: applications and architecture", P. 315-334, in Philips Journal of Research, Special Issue on SOCRATES, Vol. 48, No. 4, 1994

Abbreviations

| | |
|---|---|
| API | Application Programming Interface |
| ASI | Application Service Identifier |
| BS | Bearer Service |
| CIM | Chipcard Interface Module |
| CLI | Calling Line Identity |
| CLIP | Calling Line Identity Presentation |
| CLIR | Calling Line Identity Restriction |
| CPU | Central Processing Unit |
| CRC | Cyclic Redundancy Check |
| CST | Communications Service Table |
| DGPS | Differential Global Positioning System |
| DISC | Disconnect-Message |
| EPE | Estimated Position Error |
| ETSI | European Telecommunications Standards Institute |
| GPS | Global Positioning System |
| GNSS | Global Navigation Satellite System |
| GPRS | General Packet Radio Service |
| GSM | Global System for Mobile Communications |
| HDLC | High-level Data Link Control |
| IntraGSM | International Traffic Global System for Mobile Communications |
| I/O | Input/Output |
| LAPB | Line Access Procedure on the B-channel |
| MCC | Mobile Country Code |
| MNC | Mobile Network Code |
| MO | Mobile Originated |
| MOC | Mobile Originated Call |
| MT | Mobile Terminated |
| MTC | Mobile Terminated Call |
| OSI | Open Systems Interconnection |

| PDS | Packet Data on Signalling Channels Service |
| PLMN | Public Land Mobile Network |
| RNR | Receive Not Ready |
| RTCM | Radio Technical Commission for Maritime Services |
| SABM | Set Asynchronous Balanced Mode |
| SCI | Standard Communications Interface |
| SMS | Short Message Service |
| SMS-MO | Short Message Service - Mobile Originated |
| SMS-MT | Short Message Service - Mobile Terminated |
| SS | Supplementary Service |
| TASP4 | Telematic Application Security Protocol |
| TCP | Transport Communications Protocol |
| TOP | Type of Position |
| TS | Teleservice |
| VT | Traffic Telematics (Verkehrstelematik) |

**Claims**

1. A traffic telematics terminal comprising:

   a base system with several exchangeable and/or interchangeable subsystems, including at least

   - a subsystem for communication,
   - a subsystem for location,
   - a subsystem for access control, and
   - a subsystem for input/output,

   wherein each subsystem provides several base functions;
   **characterized in**
   an Application Programming Interface, API, adapted to allow the implementation of specific applications and further adapted to support communication interactions from the subsystems of the base system to application modules, from the application modules to the subsystems of the base system, from service centers to the application modules and from the application modules to the service centers via the subsystem for communication, and between application modules of the same manufacturer as well as between application modules of different manufacturers; and a routing and system control unit with a routing control part linking the Application Programming Interface, API with the subsystems and the base functions provided by the subsystems for communication between the implemented applications and the base functions, and a system control part for operating the base functions.

2. A traffic telematics terminal according to claim 1, **characterized in that** the subsystem for communication is connected to a GSM network via an GSM module.

3. A traffic telematics terminal according to claim 1 or 2, **characterized in that** the subsystem for location comprises an interface to a GPS module.

4. A traffic telematics terminal according to any of claims 1-3, **characterized in that** the subsystem for access control comprises an interface to a chipcard reader.

5. A traffic telematics terminal according to any of claims 1-4, **characterized in that** the subsystem for input/output comprises an input/output device.

6. A traffic telematics terminal according to any of claims 1-5, **characterized in that** each subsystem is provided with a Standard Communications Interface, SCI, for direct or indirect access from/to external applications or devices.

7. Method for operating a traffic telematics terminal as defined in claims 1-6, wherein base functions provided by the subsystems of communication, location, access control, input/output and a Standard Communication Interface, SCI are assigned to the base system, chacacterized in that those base functions are used to operate and/or control the operation of one or more subsystems in accordance with specific applications implemented using the Application Programming Interface, API, whereby a routing and system control unit interfaces between the applications and the base functions, while several applications can be operated at the same time sharing the same subsystems.

8. Method according to claim 7, **characterized in that** a Standard Communications Interface SCI, is used for the connection of and the communication with and between the subsystems.

9. Method according to any of claims 7 or 8, **characterized in that** the connection between the applications and the subsystems is established by a function Routing and System Control, while routing is confined to addressing tasks, the system control undertakes the monitoring of functions and the recording to failures and errors.

10. Method according to any of claims 7-9, **characterized in that** with the subsystem communication connections to the GSM network can be established.

11. Method according to any of claims 7-10, **characterized in that** the subsystem location receives its location data from a GPS receiver.

**Patentansprüche**

1. Verkehrstelematikendgerät, bestehend aus:

einem Basissystem mit verschiedenen auswechselbaren und/oder gegenseitig austauschbaren Subsystemen, mindestens aufweisend

- ein Subsystem zur Kommunikation,
- ein Subsystem zur Ortsbestimmungen,
- ein Subsystem für die Zugangssteuerung, und
- ein Subsystem zur Eingabe/Ausgabe,

worin jedes Subsystem mehrere Basisfunktionen aufweist;
**gekennzeichnet durch**
eine Applikationsprogrammierschnittstelle, API, geeignet zur Implementation spezifischer Applikationen und ferner geeignet zur Unterstützung von Kommunikationsinteraktionen von den Subsystemen des Basissystems zu Applikationsmodulen, von den Applikationsmodulen zu den Subsystemen des Basissystems, von Servicecentern zu den Applikationsmodulen und von den Applikationsmodulen zu den Servicecentern über das Subsystem zur Kommunikation, als auch zwischen den Applikationsmodulen, sowohl des selben Herstellers als auch zwischen Applikationsmodulen verschiedener Hersteller, und
eine Routing- und Systemsteuereinheit mit einem Routingsteuerungsteil zur Verknüpfung der Applikationenprogrammierschnittstelle, API, mit den Subsystemen und den Basisfunktionen, welche **durch** das Subsystem zur Kommunikation zwischen den implementierten Applikationen und den Basisfunktionen zur Verfügung gestellt werden, und einen Systemsteuerteil zum Betrieb der Basisfunktionen.

2. Verkehrstelematikendgerät nach Anspruch 1, **dadurch gekennzeichnet, dass** das Subsystem zur Kommunikation über ein GSM Modul mit einem GSM Netzwerk verbunden ist.

3. Verkehrstelematikendgerät nach Anspruch 1 oder 2, **dadurch gekennzeichnet, dass** das Subsystem zur Ortsbestimmung eine Schnittstelle zu einem GPS Modul aufweist.

4. Verkehrstelematikendgerät nach einem der Ansprüche 1 bis 3, **dadurch gekennzeichnet, dass** das Subsystem zur Zugangssteuerung eine Schnittstelle zu einem Chipkartenleser hat.

5. Verkehrstelematikendgerät nach einem der Ansprüche 1 bis 4, **dadurch gekennzeichnet, dass** das Subsystem zur Ein/Ausgabe eine Eingabe/Ausgabevorrichtung aufweist.

6. Verkehrstelematikendgerät nach einem der Ansprüche 1 bis 5, **dadurch gekennzeichnet, dass** jedes Subsystem mit einer Standard-Kommunikationsschnittstelle, SCI, zum direkten oder indirekten und Zugang von/zu externen Anwendungen oder Vorrichtungen ausgestattet ist.

7. Verfahren zum Betrieb eines Verkehrstelematikendgeräts wie es in den Ansprüchen 1 bis 6 definiert ist, worin die Basisfunktionen, die durch die Subsysteme zur Kommunikation, zur Ortsbestimmung, zur Zugangssteuerung, zur Eingabe/Ausgabe und durch eine Standard-Kommunikationsschnittstelle, SCI, bereit gestellt werden, dem Basissystem zugewiesenen sind, **dadurch gekennzeichnet, dass** jene Basisfunktionen für den Betrieb und/oder zur Betriebssteuerung eines oder mehrerer Subsysteme verwendet werden, in Übereinstimmung mit spezifischen Applikationen, welche durch die Benutzung der Applikationsprogrammierschnittstelle, API, implementiert sind, wobei eine Routing- und Systemsteuereinheit eine Schnittstelle zwischen den Applikationen und den Basisfunktionen bildet, während mehrere Applikationen zur gleichen Zeit unter gemeinsamer Nutzung des gleichen Subsystems ablaufen können.

8. Verfahren nach Anspruch 7, **dadurch gekennzeichnet, dass** die Standard-Kommunikationsschnittstelle, SCI, zur Verbindung zu und zur Kommunikation mit und zwischen den Subsystemen eingesetzt wird.

9. Verfahren nach einem der Ansprüche 7 oder 8, **dadurch gekennzeichnet, dass** die Verbindung zwischen den Applikationen und den Subsystemen durch eine Routing- und Systemsteuerfunktion hergestellt wird, während das Routing auf die Adressierung von Aufgaben beschränkt ist, wobei die Systemsteuerung das Überwachen von Funktionen und das Erfassen von Störungen und Fehlern übernimmt.

10. Verfahren nach einem der Ansprüche 7 bis 9, **dadurch gekennzeichnet, dass** mit dem Subsystem zur Kommunikation Verbindungen zu einem GSM Netzwerk hergestellt werden können.

11. Verfahren nach einem der Ansprüche 7 bis 10, **dadurch gekennzeichnet, dass** das Subsystem zur Ortsbestimmung seine Lokalisierungsdaten von einem GPS Empfänger erhält.

## Revendications

1. Terminal télématique de trafic, comprenant :

   un système de base avec plusieurs sous-systèmes échangeables et/ou interchangeables, comprenant au moins

   - un sous-système de communication,
   - un sous-système de localisation,
   - un sous-système de contrôle d'accès, et
   - un sous-système d'entrée/sortie,

   dans lequel chaque sous-système assure plusieurs fonctions de base ; **caractérisé par**
   une interface de programmation d'applications, API, adaptée pour permettre la mise en oeuvre d'applications spécifiques et adaptée également pour supporter les interactions de communication depuis les sous-systèmes du système de base vers les modules d'application, depuis les modules d'application vers les sous-systèmes du système de base, depuis des centres de service vers les modules d'application et depuis les modules d'application vers les centres de service par l'intermédiaire du sous-système de communication, et entre des modules d'application du même fabricant ainsi qu'entre des modules d'application de fabricants différents ; et
   un module de commande de routage et du système avec une partie de commande de routage reliant l'interface de programmation d'applications, API, aux sous-systèmes et aux fonctions de base assurées par les sous-systèmes de communication entre les applications mises en oeuvre et les fonctions de base, et une partie de commande du système pour faire fonctionner les fonctions de base.

2. Terminal télématique de trafic selon la revendication 1, **caractérisé en ce que** le sous-système de communication est relié à un réseau GSM par l'intermédiaire d'un module GSM.

3. Terminal télématique de trafic selon la revendication 1 ou la revendication 2, **caractérisé en ce que** le sous-système de localisation comprend une interface vers un module GPS.

4. Terminal télématique de trafic selon l'une quelconque des revendications 1 à 3, **caractérisé en ce que** le sous-système de contrôle d'accès comprend une interface vers un lecteur de cartes à puce.

5. Terminal télématique de trafic selon l'une quelconque des revendications 1 à 4, **caractérisé en ce que** le sous-système d'entrée/sortie comprend un dispositif d'entrée/sortie.

6. Terminal télématique de trafic selon l'une quelconque des revendications 1 à 5, **caractérisé en ce que** chaque sous-système est équipé d'une interface de communications standard, SCI, pour l'accès direct ou indirect de / à des applications ou des dispositifs externes.

7. Procédé d'exploitation d'un terminal télématique de trafic selon les revendications 1 à 6, dans lequel des fonctions de base assurées par les sous-systèmes de communication, de localisation, de contrôle d'accès, d'entrée/sortie et une interface de communications standard, SCI, sont affectées au système de base, **caractérisé en ce que** ces fonctions de base sont utilisées pour faire fonctionner et/ou pour contrôler le fonctionnement d'un ou plusieurs sous-systèmes conformément à des applications spécifiques mises en oeuvre en utilisant l'interface de programmation d'applications, API, un module de commande de routage et du système assurant l'interface entre les applications et les fonctions de base, tandis que plusieurs applications peuvent tourner en même temps en partageant les mêmes sous-systèmes.

8. Procédé selon la revendication 7, **caractérisé en ce qu'**une interface de communications standard, SCI, est utilisée pour la connexion de, et la communication avec et entre, les sous-systèmes.

9. Procédé selon l'une quelconque des revendications 7 ou 8, **caractérisé en ce que** la connexion entre les applications et les sous-systèmes est établie par une fonction de commande de routage et du système, la commande de routage étant confinée à l'adressage des tâches tandis que la commande du système assure le monitorage des fonctions et l'enregistrement des défaillances et des erreurs.

10. Procédé selon l'une quelconque des revendications 7 à 9, **caractérisé en ce que** des connexions au réseau GSM peuvent être établies avec le sous-système de communication.

11. Procédé selon l'une quelconque des revendications 7 à 10, **caractérisé en ce que** le sous-système de localisation reçoit ses données de localisation à partir d'un récepteur GPS.

Anwendung $1^2$ | n

Anwendungsentwickl
Service Betreiber

standardisierte Schnittstelle

Endgeräte-Plattform
(Software)

MoU-Konzept

Endgerät-Realisierung
(Hardware)

Hersteller

fig. 1: Object and Scope of Specification

| Dynamic Route Guidance | Floating Car Data Acquisition | Traffic Information | Emergency/ Break-down Services | Further Applications | External Applications via SCI | PC/ FAX Applications via SCI |

**API**

ROUTING + SYSTEM CONTROL

| Subsystem Communication | Subsystem Location | Subsystem Access Control | Subsystem Input/Output |

| Interface to GSM Module | Interface to GPS Module | Interface to Chipcard Reader | Interface to Input/Output-Device |

fig. 2: Functional Architecture of the Traffic Telematics Base device
API:    Application Programming Interface
SCI:    Standard Communications Interface

fig. 3: Base System with Standard Communicaton Interface (SCI)

## Routing + System Control

direct access via
Standard
Communications
Interface

GSM
Data Transfer

Communications
Service Table Access

indirect AT
Command Access

### Call Management

*Call Acception*     *SMS-Handling*     *Connection
Handling*

End-to-End
Protocol

SMS

*Bearer
Services*

Interface to GSM-Modul

*SMS*

Illustration 2.2.1-1: Functional Architecture of the communication subsystem

Illustration 2.2.1-2: Components of Communication between base terminal and center

Illustration 2.2.1-3: GSM dialogue sequence of a Bearer Services (connection orientated), initiated by the terminal application with an example sequence in the service center

EP 0 953 261 B1

Illustration 2.2.1-4: GSM dialogue sequence of Bearer Services (connection orientated), initiated by a terminal application with an example dialogue in the service center

71

| 8 | 7 | 6 | 5 | 4 | 3 | 2 | 1 | |
|---|---|---|---|---|---|---|---|---|
| 0 | 1 | 1 | 1 | 1 | 1 | 1 | 0 | Begin Flag |
| Control Field | | | | | | | | Control Field |
| Length Indicator | | | | | C/R | M | EL | Length Indicator Field |
| Address | | | | | | | | Data Field |
| Information | | | | | | | | |
| Frame Check Sequence | | | | | | | | CRC: 1st octet |
| Frame Check Sequence | | | | | | | | CRC: 2nd octet |

Illustration 2.2.1-5: Framework of the TASP4 level

| control field bits | 8 | 7 | 6 | 5 | 4 | 3 | 2 | 1 |
|---|---|---|---|---|---|---|---|---|
| I format | N(R) | | | P | N(S) | | | 0 |
| S format | N(R) | | | P/F | S | S | 0 | 1 |
| U format | U | U | U | P/F | U | U | 1 | 1 |

Illustration 2.2.1-6: Control Field

| Format | Com-mands | Res-ponses | 8 | 7 | 6 | 5 | 4 | 3 | 2 | 1 |
|---|---|---|---|---|---|---|---|---|---|---|
| Informa-tion | I | | N(R) | | | P | N(S) | | | 0 |
| Super-visory | RR | RR | N(R) | | | P/F | 0 | 0 | 0 | 1 |
| | RNR | RNR | N(R) | | | P/F | 0 | 1 | 0 | 1 |
| | REJ | REJ | N(R) | | | P/F | 1 | 0 | 0 | 1 |
| | SABM | | 0 | 0 | 1 | P | 1 | 1 | 1 | 1 |
| | | DM | 0 | 0 | 0 | F | 1 | 1 | 1 | 1 |
| Unnum-bered | UI | | 0 | 0 | 0 | P | 0 | 0 | 1 | 1 |
| | DISC | | 0 | 1 | 0 | P | 0 | 0 | 1 | 1 |
| | | UA | 0 | 1 | 1 | F | 0 | 0 | 1 | 1 |

Illustration 2.2.1-7: Coding according to the LAPB format

| 8 | 7 | 6 | 5 | 4 | 3 | 2 | 1 | |
|---|---|---|---|---|---|---|---|---|
| L | | | | | C/R | M | EL = 1 | Length indicator field |

Illustration 2.2.1-8: Length Indicator Field

| L | | C/R | M | EL = 0 | Length indicator field |

Illustration 2.2.1-9: Length indicator field for a data field between 0 and 31 octet in length

| L | | C/R | M | EL = 1 | Length indicator field 1st Octet |
| L | | | | EL = 0 | 2nd Octet |

Illustration 2.2.1-10: Enlarged length indicator field

Illustration 2.2.2-1: Functional Architekture of the Subsystems Location

Illustration 2.2.2-2: Polynomial Forward Approximation

**backward approximated positions**    X_m+nhole-1

X_m+2

X_m+1

X_m

X_m-1

...

...

**the last m valid positions**

X_1

X_0

X_m+nhole

**the first new valid position**

Illustration 2.2.2-3: Polynomial Backward Approximation

**hysteresis area**

**radius of inner area**

**hysteresis area**

**center point**

**inner area**

**N**

**aperture angle**

**preferred direction**

Illustration 2.2.2-4 Fig. 11: Waypoint Geometry in Case of a Circle

Illustration 2.2.2-5: Waypoint Geometry in Case of a Rectangle

Illustration 2.2.2-6: Example of vehicle crossing a circle:

Illustration 2.2.2-7:   Example of vehicle crossing a rectangle:

Illustration 2.2.4-1: bock switching illustration of the subsystem input/output with interpreter

Illustration 2.2.4-2: Possible realization of input/output unit

**ROUTING + SYSTEM CONTROL**

I/O Enter Data

I/O Display Information

Interface to
Input/Output-Device

Illustration 2.2.4-3: Functional architecture of the subsystem input/output

# Time sequence diagram for a GSM communication

a) a communication initiated by the application in case of a connection-oriented or connectionless communication

| application | | GSM base function |
|---|---|---|

Request to open a GSM connection:

gsm_open_req →

← gsm_open_con

Logical channel to the application is established. In case of a connection-oriented communication a connection to the service center is being established.

Sending data:

gsm_data_req →

← gsm_data_con

Data are being sent to the service center. The service center (either Telematic or SMS-Cervice Center) sends back a confirmation of the receipt of the data which is transferred to the application.

Sending new data within the current GSM connection:

gsm_data_req →

← gsm_data_con

as before

Indication:
The data of the service center are sent to the application.

← gsm_data_ind

Telematic data are sent by a service center application within the current GSM connection:

Request to close the GSM connection:

gsm_close_req →

← gsm_close_con

Logical channel is closed and in case of a connection-oriented communication the GSM connection to the service center as well

## Remark:

If the GSM connection is closed by the application before the response data are sent by the service center application, the service center may establish a new connection to send the response data (see diagram 1b or 1c)

Illustration 3.2.3-1: Time sequence diagram related to the GSM base function GSM dialog

# Time sequence diagram for a GSM communication

## b) a communication initiated by the service center in case of a connection-oriented communication

**Indication:**
A logical channel and a GSM connection is indicated to the application. The indication is confirmed with a response message.

gsm_open_ind

A GSM connection is being established by the service center.

gsm_open_res

**Indication:**
The data of the service center are sent to the application.

gsm_data_ind

Data are sent by the service center. The GSM base function confirms the receipt to the service center.

Sending response data within the current GSM connection:

gsm_data_req

gsm_data_con

Response data are sent to the telematic service center. The receipt is confirmed by the service center.

The termination of the logical channel and GSM connection is indicated.

gsm_close_ind

The logical channel and the GSM connection is closed.

**Remark:**

After sending the response data the application could request the termination of the GSM connection by a "gsm_close_req"-message. The GSM base function would then close the GSM connection and confirm it by sending a "gsm_close_con"-message.

Illustration 3.2.3-2: Time sequence diagram related to the GSM base function GSM dialog

# Time sequence diagram for a GSM communication

c) a communication initiated by the service center in case of
a connectionless communication

**application**

**GSM base function**

SMS message is sent by the service center.

gsm_open_ind

**Indication:**
The receipt of a SMS message and the opening of a logical channel are indicated to the application. The receipt of the indication is confirmed by a response message.

gsm_open_res

gsm_data_ind

Immediately after the response of the application the data of the service center are sent.

**Indication:**
The data of the service center are sent to the application

time duration "t"

The logical channnel is open for time duration "t" to receive more SMS data for the related application. If no SMS message is received, the channel is closed, which is indicated to the application.

gsm_close_ind

Illustration 3.2.3-3: Time sequence diagram related to the GSM base function GSM dialog

# Time sequence diagram for a GSM communication

## d) an error occurs while opening the GSM connection

```
┌─────────────────┐                                    ┌─────────────────┐
│   application   │                                    │   GSM base      │
│                 │                                    │   function      │
└─────────────────┘                                    └─────────────────┘
```

Request to open a          gsm_open_req
GSM connection:
                                                        GSM base function tries to
                                                        open a GSM connection
                                                        to the service center.


                                                        **Error:**
                                                        It is not possible to open
                                                        a GSM connection to
                           gsm_status_ind               the service center.
**Status:**
There is no GSM
connection to the
service center.

**Situation:**
There is no open GSM connection to the service center and no logical channel between
the GSM base function and the application. If the application still wants to open a GSM
connection to send data, it has to start again with a "gsm_open_req"-message (see
diagram 1 a).

Illustration 3.2.3-4: Time sequence diagram related to the GSM base function GSM dialog

84

# Time sequence diagram for a GSM communication

e) an error occurs or connection is cut while transferring data

application | GSM base function
---|---

**Request to open a GSM connection:**

gsm_open_req →

gsm_open_con ←

Logical channel to the application is established. In case of a connection-oriented communication a connection to the service center is being opened.

**Sending data:**

gsm_data_req →

GSM base function tries to sent data to the service center.

**Error:**
An error occurs while transferring data. Data are not completely received by the service center, but GSM connection is still open. Retrail mechanisms of TASP4 failed.

gsm_status_ind ←

**Status:**
Data are not completely sent to the service center.

At this point the application decides wether it repeats the transfer or closes the connection.

**1. Possibility:**
new trial

gsm_data_req →

gsm_data_con ←

Data are being sent to the service center. The service center sends back a confirmation of the complete receipt of the data.

**Request to close the GSM connection:**

gsm_close_req →

gsm_close_con ←

Logical channel is closed and in case of a connection-oriented communication the GSM connection to the service center as well.

**2. Possibility:**
Connection is closed.

gsm_close_req →

gsm_close_con ←

Logical channel is closed and in case of a connection-oriented communication the GSM connection to the service center as well.

Same data set could be sent later (see diagram a)

Illustration 3.2.3-5: Time sequence diagram related to the GSM base function GSM dialog

# Time sequence diagram for a GSM communication

## f) connection is cut while transferring data

**application**

**GSM base function**

Request to open a
GSM connection:

gsm_open_req →

gsm_open_con ←

Logical channel to the
application is established. In
case of a connection-oriented
communication a connection
to the service center is being
opened.

Sending data:

gsm_data_req →

GSM base function tries to
send data to the service center.

**Error:**
Connection is cut while
transferring data. Call
management retries
connection several times.
Data are not completely
received by the service
center.

gsm_status_ind ←

**Status:**
A serious error occured. Data
are not completely
sent to the service center
and GSM connection is cut.

Now the application requests
the termination of the logical
channel:

gsm_close_req →

gsm_close_con ←

Logical channel to the
application is closed.

At this point the application
decides wether it opens a new
GSM connection to repeat the
transfer e. g. using a different
GSM service or not.

Illustration 3.2.3-6: Time sequence diagram related to the GSM base function GSM dialog

# Time sequence diagram: GPS base functions "base data" and "approximation"

| application | | GPS base functions |
|---|---|---|

**Request:**
The current GPS data set is requested and the following every 5 seconds.

gps_data_start_req →

**Indication:**
the current GPS data set (valid)

← gps_data_ind

**Indication:** (5 sec later)
the current GPS data set (valid)

← gps_data_ind

**Indication:** (5 sec later)
the current GPS data set (forward approximated)

← gps_data_ind

**Indication:** (5 sec later)
the current GPS data set (forward approximated)

← gps_data_ind

**Indication:**
the current GPS data set (valid)

← gps_data_ind

**Request:**
The transfer of the backward approximated GPS data is requested.

gps_approx_data_backward_req →

**Indication:**
the backward approximated positions of the gap

← gps_approx_data_backward_ind

**Indication:**
the current GPS data set (valid)

← gps_data_ind

**Request:**
The transfer of GPS data sets is requested to be stopped.

gps_data_stop_req →

The transfer of GPS data sets is stopped.

Illustration 3.2.4-1: Time sequence diagram related to the GPS base functions GPS base data and approximation

# Time sequence diagram: GPS base function
# "waylength "

| application | | GPS base function waylength |
|---|---|---|

**Request:**
The counter is requested to
be resetted on a fixed
waylength that should be
covered (-2000m) and to
be started incrementing
(indications at -200m,
-100m and -50m)

gps_waylength_start_req →

**Action:**
The counter is resetted to
-2000m and started to
increment.

**Request:**
Current counter value is
requested to be sent.

gps_waylength_req →

gps_waylength_ind ←

**Indication:**
Current counter value
is -1234 m.

gps_waylength_ind ←

**Indication:**
Current counter value
is -199 m.

gps_waylength_ind ←

**Indication:**
Current counter value
is -95 m.

gps_waylength_ind ←

**Indication:**
Current counter value
is -48 m.

gps_waylength_ind ←

**Indication:**
Current counter value
is 4 m, the whole
waylength is covered.

The waylength counter is stopped
automatically by the base function.

Illustration 3.2.4-2: Time sequence diagram related to the GPS base function waylength

# Time sequence diagram: GPS base function "waypoint"

**application**

**GPS base function waypoint**

**Request:**
The base function is
initialized by sending the
waypoint data.

gps_waypoint_start_req

**Action:**
With the waypoint data the
waypoint calculation is started.

gps_waypoint_status_ind

**Indication:**
Status: "IN"
(Car is inside the inner area
of the waypoint.)

gps_waypoint_status_ind

**Indication:**
Status: "CENTER"
(Car has crossed the normal to
the preferred direction throught
the center. Heading is inside the
aperture cone of the preferred
direction.)

gps_waypoint_status_ind

**Indication:**
Status: "OUT"
(Car has left the hysteresis
area of the waypoint heading
outside.)

**Request:**
The waypoint calculation is
requested to be stopped

gps_waypoint_stop_req

The waypoint calculation is
stopped.

Illustration 3.2.4-3: Time sequence diagram related to the GPS base function waypoint

# Time sequence diagram for a CIM communication

| application | | CIM base function |
|---|---|---|

Request to open a chipcard connection:

cim_open_application_req →

Logical channel to the application is established. A connection to the chipcard is being opened.

← cim_open_application_con

Sending data and status:

cim_send_data_req →

Data are being sent to the CIM. After transferring data to the chipcard the response data of the chipcard is sent to the application.

← cim_send_data_res

cim_send_data_req →

Sending data within an error message:

The chipcard has been pulled out.
Status of CIM : No chipcard

← cim_status_ind

Requesting the chipcard status:

cim_status_req →

The chipcard is pulled in.
Status of CIM: Chipcard o. k.

← cim_status_ind

Sending new data

cim_send_data_req →

"Normal processing"

← cim_send_data_res

Request to close the chipcard connection:

cim_close_application_req →

Logical channel is closed.

← cim_close_application_con

Illustration 3.2.5-1: Time sequence diagram related to the Subsystem Access Control

## I/O - display information flow chart

io_request

authori-sation? — no → io_reject [no]

yes

io_unit operational? — no → io_reject [no]

yes

start timer <t_queue>

io_unit busy? — no → set display status busy

yes

priority higher? — yes → io_interruption

no

request in queue (for duration of <t_queue> max.)

timer <t_queue> expired or dropped — yes → io_reject [te/d]

no

start timer <t_dur>

display information → io_confimation

timer <t_dur> expired? — no

yes → io_acknowledge

io_finish_request

request in queue
display finished

finish_typ <a> — <c> → set display status free

drop request? — yes → clear display

no → <a>

io_finish_acknowledge

drop display

Illustration 3.2.6-1: Phase diagram related to the I/O base function display information

# display accessable, no interruption
Time-sequence diagram for information display

```
┌─────────────────┐                                  ┌─────────────────┐
│   application   │                                  │    I/O base     │
│                 │                                  │    function     │
└─────────────────┘                                  └─────────────────┘
         │        io_display_information_req                  │
         │─────────────────────────────────────────────────►│
         │                                                   status:
         │                                                   display: accessable
  status:          io_display_information_con
  display information in  ◄───────────────────────────────────│
  process                                                     │
                                                            action:
                                                            display information for time
                                                            period t_dur
                                                            status:
                                                    t_dur   display: busy
         │                                                   │
         │        io_display_information_ack                 ▼
  status:          ◄──────────────────────────────────────  status:
  display information done                                  display: accessable
```

Illustration 3.2.6-2: Time sequence diagram related to the I/O base function display information

92

# display access delayed, no interruption

Time-sequence diagram for information display

Illustration 3.2.6-3: Time sequence diagram related to the I/O base function display information

# display access delayed and rejected
Time-sequence diagram for information display

application

I/O base function

io_display_information_req

status:
display: busy

status:
display request in queue

io_display_information_con

status:
display: busy
request: into queue

t

status:
display information rejected;
t_queue exceeded

display_information_rej

when  t >= t_queue
action:
display information rejected
and deleted from queue
status:
display: busy

# display access rejected
Time-sequence diagram for information display

application

I/O base function

io_display_information_req

status:
a. display: free or busy
b. display not operational

status:
display information rejected:
a. access not allowed;
b. display not operational

io_display_information_rej

status:
a. request: not allowed for
this display
b. display not operational

Illustration 3.2.6-4: Time sequence diagram related to the I/O base function display information

# display access with interruption
## Time-sequence diagram for information display

| application (1) low priority | | I/O base function |
|---|---|---|

io_display_information_req (1) →

**status:**
display: free

io_display_information_con (1) ←

**status:**
information (1) displayed

**status:**
display: busy (1)
**action:**
display info for time period t_dur (1)

**during t_dur(1)**
new display information request (2) with a **higher priority** than the actual display information request (1)

| application (2) high priority | |
|---|---|

io_display_information_req (2) →

io_display_information_int (1) ←

**status:**
display information (1) interrupted
information (2) displayed

io_display_information_con (2) ←

**action:**
Display information (1) is interrupted and put in queue; owner application is to informed about interrupt.
display information (2) for time period t_dur (2)

t(1)

io_display_information_ack (2) ←

**status:**
display information (2) done
information (1) displayed

t_dur (2)

io_display_information_con (1) ←

**status:**
display information (2) is finished
display reaccessable for application(1)
**when** t(1) < t_queue (1)
**action:**
Display information request (1) is taken from queue and displayed for t_dur (1)
t_dur (1)

io_display_information_ack (1) ←

**status:**
display information (1) done

Illustration 3.2.6-5: Time sequence diagram related to the I/O base function display information

# attach/detach input device
Time-sequence diagram for enter data

## attach

| application | io_input_device_req → | I/O base function |
|---|---|---|

**if**
status input device = free
**action:**
attach input device to
application
status input device = busy

**status:**
input device attached

← io_input_device_ack

**else**
**action:**
reject input device request

**status:**
input device not attached

← io_input_device_rej

## detach

| application | io_input_device_req → | I/O base function |
|---|---|---|

status input device = busy:

**action:**
detach input device to
application

**status:**
input device detached

← io_input_device_ack

status input device = free

Illustration 3.2.6-6: Time sequence diagram related to the I/O base function enter data

96

# ENTER DATA
Time-sequence diagram for enter data

## attach

Illustration 3.2.6-7: Time sequence diagram related to the I/O base function enter data

Illustration 4.2-1: Standard Communications Interface (SCI)

| Cause num | Cause |
|-----------|-------|
| 1 | Unassigned (unallocated) number |
| 3 | No route to destination |
| 6 | Channel unacceptable |
| 8 | Operator determined barring |
| 16 | Normal call clearing |
| 17 | User busy |
| 18 | No user responding |
| 19 | User alerting, no answer |
| 21 | Call rejected |
| 22 | Number changed |
| 26 | Non selected user clearing |
| 27 | Destination out of order |
| 28 | Invalid number format (incomplete number) |
| 29 | Facility rejected |
| 30 | Response to STATUS ENQUIRY |
| 31 | Normal, unspecified |
| 34 | No circuit/channel available |
| 38 | Network out of order |
| 41 | Temporary failure |
| 42 | Switching equipment congestion |
| 43 | Access information discarded |
| 44 | requested circuit/channel not available |
| 47 | Resources unavailable, unspecified |
| 49 | Quality of service unavailable |
| 50 | Requested facility not subscribed |
| 55 | Incoming calls barred within the CUG |
| 57 | Bearer capability not authorized |
| 58 | Bearer capability not presently available |
| 63 | Service or option not available. unspecified |
| 65 | Bearer service not implemented |
| 68 | ACM equal to or greater than ACMmax |
| 69 | Requested facility not implemented |

Table 5.1-1. continued on next page

| 70 | Only restricted digital information bearer capability is available |
|---|---|
| 79 | Service or option not implemented. unspecified |
| 81 | Invalid transaction identifier value |
| 87 | User not member of CUG |
| 88 | Insupported destination |
| 91 | Invalid transit network selection |
| 95 | Semantically incorrect message |
| 96 | Invalid mandatory information |
| 97 | Message type non-existent or not implemented |
| 98 | Message type not supported with protocol state |
| 99 | Information element non-existent or not implemented |
| 100 | Conditional IE error |
| 101 | Message not supported with protocol state |
| 102 | Recovery on timer expiry |
| 111 | Protocol error, unspecified |
| 127 | Interworking, unspecified |

Table 5.1-1

| cuse num + 128 | cause |
|---|---|
| 128 | phone failure |
| 129 | no connection to phone |
| 130 | phone-adaptor link reserved |
| 131 | operation not allowed |
| 132 | operation not supported |
| 133 | PH-SIM PIN required |
| 138 | SIM not inserted |
| 139 | SIM PIN required |
| 140 | SIM PUK required |
| 141 | SIM failure |
| 142 | SIM busy |
| 143 | SIM wrong |
| 144 | incorrect password |
| 148 | memory full |
| 149 | invalid index |
| 150 | not found |
| 151 | memory failure |
| 152 | text string too long |
| 153 | invalid characters in text string |
| 154 | dial string too long |
| 155 | invalid characters in dial string |
| 158 | no network service |
| 159 | network timeout |
| 228 | unknown |

Table 5.1-2

| cuse num | cause |
|---|---|
| 500 | Connection temporarily not available |
| 501 | Connection available |
| 600 | base function doesn't answer |
| 601 | base function not operational |
| 602 | base function not accessible (no access right for the requesting application) |
| 610 | base function busy with priority „0" |
| 611 | base function busy with priority „1" |
| 612 | base function busy with priority „2" |
| 613 | base function busy with priority „3" |
| 614 | base function busy with priority „4" |
| 630 | superframe: source unknown |
| 631 | superframe: destination unknown |
| 632 | superframe: transaction number unknown or out of range |
| 633 | superframe: priority unknown or out of range |
| 635 | superframe: source missing |
| 636 | superframe: destination missing |
| 637 | superframe: transaction number missing |
| 638 | superframe: priority missing |
| 640 | base function: message id unknown |
| 641 | base function: message data element missing |
| 642 | base function: message data element wrong or out or range |
| 643 | base function: wrong dialing number (fix dialing) |
| 700 | GSM service not available |
| 701 | call bearing (Rufnummer gesperrt) |
| 702 | keine Berechtigung für den jeweiligen Datendienst/Fax |
| 703 | Netz: gassenbesetzt (Überlast) |

Table 5.1-3

EP 0 953 261 B1

| Number | AT-Command | AT-Syntax | AT-Commands in GSM Module: | | | AT-Commands not allowed at the API |
|---|---|---|---|---|---|---|
| | | | mandatory | makes sense | optional | |
| 5.1 | Request manufactor identification | +CGMI | x | | | |
| 5.2 | Request model identification | +CGMM | x | | | |
| 5.3 | Request revision identification | +CGMR | x | | | |
| 5.4 | Request product s. n. identification | +CGSN | x | | | |
| 5.5 | Select TE character set | +CSCS | | | x | |
| 5.6 | V.25ter generic TA control commands | | | | x | |
| 5.7 | PCCA STD-101 select wireless network | +WS46 | | | x | |
| 6.1 | Select type of address | +CSTA | x | | | |
| 6.2 | V.25ter dial command | | | | x | |
| 6.3 | Direct dialing from phonebooks | | | | x | |
| 6.4 | Call mode | +CMOD | x | | | |
| 6.5 | Hangup call | +CHUP | x | | | |
| 6.6 | Alternating mode call control mode | | x | | | |
| 6.7 | Select bearer service type | +CBST | x | | | |
| 6.8 | Radio link protokol | +CRLP | x | | | x |
| 6.9 | Service reporting control | +CR | x | | | x |
| 6.10 | Extendet error report | +CEER | | | x | |
| 6.11 | Cellular result codes | +CRC | x | | | |
| 6.12 | V.25ter call control Commands | | | | x | |
| 6.13 | V.25ter data compression commands | | | | x | |
| 7.1 | Subcriber number | +CNUM | | | x | |
| 7.2 | Network registration | +CREG | x | | | |
| 7.3 | Operator selection | +COPS | x | | | |
| 7.4 | Facility look | +CLCK | | | x | |
| 7.5 | Change password | +CPWD | | | x | |
| 7.6 | Calling line identification presentation | +CLIP | x | | | x |
| 7.7 | Calling line identification restriction | +CLIR | | | x | |
| 7.8 | Connected line identification presentation | +COLP | | | x | |
| 7.9 | Closed user group | +CCUG | | | x | |
| 7.10 | Call forwarding number and conditions | +CCFC | | | x | |
| 7.11 | Call waiting | +CCWA | | | x | |
| 7.12 | Call hold | +CHLD | | | x | |
| 7.13 | Call transfer | +CTFR | | | x | |
| 7.14 | Unsupported GSM supplem. services | | | | | x |

Table 5.2-1

| Number | AT-Command | AT-Syntax | AT-Commands in GSM Module: | | | AT-Commands not allowed at the API |
|---|---|---|---|---|---|---|
| | | | mandatory | makes sense | optional | |
| 8.1 | Phone activity status | +CPAS | X | | | X |
| 8.2 | Set phone functionality | +CFUN | | | X | |
| 8.3 | Enter PIN | +CPIN | X | | | |
| 8.4 | Battery charge | +CBC | | | X | |
| 8.5 | Signal quality | +CSQ | X | | | |
| 8.6 | Mobile Equipment contol mode | +CMEC | X | | | (In case of no GSM MMI) |
| 8.7 | Keypad control | +CKPD | | | X | |
| 8.8 | Display control | +CDIS | X | | | |
| 8.9 | Indicator control | +CIND | | | X | |
| 8.10 | Mobile Equipment event reporting | +CMER | X | | | |
| 8.11 | Select phonebook memory storage | +CPBS | | X | | |
| 8.12 | Read phonebook entries | +CPBR | | X | | |
| 8.13 | Find phonebook entries | +CPBF | | | X | |
| 8.14 | Write phonebook entry | +CPBW | | X | | |
| 8.15 | Clock | +CCLK | | | X | |
| 8.16 | Alarm | +CALA | | | X | |
| 8.17 | Generic SIM access | +CSIM | | X | | |
| | | | | | | |
| 9.1 | Report Mobile Equipment error | +CMEE | X | | | |
| 9.2 | Report Mobile Equipment error result code | +CMEerror | X | | | |

Table 5.2-1, continued